(19) Europäisches Patentamt
European Patent Office
Office européen des brevets

(11) Veröffentlichungsnummer: **0 366 985 B1**

# (12) EUROPÄISCHE PATENTSCHRIFT

(45) Veröffentlichungstag der Patentschrift: **06.04.94**

(51) Int. Cl.⁵: **C09K 19/42**, G02F 1/137, C09K 19/30, G02F 1/133

(21) Anmeldenummer: **89118933.4**

(22) Anmeldetag: **12.10.89**

## (54) Supertwist-Flüssigkristallanzeige.

(30) Priorität: **20.10.88 DE 3835804**

(43) Veröffentlichungstag der Anmeldung:
**09.05.90 Patentblatt 90/19**

(45) Bekanntmachung des Hinweises auf die Patenterteilung:
**06.04.94 Patentblatt 94/14**

(84) Benannte Vertragsstaaten:
**ES**

(56) Entgegenhaltungen:
**EP-A- 0 260 450**
**EP-A- 0 261 614**
**EP-A- 0 315 050**
**EP-A- 0 332 005**
**WO-A-89/08692**

(73) Patentinhaber: **MERCK PATENT GmbH**
**Postfach,**
**Frankfurter Strasse 250**
**D-64271 Darmstadt(DE)**

(72) Erfinder: **Weber, Georg**
**Wilhelm-Leuschner-Strasse 38**
**D-6106 Erzhausen(DE)**
Erfinder: **Plach, Herbert, Dr.**
**Wingertsberg 5**
**D-6100 Darmstadt(DE)**
Erfinder: **Oyama, Takamasa**
**Komachi corp. 207**
**2-1-3 Fukami-nishi**
**Kanagawa(JP)**
Erfinder: **Yoshitake, Hiroki**
**4-11-1 Miyanasato**
**Atsugi city**
**Kanagawa Prefecture, 234(JP)**
Erfinder: **Scheuble, Bernhard, Dr.**
**Bluff 100**
**100-1, Yamate-cho**
**Naka-ku**
**Yokohama-shi Kanagawa 231(JP)**
Erfinder: **Hittich, Reinhard, Dr.**
**Am Kirchberg 11**
**D-6101 Modautal 1(DE)**
Erfinder: **Kurmeier, Hans-Adolf, Dr.**
**Hinter der Schule 3a**
**D-6104 Seeheim-Jugenheim(DE)**
Erfinder: **Poetsch, Eike, Dr.**
**Am Buchwald 4**
**D-6109 Mühltal 6(DE)**
Erfinder: **Stahl, Klaus-Peter, Dr.**
**Kurt-Schuhmacher-Strasse 50**
**D-6100 Darmstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Supertwist-Flüssigkristallanzeigen (SFA) mit sehr kurzen Schaltzeiten und guten Steilheiten und Winkelabhängigkeiten sowie die darin verwendeten neuen nematischen Flüssigkristallmischungen.

SFA gemäß des Oberbegriffs sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff SFA umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236), DST-LCD's (EP OS 0 246 842) oder BW-STN-LCD's (K. Kawasaki et al., SID 87 Digest 391 (20.6)).

Derartige SFA Zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind SFA mit sehr kurzen Schaltzeiten insbesondere auch bei tieferen Temperaturen. Zur Erzielung von kurzen Schaltzeiten wurden bisher insbesondere die Viskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Aus EP-A-261 614 sind Supertwist-Flüssigkristallanzeigezellen bekannt, die eine besonders steile Transmissionskennlinie aufweisen und hoch multiplex ierbar sind, was unter anderem auf die Verwendung einer Komponente C, bestehend aus einer oder mehreren Verbindungen mit einer dielektrischen Anisotropie von unter -1.5, zurückzufuhren ist. Die erfindungsgemäßen Flüssigkristallmischungen sind frei von Komponenten mit einer dielektrischen Anisotropie von unter -1.5 und zeichnen sich insbesondere durch besonders kurze Schaltzeiten aus. Es besteht somit immer noch ein großer Bedarf nach SFA mit sehr kurzen Schaltzeiten bei gleichzeitig großem Arbeitstemperaturbereich, hoher Kennliniensteilheit, guter Winkelabhängigkeit des Kontrastes und niedriger Schwellenspannung.

Der Erfindung liegt die Aufgabe zugrunde, SFA bereitzustellen, die die oben angegebenen Nachteile nicht oder nur in geringerem Maße und gleichzeitig sehr kurze Schaltzeiten aufweisen.

Es wurde nun gefunden, daß diese Aufgabe gelöst werden kann, wenn man nematische Flüssigkristallmischungen verwendet, die folgende Komponenten enthalten:

a) mindestens eine Komponente, ausgewählt aus der Gruppe A, bestehend aus Verbindungen der Formeln AIII bis AVI:

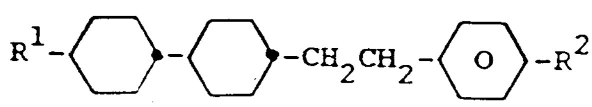

AIII

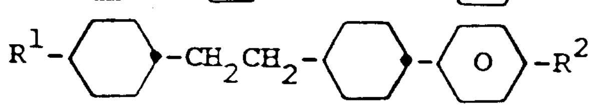

AIV

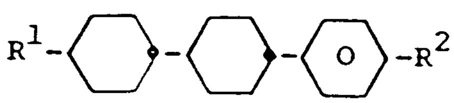

AV

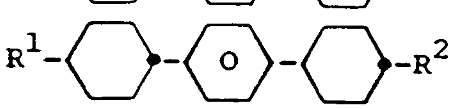

AVI

worin $R^1$ und $R^2$ jeweils unabhängig voneinander jeweils R bedeuten und

R Alkyl mit 1-12 C-Atomen ist, worin auch eine oder Zwei nicht benachbarte $CH_2$-Gruppen durch -O-, -CH=CH-, -CO-, -O-CO- oder -CO-O- ersetzt sein können,

b) mindesten eine Komponente, ausgewählt aus der Gruppe B1, bestehend aus den Verbindungen der Formeln BI bis BIV:

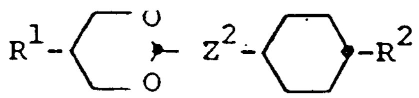
BI

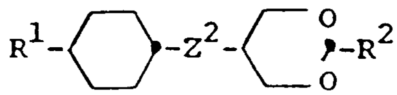
BII

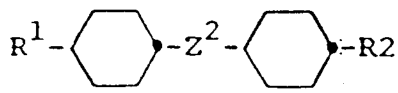
BIII

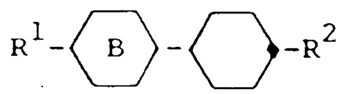
BIV

worin $R^1$ und $R^2$ jeweils unabhängig voneinander die für R angegebene Bedeutung haben, $Z^2$ $-CH_2CH_2-$, -CO-O-, -O-CO- oder eine Einfachbindung, und

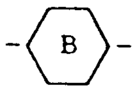 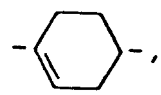, 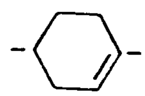 oder 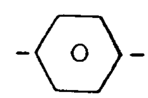

bedeutet,
und/oder mindestens eine Komponente, ausgewählt aus der Gruppe B2, bestehend aus den Verbindungen der Formeln BV bis BVII:

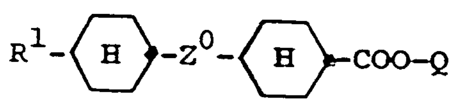
BV

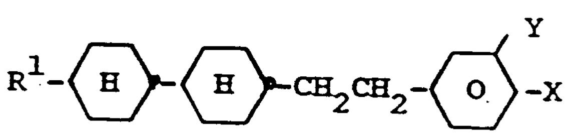
BVI

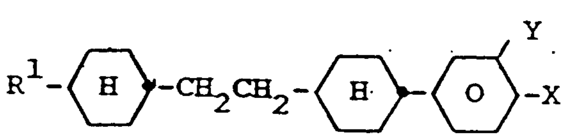
BVII

worin $R^1$ die für R angegebene Bedeutung hat,
$Z^0$ $-CH_2CH_2-$ oder eine Einfachbindung ist und
Q

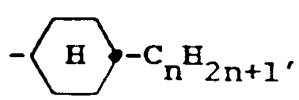, 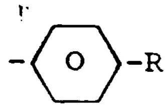 oder 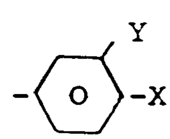

bedeutet,

wobei n 1 bis 9 ist, X bedeutet CN oder F und Y ist H oder F,
und/oder mindestens eine Komponente, ausgewählt aus der Gruppe B3, bestehend aus den Verbindungen der Formeln BVIII und BIX:

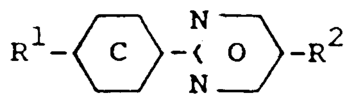

BVIII

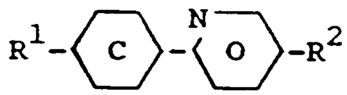

BIX

worin $R^1$ und $R^2$ jeweils unabhängig voneinander die für R angegebene Bedeutung haben, und

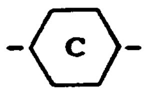 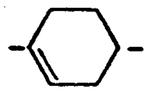, 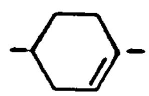, 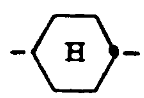

oder 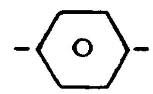

bedeutet,
c) 10-80 Gew.% einer flüssigkristallinen Komponente C, bestehend aus einer oder mehreren Verbindungen mit einer dielektrischen Anisotropie von über +1,5, und
e) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und
daß die nematische Flüssigkristallmischung einen nematischen Phasenbereich von mindestens 60 °C, eine Viskosität von nicht mehr als 30 mPa.s ein dielektrische Verhältnis $\Delta_{\epsilon/\epsilon\perp} \geqq 2$ (wobei $\Delta_\epsilon$ die dielektrische Anisotropie und $\epsilon_\perp$ die Dielektrizitätskonstante in Richtung der kurzen Achse der Flüssigkristallmoleküle bedeutet)

und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung ist somit ein SFA mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung

  a) mindestens eine Komponente, ausgewählt aus der Gruppe A, bestehend aus Verbindungen der Formeln AIII bis AVI:

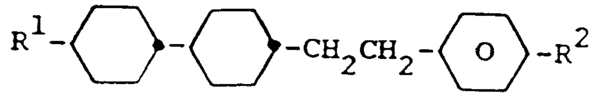
AIII

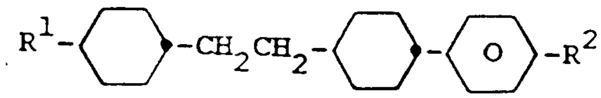
AIV

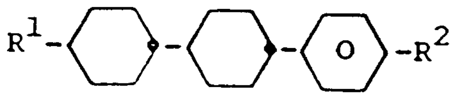
AV

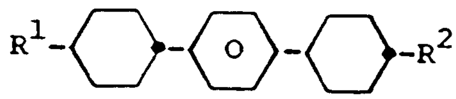
AVI

worin $R^1$ und $R^2$ jeweils unabhängig voneinander jeweils R bedeuten und

R Alkyl mit 1-12 C-Atomen ist, worin auch eine oder zwei nicht benachbarte $CH_2$-Gruppen durch -O-, -CH=CH-, -CO-, -O-CO- oder -CO-O- ersetzt sein können,

b) mindestens eine Komponente, ausgewählt aus der Gruppe B1, bestehend aus den Verbindungen der Formeln BI bis BIV:

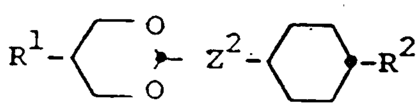
BI

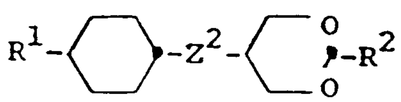
BII

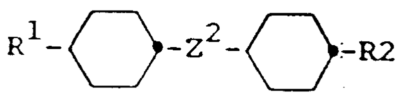
BIII

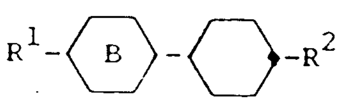
BIV

worin $R^1$ und $R^2$ jeweils unabhängig voneinander die für R angegebene Bedeutung haben, $Z^2$ $-CH_2CH_2-$, -CO-O-, -O-CO- oder eine Einfachbindung, und

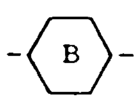 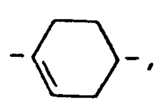 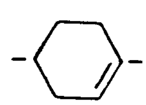 oder 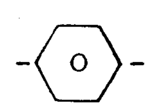

bedeutet,

und/oder mindestens eine Komponente, ausgewählt aus der Gruppe B2, bestehend aus den Verbindungen der Formeln BV bis BVII:

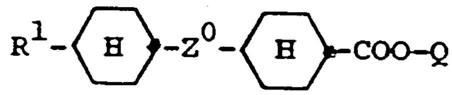 BV

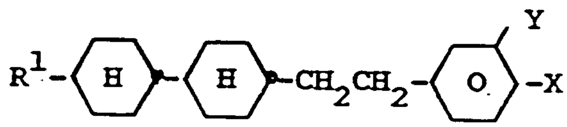 BVI

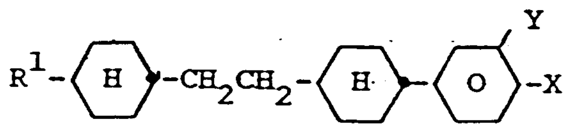 BVII

worin $R^1$ die für R angegebene Bedeutung hat,

$Z^0$ $-CH_2CH_2-$ oder eine Einfachbindung ist und

Q

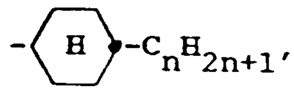, 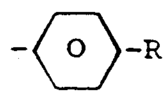 oder 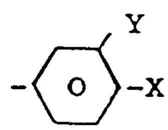

bedeutet,

wobei n 1 bis 9 ist, X bedeutet CN oder F und Y ist H oder F,

und/oder mindestens eine Komponente, ausgewählt aus der Gruppe B3, bestehend aus den Verbindungen der Formeln BVIII und BIX:

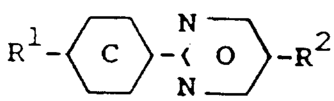 BVIII

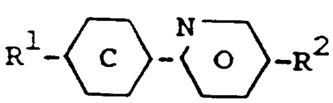 BIX

worin $R^1$ und $R^2$ jeweils unabhängig voneinander die für R angegebene Bedeutung haben, und

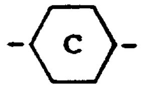 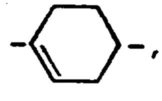, 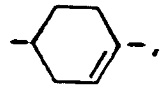, 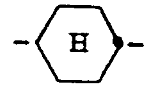

oder 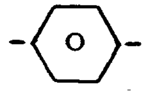

bedeutet,

c) 10-80 Gew.% einer flüssigkristallinen Komponente C, bestehend aus einer oder mehreren Verbindungen mit einer dielektrischen Anisotropie von über +1,5, und

e) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und

daß die nematische Flüssigkristallmischung einen nematischen Phasenbereich von mindestens 60 °C, eine Viskosität von nicht mehr als 30 mPa.s ein dielektrisches Verhältnis $\Delta_{\varepsilon/\varepsilon_{\perp}} \geq 2$

(wobei $\Delta_\epsilon$ die dielektrische Anisotropie und $\epsilon_\perp$ die Dielektrizitätskonstante in Richtung der kurzen Achse der Flüssigkristallmoleküle bedeutet)

und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind.

Gegenstand der Erfindung sind auch entsprechende Flüssigkristallmischungen zur Verwendung in SFA.

Die einzelnen Verbindungen der Formeln AIII bis AVI, BI bis BIV und CI bis CIII oder auch andere Verbindungen, die in den erfindungsgemäßen SFA verwendet werden können, sind entweder bekannt, oder sie können analog zu den bekannten Verbindungen hergestellt werden.

Bevorzugte erfindungsgemäß verwendbare Flüssigkristallmischungen enthalten eine oder mehrere Verbindungen aus der Gruppe A in einem Anteil von 4 % bis 40 %, vorzugsweise 10 % bis 32 %. Verbindungen der Formeln AIII sind bevorzugt. In einer besonders bevorzugten Ausführungsform enthalten die Mischungen gleichzeitig (a) Verbindungen der Formel AV und/oder AVI und (b) Verbindungen der Formel AIII und/oder AIV. $R^1$ und $R^2$ bedeuten vorzugsweise jeweils unabhängig voneinander n-Alkyl mit 1 bis 7 C-Atomen oder (trans)-n-Alkenyl mit 3 bis 7 C-Atomen.

Der Anteil der Komponente(n) aus Gruppe B1 beträgt vorzugsweise 5 % bis 45 %, insbesondere bevorzugt ca. 10 % bis 40 %. Komponenten der Formeln BIII und BIV sind bevorzugt. Besonders bevorzugte Verbindungen der Formel BIII sind diejenigen der folgenden Teilformeln:

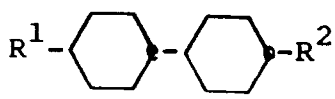

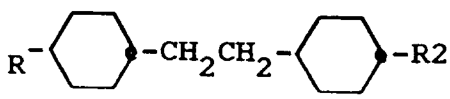

worin

- $R^1$ $CH_3$-$(CH_2)_n$-O-, $CH_3$-$(CH_2)_t$-, trans-H-$(CH_2)_r$-CH=CH-$(CH_2CH_2)_s$-$CH_2O$- oder trans-H-$(CH_2)_r$)-CH=CH-$(CH_2CH_2)_s$-,
- $R^2$ $CH_3$-$(CH_2)_t$-
- n 1, 2, 3 oder 4
- r 0, 1, 2 oder 3
- s 0 oder 1, und
- t 1, 2, 3 oder 4 ist.

Ferner bevorzugt sind diejenigen der Teilformel

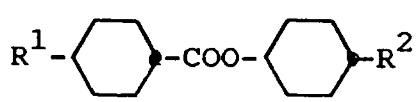

worin $R^1$ und $R^2$ die oben angegebene Bedeutung haben.

Der Anteil der Verbindungen der Formel BIII der oben angegebenen Teilformeln ist vorzugsweise ca. 5 % bis 45 %, insbesondere bevorzugt ca. 10 % bis 35 %. Besonders bevorzugte Verbindungen der Formel BIV sind diejenigen der folgenden Teilformel:

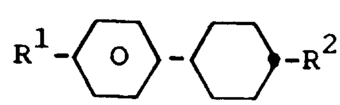

worin

- $R^1$ $CH_3$-$(CH_2)_n$-O- oder trans-H-$(CH_2)_r$-CH=CH-$(CH_2CH_2)_s$-$CH_2O$- und $R^2$ $CH_3$-$(CH_2)_t$- ist, wobei
- n 1, 2, 3 oder 4,
- r 0, 1, 2 oder 3,

s 0 oder 1, und

t 1, 2, 3 oder 4 ist.

Der Anteil dieser Verbindungen, bzw. der Verbindungen der Formel BIV, ist vorzugsweise ca. 5 % bis 40 %, insbesondere bevorzugt ca. 10 % bis 35 %.

Vorzugsweise enthalten die Mischungen Verbindungen der Formel III, insbesondere solche der Teilformel

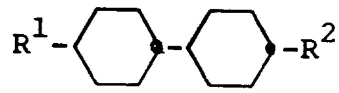

In einer besonders bevorzugten Ausführungsform enthalten die Mischungen gleichzeitig Verbindungen der Formeln BIII und BIV, wobei der Gesamtanteil für Komponenten der Gruppe B1 gewahrt bleibt.

Falls Verbindungen der Formeln BI und/oder BIII vorhanden sind, bedeuten $R^1$ und $R^2$ vorzugsweise jeweils unabhängig voneinander n-Alkyl mit 1 bis 7 C-Atomen oder (trans)-n-Alkenyl mit 3 bis 7 C-Atomen. $Z^2$ ist vorzugsweise eine Einfachbindung. BI ist besonders bevorzugt.

Ferner bevorzugt sind erfindungsgemäße Mischungen, die einer oder mehrere Verbindungen der Formel BIV enthalten, worin

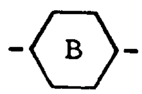 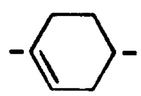 oder 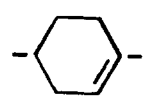

bedeutet und $R^1$ und $R^2$ eine der oben angegebenen bevorzugten Bedeutungen haben, insbesondere bevorzugt n-Alkyl mit 1 bis 7 C-Atomen bedeuten.

In jedem Fall bleibt der Gesamtanteil für Komponenten der Gruppe B1 gewahrt.

Der Anteil der Verbindungen der Gruppe B2 beträgt vorzugsweise ca. 5 % bis 45 %, insbesondere bevorzugt 5 % bis 20 %. Der Anteil (bevorzugte Bereiche) für BV bis BVII ist wie folgt:

BV ca. 5 % bis 30 %, vorzugsweise ca. 5 % bis 15 %

Summe BVI und BVII: ca. 5 % bis 25 %, vorzugsweise ca. 10 % bis 20 %.

Bevorzugte Verbindungen der Gruppe B2 sind im folgenden angegeben:

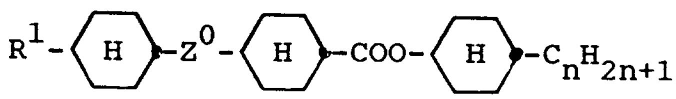 BV1

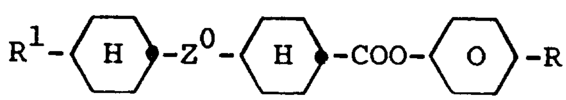 BV2

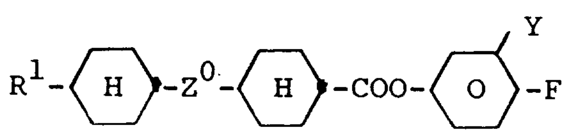 BV3

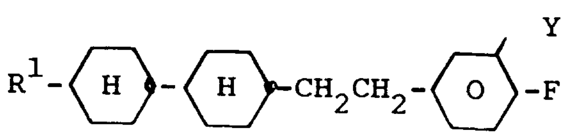 BVI1

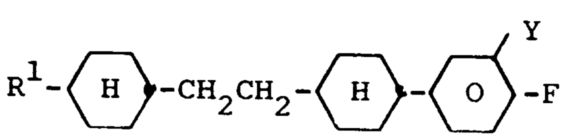 BVII1

$R^1$ ist vorzugsweise n-Alkyl mit 1 bis 7 C-Atomen oder (Trans)-n-Alkenyl mit 3 bis 7 C-Atomen. $Z^0$ ist vorzugsweise eine Einfachbindung. R hat vorzugsweise die oben für $R^1$ angegebene bevorzugte Bedeutung oder bedeutet Fluor. Y ist vorzugsweise Fluor.

Vorzugsweise enthalten die erfindungsgemäßen Mischungen eine oder mehrere Verbindungen ausgewählt aus der Gruppe bestehend aus BV3, BVI1 und BVII1 in einem Gesamtanteil von ca. 5 bis 35 %.

In einer besonders bevorzugten Ausführungsform enthalten die erfindungsgemäßen Mischungen neben BV3, BVI1, BVII1 und BV2 (R = F) weitere terminal fluorierte Verbindungen zum Beispiel ausgewählt aus der Gruppe bestehend aus:

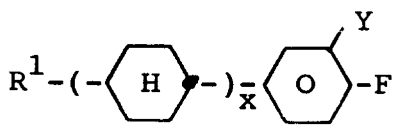

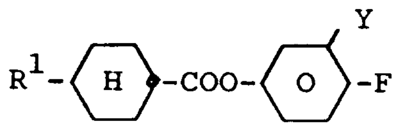

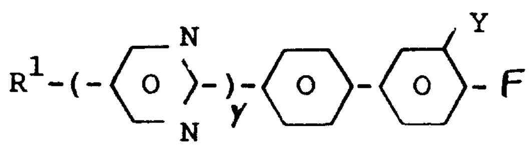

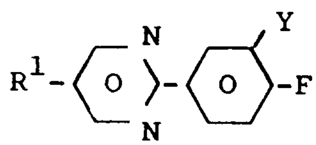

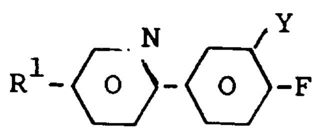

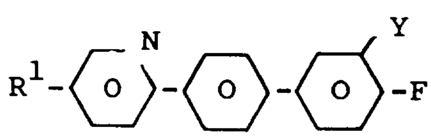

worin $R^1$ vorzugsweise n-Alkyl mit 1 bis 7 C-Atomen oder (trans)-n-Alkenyl mit 3 bis 7 C-Atomen, x 1 oder 2,
y 0 oder 1 und Y H oder F bedeutet.

Der Gesamtanteil aller terminal fluorierter Verbindungen beträgt Vorzugsweise ca. 5 % bis 65 %, insbesondere ca. 15 % bis 40 %..

Der Anteil der Verbindungen aus Gruppe B3 beträgt vorzugsweise ca. 5 % bis 30 %, insbesondere bevorzugt ca. 10 % bis 20 %. $R^1$ ist vorzugsweise n-Alkyl oder n-Alkoxy mit jeweils 1 bis 9 C-Atomen. $R^2$ ist vorzugsweise n-Alkyl mit 1 bis 9 C-Atomen. Es können jedoch auch analoge Verbindungen mit Alkenyl- bzw. Alkenyloxy-Gruppen eingesetzt werden. Verbindungen der Formel BVIII sind bevorzugt.

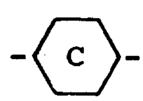

ist vorzugsweise 1,4-Phenylen.

Die erfindungsgemäßen Mischungen enthalten Verbindungen aus mindestens einer der Gruppen B1, B2 und B3. Vorzugsweise enthalten sie eine oder mehrere Verbindungen aus Gruppe B1 und eine oder mehrere Verbindungen aus Gruppe B2 und/oder B3.

Der Anteil der Verbindungen der Komponente C ist vorzugsweise ca. 10 % bis 80 %, insbesondere ca. 20 % bis 70 %. Der Fachmann kann zur Einstellung der gewünschten Schwellen spannung leicht diesen Anteil einstellen, wobei prinzipiell alle üblichen Flüssigkristallverbindungen mit $\Delta\epsilon > +1{,}5$ verwendet werden können. Falls überwiegend weniger stark positive terminal fluorierte Verbindungen (siehe oben) verwendet werden, bewegt sich der Gesamtanteil mehr im oberen Bereich (ca. 35 % bis 80 %), während bei Verwendung von terminal cyansubstituierten Verbindungen der Anteil niedriger sein kann (ca. 10 % bis 35 %). Besonders bevorzugte Verbindungen sind neben den oben angegebenen terminal fluorierten Verbindungen die hier folgenden genannten bevorzugten Cyanverbindungen:

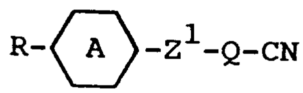 CI

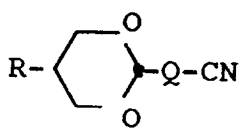 CII

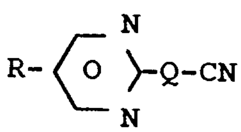 CIII

worin

R die in Anspruch 1 angegebene Bedeutung hat,

Q

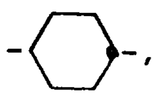, 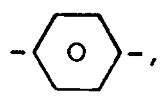, 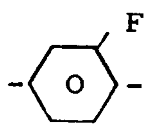 oder 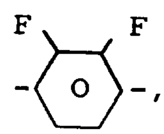,

$Z^1$

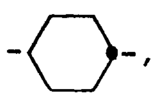, 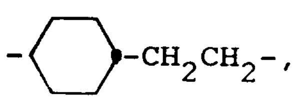,

eine Einfachbindung,

$-CH_2CH_2-$, -CO-O- oder -O-CO- und

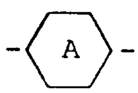 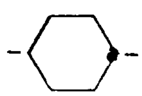 oder 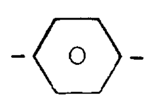

bedeutet.

Einige besonders bevorzugte kleinere Gruppen sind im folgenden angegeben:

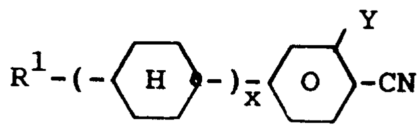

C1

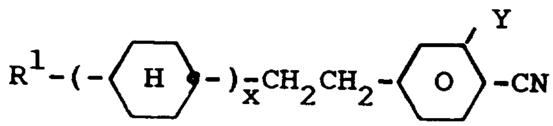

C2

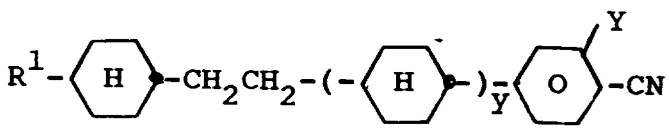

C3

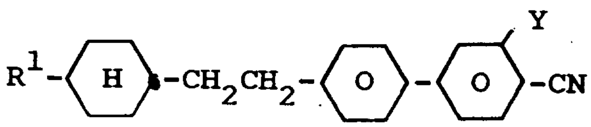

C4

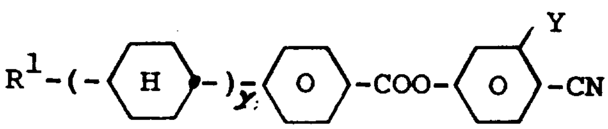

C5

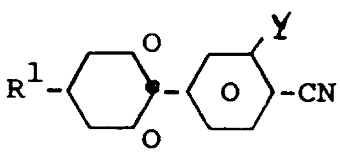

C6

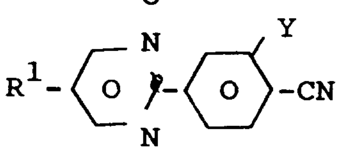

C7

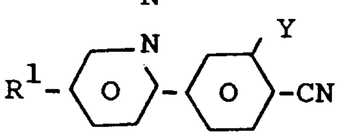

C8

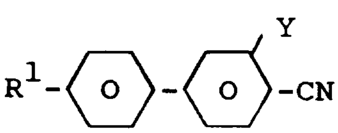

C9

$R^1$ bedeutet vorzugsweise n-Alkyl mit 1 bis 7 C-Atomen, n-Oxaalkyl mit 3 bis 7 C-Atomen (z.B. n-Alkoxymethyl) oder n-Alkenyl mit 3-7 C-Atomen. Y ist H oder Fluor; x ist 1 oder 2; y ist 0 oder 1.

Ferner bevorzugt sind Isothiocyanate, z.B. der Formel

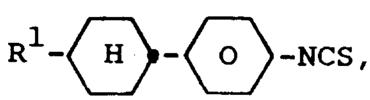

worin $R^1$ n-Alkyl mit 1 bis 7 C-Atomen oder n-Alkenyl mit 3 bis 7 C-Atomen bedeutet.

In einer besonders bevorzugten Ausführungsform enthalten die Mischungen ca. 5 % bis 35 %, insbesondere bevorzugt ca. 10 % bis 20 % an flüssigkristallinen Tolan-Verbindungen. Hierdurch kann bei geringeren Schichtdicken (ca. 5-6 μm) gearbeitet werden, wodurch die Schaltzeiten deutlich kürzer werden. Besonders bevorzugte Tolane sind im folgenden angegeben:

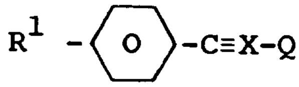

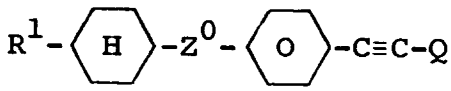

$R^1$ ist vorzugsweise n-Alkyl mit 1 bis 7 C-Atomen,

$Z^0$ ist $-CH_2CH_2-$ oder eine Einfachbindung,

Q ist

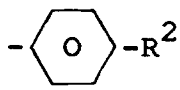, 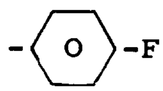 oder 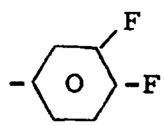,

wobei

$R^2$ n-Alkyl oder n-Alkoxy mit jeweils 1 bis 7 C-Atomen oder n-Alkenyl oder n-Alkenyloxy mit jeweils 3 bis 7 C-Atomen bedeutet.

In weiteren besonders bevorzugten Ausführungsformen enthalten die Mischungen

- 30-60 Gew.% Komponente C, 20-70 Gew.% Verbindungen aus den Gruppen A und B und eine sich zu 100 Gew.% addierende Menge der Komponente E,
- mindestens zwei Verbindungen der Formel AIII oder AV,
- Verbindungen der Formel AIII und AV,
- eine Komponente C, die eine oder mehrere Verbindungen mit einer 4-Fluorphenyl-Gruppe oder einer 3,4-Difluorphenyl-Gruppe enthält,

- mindestens eine Verbindung aus folgender Gruppe:

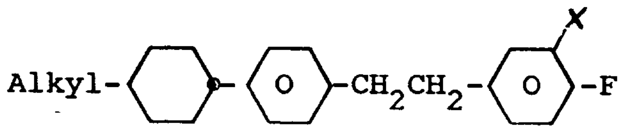

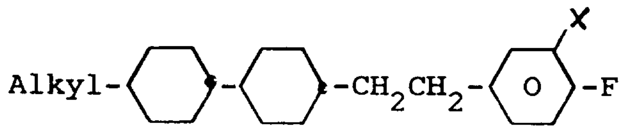

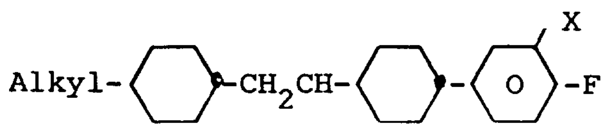

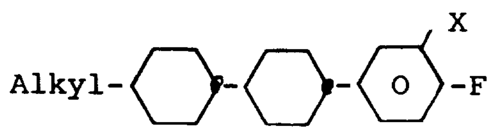

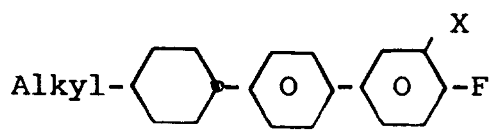

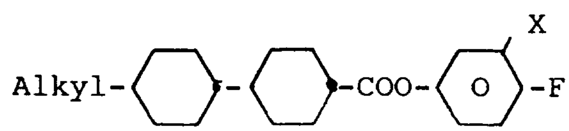

worin Alkyl eine geradkettige Alkylgruppe mit 2-7 C-Atomen und X H oder F ist,

- eine oder mehrere Verbindungen, worin R eine trans-Alkenylgruppe oder eine trans-Alkenyloxygruppe ist,
- eine oder mehrere Verbindungen ausgewählt aus der folgenden Gruppe

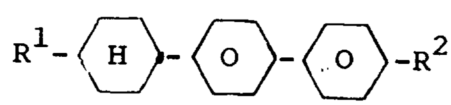

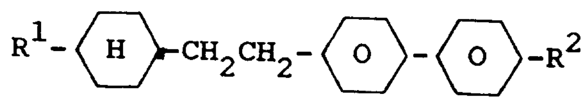

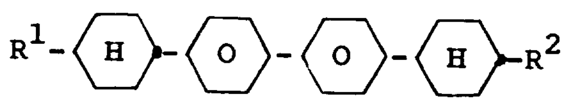

worin $R^1$ und $R^2$ die bei Komponente A angegebenen bevorzugten Bedeutungen haben und eine der beiden 1,4-Phenylengruppen auch durch Fluor substituiert sein kann; der Anteil dieser Verbindungen beträgt 0 % bis 25 %, vorzugsweise ca. 5 % bis 15 %.

Für die Komponente E stehen dem Fachmann eine Vielzahl, zum Teil kommerziell erhältlicher chiraler Dotierstoffe zur Verfügung. Deren Wahl ist an sich nicht kritisch.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigeelemente

üblichen Bauweise. Dabei ist der Begriff der üblichen Bauweise hier weit gefaßt und umfaßt auch alle literaturbekannten Abwandlungen und Modifikationen der Supertwistzelle, insbesondere auch Matrix-Anzeigeelemente sowie die zusätzliche Magnete enthaltenden Anzeigeelemente nach der DE-OS 2 748 738. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigeelemente zu den bisher üblichen auf der Basis der verdrillten nematischen Zelle besteht jedoch in der Wahl der Flüssigkristallkomponenten der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

Die erfindungsgemäßen Flüssigkristallmischungen können neben den hier genannten Komponenten durchaus noch weitere, übliche Komponenten enthalten. Der Fachmann kann in Routineversuchen feststellen, welche weiteren Komponente und in welcher Menge diese eingesetzt werden können, ohne die erfindungsgemäßen Vorteile zunichte zu machen. Vorzugsweise bestehen die Mischungen überwiegend aus den genannten Komponenten (zu mehr als 60%) und insbesondere im wesentlichen aus diesen Komponenten (zu mehr als 80 %, besonders bevorzugt zu 100 %).

Die folgenden Beispiele sollen die Erfindung erläutern, ohne sie zu begrenzen.

Es bedeutet:

| | |
|---|---|
| S-N | Phasenübergangs-Temperatur smektisch-nematisch, |
| Klp. | Klärpunkt, |
| Visk. | Viskosität (m Pa.s), |
| $T_{on}$ | Zeit vom Einschalten bis zur Erreichung von 90 % des maximalen Kontrastes |
| $T_{off}$ | Zeit vom Ausschalten bis zur Erreichung von. 10 % des maximalen Kontrastes |

Das SFA wird im Multiplexbetrieb angesteuert (Multiplexverhältnis 1:100, Bias 1:11, Betriebsspannung 18,5 Volt).

Vor-und nachstehend sind alle Temperaturen in °C angegeben. Die Prozentzahlen sind Gewichtsprozente. Die Werte für die Schaltzeiten und Viskositäten beziehen sich auf 20 °C.

Beispiel 1

Ein SFA vom Typ OMI mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 0,5 |

enthaltend eine Flüssigkristallmischung mit folgenden Parametern:

| | |
|---|---|
| Klärpunkt | 90 ° |
| Δn | 0,1023 |
| Viskosität | 19 mPa.s |
| Δε | +7,4 |

und bestehend aus
14,7 % p-trans-4-Propylcyclohexyl-benzonitril,
5 % p-trans-4-Ethylcyclohexyl-benzonitril,
10,8 % p-trans-4-Butylcyclohexyl-benzonitril,
6 % p-trans-4-Pentylcyclohexyl-benzonitril,
5 % trans-1-p-Methoxyphenyl-4-propylcyclohexan,
9,8 % trans,trans-4-Methoxy-4'-propylcyclohexyl-cyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan,
8 % 1-(trans-4-(trans-4-Propylcyclohexyl)-cyclohexyl]-2-(p-cyanphenyl)-ethan und
0,7 % optisch aktives p-(p-n-Hexylbenzoyloxy)-benzoesäure-2-octylester
zeigt eine Schaltzeit von $T_{on}$ 73 msec und $T_{off}$ 90 msec.

Beispiel 2

Ein SFA vom Typ STN mit folgenden Parametern:

| | |
|---|---|
| Verdrillungswinkel | 220 ° |
| Anstellwinkel | 1 ° |
| d/p | 0,5 |
| d.Δn | 0,85 |

enthaltend eine Flüssigkristallmischung mit folgenden Parametern:

| | |
|---|---|
| Klärpunkt: | 80 ° |
| Δn | 0,1765 |
| Viskosität | 19 mPa.s |

und bestehend aus einer Basismischung enthaltend
21 % p-trans-4-Propylcyclohexylbenzonitril,
5 % trans-1-p-Methoxyphenyl-4-propylcyclohexan,
6 % 2-p-Ethylphenyl-5-propylpyrimidin,
6 % 2-p-Propylphenyl-5-propylpyrimidin,
6 % 2-p-Propylphenyl-5-pentylpyrimidin,
4 % 2-p-Ethylphenyl-5-heptylpyrimidin
4 % 1-[trans-4-(trans-4-Propylcyclohexyl)-cyclohexy]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
5 % 1-[trans-4-(trans-4-Propylcyclohexyl)-cycloxexyl]-2-(p-pentylphenyl)-ethan,
5 % 4-Butyl-4'-propyl-tolan,
5 % 4-Pentyl-4'-propyl-tolan,
5 % 4-Methoxy-4'-ethyl-tolan,
7 % 4-(trans-4-Propylcyclohexyl)-4'-methoxy-tolan,
6 % 4-(trans-4-Propylcyclohexyl)-4'-ethoxy-tolan und
7 % 4-(trans-4-Propylcyclohexyl)-4'-propoxy-tolan
und einer geeigneten chiralen Komponente (z.B. 0,7 % p-(p-n-Hexylbenzoyloxy)-benzoesäure-2-octylester) zeigt kurze Schaltzeiten.

Beispiel 3

Ein SFA vom Typ STN mit folgenden Parametern:

| | |
|---|---|
| Verdrillungswinkel | 220° |
| Anstellwinkel | 1° |
| d/p | 0,5 |
| d.Δn | 0,85 |

enthaltend eine Flüssigkristallmischung mit folgenden Parametern:

| | |
|---|---|
| Klärpunkt | 85° |
| Δn | 0,1494 |
| Viskosität | 15 mPa.s |

und bestehend aus einer Basismischung enthaltend
13 % p-trans-4-Propylcyclohexylbenzonitril,
7 % trans-1-p-Methoxyphenyl-4-propylcyclohexan,
15 % trans-1-p-Isothiocyanato-4-propylcyclohexan,
7 % 1-[trans-4-(trans-4-Propylcyclohexyl)-cyclohexyl]-2-(p-methylphenyl)-ethan,
7 % 1-[trans-4-(trans-4-Propylcyclohexyl)-cyclonexyl]-2-(p-ethylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan,
9 % 1-[trans-4-(trans-4-Propylcyclohexyl)-cyclohexyl]-2-(p-cyanphenyl)-ethan,
5 % 4-Butyl-4'-propyl-tolan,
5 % 4-Pentyl-4'-propyl-tolan,
5 % 4-Butyl-4'-pentyl-tolan und
5 % 4-Methoxy-4'-ethyl-tolan,
und einer geeigneten chiralen Komponente (z.B. 0,7 % p-(p-n-Hexylbenzoyloxy)-benzoesäure-2-octylester) zeigt kurze Schaltzeiten.

Beispiel 4

Ein SFA vom Typ OMI mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 0,5 |

enthaltend eine Flüssigkristallmischung mit folgenden Parametern:

| | |
|---|---|
| Klärpunkt | 91° |
| Δn | 0,1020 |
| Viskosität | 20,7 mPa.s |
| Δε | +6,8 |

und bestehend aus
13 % p-trans-4-Propylcyclohexyl-benzonitril,
14,3 % 1-(trans-4-Propylcyclohexyl)-2-(p-cyanphenyl)-ethan,
12 % 1-(trans-4-Pentylcyclohexyl)-2-(p-cyanphenyl)-ethan,
7 % trans,trans-4-Propoxy-4'-propylcyclohexyl-cyclohexan,
12 % trans,trans-4-Ethoxy-4'-pentylcyclohexyl-cyclohexan,

6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
5 % 1-[trans-4-(trans-4-Propylcyclohexyl)-cyclohexyl]-2-(p-fluorphenyl)-ethan,
5 % 1-[trans-4-(trans-4-Propylcyclohexyl)-cyclohexyl]-2-(p-cyanphenyl)-ethan
4 % 4,4'-Bis-(trans-4-propylcyclohexyl)-biphenyl,
3 % 4,4'-Bis-(trans-4-pentylcyclohexyl)-biphenyl und
0,7 % optisch aktives p-(p-n-Hexylbenzoyloxy)-benzoesäure-2-octylester
zeigt eine Schaltzeit von $T_{on}$ 92 msec und $T_{off}$ 104 msec bei einer Betriebsspannung von 21 Volt.

Beispiel 5

Ein SFA vom Typ OMI mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 0,5 |

enthaltend eine Flüssigkristallmischung mit folgenden Parametern:

| | |
|---|---|
| Klärpunkt | 88° |
| Δn | 0,1003 |
| Viskosität | 20 mPa.s |
| Δε | +6,8 |

und bestehend aus
5 % p-trans-4-Propylcyclohexyl-benzonitril,
5 % p-trans-4-Ethylcyclohexyl-benzonitril,
14,3 % 1-(trans-4-Propylcyclohexyl)-2-(p-cyanphenyl)-ethan,
12 % 1-(trans-4-Pentylcyclohexyl)-2-(p-cyanphenyl)-ethan,
5 % trans-1-p-Methoxyphenyl-4-propylcyclohexan,
10 % trans,trans-4-Ethoxy-4'-pentylcyclohexyl-cyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan,
8 % 1-[trans-4-(trans-4-Propylcyclohexyl)-cyclohexyl]-2-(p-cyanphenyl)-ethan und
0,7 % optisch aktives p-(p-n-Hexylbenzoyloxy)-benzoesäure-2-octylester
zeigt eine Schaltzeit von $T_{on}$ 79 msec und $T_{off}$ 94 msec bei einer Betriebsspannung von 20,5 Volt.

Im folgenden sind Beispiele für erfindungsgemäße Flüssigkristallmischungen angegeben, welche nach Dotierung mit den gebräuchlichen chiralen Komponenten in SFA kurze Schaltzeiten zeigen:

Beispiel 6

Eine Flüssigkristallmischung bestehend aus
15 % p-trans-4-Propylcyclohexylbenzonitril,
11 % p-trans-4-Butylcyclohexylbenzonitril,
4 % trans-1-p-Methoxyphenyl-4-propylcyclohexan,
14 % trans,trans-4-Methoxy-4'-pentylcyclohexylcyclohexan,
14 % trans,trans-4-Ethoxy-4'-pentylcyclohexylcyclohexan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,

6 % 1-[trans-4-(trans-4-Propylcyclohexyl)-cyclohexyl]-2-(p-pentylphenyl)-ethan,
6 % 1-[trans-4-(trans-4-Propylcyclohexyl)-cyclohexyl]-2-(p-cyanphenyl)-ethan,
6 % 1-[trans-4-(trans-4-Propylcyclohexyl)-cyclohexyl]-2-(p-fluorphenyl)-ethan,
3 % 4,4'-Bis-(trans-4-propylcyclohexyl)-biphenyl und
3 % 4-(trans-4-Pentylcyclohexyl)-4'-(trans-4-propylcyclohexyl)-biphenyl
zeigt folgende Parameter:

| | |
|---|---|
| Klärpunkt | 90° |
| $\Delta n$ | 0,0929 |
| Viskosität | 18 mPa.s |
| $\Delta\epsilon$ | +5,4 |

Beispiel 7

Eine Flüssigkristallmischung bestehend aus
12 % p-trans-4-Propylcyclohexylbenzonitril,
10 % p-trans-4-Pentylcyclohexylbenzonitril,
7 % 2-p-Cyanphenyl-5-propyl-1,3-dioxan,
18 % trans,trans-4-Propoxy-4'-propylcyclohexylcyclohexan,
7 % trans,trans-4-Propylcyclohexylcyclohexan-4'-carbonsäure-p-fluoryhenylester,
7 % trans,trans-4-Pentylcyclohexylcyclohexan-4'-carbonsäure-p-fluorphenylester,
5 % trans,trans-4-Propylcyclohexylcyclohexan-4'-carbonsäure-p-propylphenylester,
5 % trans,trans-4-Propylcyclohexylcyclohexan-4'-carbonsäure-p-pentylphenylester,
9 % 1-[trans-4-(trans-4-Propylcyclohexyl)-cyclohexyl]-2-(p-methylphenyl)-ethan,
10 % 1-[trans-4-(trans-4-Propylcyclohexyl)-cyclohexyl]-2-(p-fluorphenyl)-ethan und
10 % 1-[trans-4-(trans-4-Pentylcyclohexyl)-cyclohexyl]-2-(p-fluorphenyl)-ethan
zeigt folgende Parameter:

| | |
|---|---|
| Klärpunkt | 101° |
| $\Delta n$ | 0,0899 |
| Viskosität | 20 mPa.s |
| $\Delta\epsilon$ | +6,5 |

Beispiel 8

Eine Flüssigkristallmischung bestehend aus
16 % p-trans-4-Propylcyclohexylbenzonitril,
11 % p-trans-4-Butylcyclohexylbenzonitril,
6 % 2-p-Cyanphenyl-5-ethyl-1,3-dioxan,
9 % 2-p-Cyanphenyl-5-propyl-1,3-dioxan,
2 % p-Ethylbenzoesäure-(4-cyan-3-fluorphenylester),
3 % p-Propylbenzoesäure-(4-cyan-3-fluorphenylester),
8 % trans,trans-4-Propoxy-4'-propylcyclohexylcyclohexan,
7 % trans,trans-4-Propylcyclohexyl-cyclohexan-4'-carbonsäure-p-fluorphenylester,
7 % trans,trans-4-Pentylcyclohexyl-cyclohexan-4'-carbonsäure-p-fluorphenylester
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ehtylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-cyanphenyl)-ethan und
7 % 1-[trans-4-(trans-4-Propylcyclohexyl)-cyclohexyl]-2-(p-fluorphenyl)-ethan
zeigt folgende Parameter:

| | |
|---|---|
| Klärpunkt<br>Δn<br>Viskosität | 86 °<br>0,1073<br>24 mPa.s |

Beispiel 9

Eine Flüssigkristallmischung bestehend aus
13 % p-trans-4-Propylcyclohexylbenzonitril,
11 % p-trans-4-Butylcyclohexylbenzonitril,
12 % p-trans-4-Ethylcyclohexylbenzonitril,
19 % trans,trans-4-Methoxy-4'-propylcyclohexylcyclohexan,
4 % 4-(trans-4-Propylcyclohexyl)-4'-methoxy-tolan,
3 % 4-(trans-4-Propylcyclohexyl)-4'-ethoxy-tolan,
7 % 1-[trans-4-(trans-4-Propylcyclohexyl)-cyclohexyl]-2-(p-methylphenyl)-ethan,
7 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan und
10 % 1-[trans-4-(trans-4-Propylcyclohexyl)-cyclohexyl]-2-(p-cyanphenyl)-ethan
zeigt folgende Parameter:

| | |
|---|---|
| Klärpunkt<br>Δn<br>Viskosität | 90 °<br>0,1108<br>22 mPa.s |

Beispiel 10

Eine Flüssigkristallmischung bestehend aus
2 % p-Ethylbenzoesäure-(4-cyan-3-fluorphenylester),
3 % p-Propylbenzoesäure-(4-cyan-3-fluorphenylester),
8 % p-Pentylbenzoesäure-(4-cyan-3-fluorphenylester),
7 % p-(trans-4-Propylcyclohexyl)-benzoesäure-(4-cyan-3-fluorphenylester),
7 % p-(trans-4-Butylcyclohexyl)-benzoesäure-(4-cyan-3-fluorphenylester),
6 % p-(trans-4-Pentylcyclohexyl)-benzoesäure-(4-cyan-3-fluorphenylester),
16 % trans,trans-4-Methoxy-4'-propylcyclohexylcyclohexan,
20 % trans,trans-4-Methoxy-4'-pentylcyclohexylcyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan und
7 % 1-[trans-4-(trans-4-Propylcyclohexyl)-cyclohexyl]-2-(p-pentylphenyl)-ethan
zeigt folgende Parameter:

| | |
|---|---|
| Klärpunkt<br>Δn<br>Viskosität | 91 °<br>0,1003<br>28 mPa.s |

Beispiel 11

Eine Flüssigkristallmischung bestehend aus
20 % p-trans-4-Propylcyclohexylbenzonitril,
10 % p-trans-4-Pentylcyclohexylbenzonitril,
10 % p-trans-4-Ethylcyclohexylbenzonitril,
3 % p-Ethylbenzoesäure-(4-cyan-3-fluorphenylester),

4 % p-Propylbenzoesäure-(4-cyan-3-fluorphenylester),
7 % trans-1-p-Methoxyphenyl-4-propylcyclohexan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan und
6 % 1-[trans-4-(trans-4-Pentylcyclohexyl)-cyclohexyl]-2-(p-fluorphenyl)-ethan
zeigt folgende Parameter:

| | |
|---|---|
| Klärpunkt | 80 ° |
| Δn | 0,1092 |
| Viskosität | 19 mPa.s |

Beispiel 12

Eine Flüssigkristallmischung bestehend aus
20 % p-trans-4-Propylcyclohexylbenzonitril,
13 % p-trans-4-Pentylcyclohexylbenzonitril,
12 % p-trans-4-Ethylcyclohexylbenzonitril,
5 % p-(trans-4-Propylcyclohexyl)-benzoesäure-(4-cyan-3-fluorphenylester),
8 % trans-1-p-Methoxyphenyl-4-propylcyclohexan,
7 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
5 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan und
6 % 1-[trans-4-(trans-4-Pentylcyclohexyl)-cyclohexyl]-2-(p-fluorphenyl)-ethan,
zeigt folgende Parameter:

| | |
|---|---|
| Klärpunkt | 83 ° |
| Δn | 0,1097 |
| Viskosität | 20 mPa.s |

Beispiel 13

Eine Flüssigkristallmischung bestehend aus
20 % p-trans-4-Propylcyclohexylbenzonitril,
7 % p-trans-4-Pentylcyclohexylbenzonitril,
10 % p-trans-4-Ethylcyclohexylbenzonitril,
17 % 1-(trans-4-Propylcyclohexyl)-2-(p-cyanphenyl)-ethan,
5 % trans,trans-4-Propylcyclohexyl-cyclohexan-4'-carbonsäure-(p-fluorphenylester),
5 % trans,trans-4-Pentylcyclohexyl-cyclohexan-4'-carbonsäure-(p-fluorphenylester),
7 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
9 % 1-[trans-4-(trans-4-Propylcyclohexyl)-cyclohexyl]-2-(p-fluorphenyl)-ethan und
8 % 1-[trans-4-(trans-4-Pentylcyclohexyl)-cyclohexyl]-2-(p-fluorphenyl)-ethan
zeigt folgende Parameter:

| | |
|---|---|
| Klärpunkt<br>Δn<br>Viskosität | 84 °<br>0,1082<br>21 mPa.s |

Beispiel 14

Eine Flüssigkristallmischung bestehend aus
20 % p-trans-4-Propylcyclohexylbenzonitril,
10 % p-trans-4-Pentylcyclohexylbenzonitril,
10 % p-trans-4-Ethylcyclohexylbenzonitril,
3 % p-Ethylbenzoesäure-(4-cyan-3-fluorphenylester),
4 % p-Propylbenzoesäure-(4-cyan-3-flurophenylester),
11 % trans-1-p-Methoxyphenyl-4-propylcyclohexan,
4 % trans,trans-4-Propylcyclohexyl-cyclohexan-4'-carbonsäure-(trans-4-propylcyclohexylester),
4 % trans,trans-4-Propylcyclohexyl-cyclohexan-4'-carbonsäure-(trans-4-pentylcyclohexylester),
4 % trans,trans-4-Butylcyclohexyl-cyclohexan-4'-carbonsäure-(trans-4-propylcyclohexylester),
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan und
6 % 1-[trans-4-(trans-4-Propylcyclohexyl)-cyclohexyl]-2-(p-propylphenyl)-ethan
zeigt folgende Parameter:

| | |
|---|---|
| Klärpunkt<br>Δn<br>Viskosität | 77 °<br>0,1048<br>20 mPa.s |

Beispiel 15

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
11 % trans-1-p-Methoxyphenyl-4-propylcyclohexan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan,
9 % 1-[trans-4-(trans-4-Propylcyclohexyl)-cyclohexyl]-2-(p-fluorphenyl)-ethan und
5 % 1-[trans-4-(trans-4-Propylcyclohexyl)-cyclohexyl]-2-(p-cyanphenyl)-ethan,
zeigt folgende Parameter:

| | |
|---|---|
| Klärpunkt<br>Δn<br>Viskosität | 81 °<br>0,1112<br>20 mPa.s |

Beispiel 16

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,

3 % p-Ethylbenzoesäure-(4-cyan-3-fluorphenylester),
4 % p-Propylbenzoesäure-(4-cyan-3-fluorphenylester),
10 % trans-1-p-Methoxyphenyl-4-propylcyclohexan,
6 % trans,trans-4-Propylcyclohexylcyclohexan-4'-carbonsäure-(p-fluorphenylester),
6 % 1-[trans-4-(trans-4-Propylcyclohexyl)-cyclohexyl]-2- (p-methylphenyl)-ethan,
6 % 1-[trans-4-(trans-4-Propylcyclohexyl)-cyclohexyl]-2-(p-ethylphenyl)-ethan,
8 % 1-[trans-4-(trans-4-Propylcyclohexyl)-cyclohexyl]-2-(p-propylphenyl)-ethan,
8 % 1-[trans-4-(trans-4-Propylcyclohexyl)-cyclohexyl]-2-(p-pentylphenyl)-ethan und
9 % 1-[trans-4-(trans-4-Propylcyclohexyl)-cyclohexyl]-2-(p-fluorphenyl)-ethan
zeigt folgende Parameter:

| | |
|---|---|
| Klärpunkt | 80 ° |
| Δn | 0,1087 |
| Viskosität | 19 mPa.s |

Beispiel 17

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
10 % trans-1-p-Methoxyphenyl-4-propylcyclohexan,
6 % trans,trans-4-Propylcyclohexylcyclohexan-4'-carbonsäure-(p-fluorphenylester),
6 % trans,trans-4-Pentylcyclohexylcyclohexan-4'-carbonsäure-(p-fluorphenylester),
5 % 1-[trans-4-(trans-4-Propylcyclohexyl)-cyclohexyl]-2-(p-methylphenyl)-ethan,
5 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan und
9 % 1-[trans-4-(trans-4-Propylcyclohexyl)-cyclohexyl]-2-(p-fluorphenyl)-ethan
zeigt folgende Parameter:

| | |
|---|---|
| Klärpunkt | 81 ° |
| Δn | 0,1085 |
| Viskosität | 20 mPa.s |

Beispiel 18

Eine Flüssigkristallmischung bestehend aus
20 % p-trans-4-Propylcyclohexylbenzonitril,
10 % p-trans-4-Pentylcyclohexylbenzonitril,
10 % p-trans-4-Butylcyclohexylbenzonitril,
3 % p-Ethylbenzoesäure-(4-cyan-3-fluorphenylester),
4 % p-Propylbenzoesäure-(4-cyan-3-fluorphenylester),
12 % trans-1-p-Methoxyphenyl-4-propylcyclohexan,
5 % trans,trans-4-Propylcyclohexylcyclohexan-4'-carbonsäure-(p-propylphenylester),
5 % trans,trans-4-Propylcyclohexylcyclohexan-4'-carbonsäure-(p-pentylphenylester)
4 % 1-[trans-4-(trans-4-Propylcyclohexyl)-cyclohexyl]-2-(p-methylphenyl)-ethan,
5 % 1-[trans-4-(trans-4-Propylcyclohexyl)-cyclohexyl]-2-(p-ethylphenyl)-ethan,
5 % 1-[trans-4-(trans-4-Propylcyclohexyl)-cyclohexyl]-2-(p-propylphenyl)-ethan,
5 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-2-(p-fluorphenyl)-ethan und
4 % 1-[trans-4-(trans-4-Propylcyclohexyl)-cyclohexyl]-2-(p-fluorphenyl)-ethan

zeigt folgende Parameter:

| | |
|---|---|
| Klärpunkt | 79° |
| Δn | 0,1087 |
| Viskosität | 19 mPa.s |

Beispiel 19

Eine Flüssigkristallmischung bestehend aus
3 % p-Ethylbenzoesäure-(4-cyan-3-flourphenylester),
4 % p-Propylbenzoesäure-(4-cyan-3-flourphenylester),
9 % p-Pentylbenzoesäure-(4-cyan-3-flourphenylester),
4 % p-Heptylbenzoesäure-(4-cyan-3-flourphenylester),
6 % p-(trans-4-Propylcyclohexyl)-benzoesäure-(4-cyan-3-fluorphenylester),
6 % p-(trans-4-Butylcyclohexyl)-benzoesäure-(4-cyan-3-fluorphenylester),
19 % trans-1-p-Methoxyphenyl-4-propylcyclohexan,
17 % trans,trans-4-Propoxy-4'-propylcyclohexylcyclohexan,
6 % trans,trans-4-Propylcyclohexylcyclohexan-4'-carbonsäure-(p-fluorphenylester),
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan und
7 % 1-[trans-4-(trans-4-Propylcyclohexyl)-cyclohexyl]-2-(p-pentylphenyl)-ethan,
zeigt folgende Parameter:

| | |
|---|---|
| Klärpunkt | 79° |
| Δn | 0,1054 |
| Viskosität | 22 mPa.s |

Beispiel 20

Eine Flüssigkristallmischung bestehend aus
10 % p-trans-4-Propylcyclohexylbenzonitril,
3 % p-Ethylbenzoesäure-(4-cyan-3-fluorphenylester),
4 % p-Propylbenzoesäure-(4-cyan-3-fluorphenylester),
10 % p-Pentylbenzoesäure-(4-cyan-3-fluorphenylester),
6 % p-(trans-4-Propylcyclohexyl)-benzoesäure-(4-cyan-3-fluorphenylester),
4 % p-(trans-4-Butylcyclohexyl)-benzoesäure-(4-cyan-3-fluorphenylester),
18 % trans-1-p-Methoxyphenyl-4-propylcyclohexan,
10 % trans,trans-4-Propoxy-4'-propylcyclohexylcyclohexan
6 % 1-[trans-4-(trans-4-Propylcyclohexyl)-cyclohexyl]-2-(p-methylphenyl)-ethan,
7 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan und
8 % 1-[trans-4-(trans-4-Propylcyclohexyl)-cyclohexyl]-2-(p-fluorphenyl)-ethan,
zeigt folgende Parameter:

| | |
|---|---|
| Klärpunkt | 78° |
| Δn | 0,1085 |
| Viskosität | 21 mPa.s |

Beispiel 21

Eine Flüssigkristallmischung bestehend aus
20 % p-trans-4-Propylcyclohexylbenzonitril,
6 % p-trans-4-Pentylcyclohexylbenzonitril,
3 % p-Ethylbenzoesäure-(4-cyan-3-fluorphenylester),
4 % p-Propylbenzoesäure-(4-cyan-3-fluorphenylester),
9 % p-Pentylbenzoesäure-(4-cyan-3-fluorphenylester),
10 % trans-1-p-Methoxyphenyl-4-propylcyclohexan,
7 % trans-1-p-Ethoxyphenyl-4-propylcyclohexan,
6 % trans,trans-4⁻Propylcyclohexylcyclohexan-4'-carbonsäure-(p-fluorphenylester),
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
7 % 1-[trans-4-(trans-4-Propylcyclohexyl)-cyclohexyl]-2-(p-propylphenyl)-ethan,
7 % 1-[trans-4-(trans-4-Propylcyclohexyl)-cyclohexyl]-2-(p-pentylphenyl)-ethan und
9 % 1-[trans-4-(trans-4-Propylcyclohexyl)-cyclohexyl]-2-(p-fluorphenyl)-ethan,
zeigt folgende Parameter:

| | |
|---|---|
| Klärpunkt | 74° |
| Δn | 0,1101 |
| Viskosität | 19 mPa.s |

Die Mischungen der Beispiele 9 bis 21 eignen sich insbesondere für OMI-Anwendungen.

In den folgenden Tabellen 1 bis 16 ist die Zusammensetzung der Mischungen der Beispiele 22 bis 129 angegeben, wobei die einzelnen Verbindungen wie folgt codiert sind:

AIII1: 1-[trans-4-(trans-4-Propylcyclohexyl)-cyclohexyl]-(2-p-methylphenyl)-ethan
AIII2: 1-[trans-4-(trans-4-Propylcyclohexyl)-cyclohexyl]-(2-p-ethylphenyl)-ethan
AIII3: 1-[trans-4-(trans-4-Propylcyclohexyl)-cyclohexyl]-(2-p-propylphenyl)-ethan
AIII4: 1-[trans-4-(trans-4-Propylcyclohexyl)-cyclohexyl]-(2-p-butylphenyl)-ethan
AIII5: 1-[trans-4-(trans-4-Propylcyclohexyl)-cyclohexyl]-(2-p-pentylphenyl)-ethan
BIII1: trans,trans-4-Propyl-4'-methoxy-cyclohexylcyclohexan
BIII2: trans,trans-4-Propyl-4'-ethoxy-cyclohexylcyclohexan
BIII3: trans,trans-4-Propyl-4'-propoxy-cyclohexylcyclohexan
BIII4: trans,trans-4-Pentyl-4'-methoxy-cyclohexylcyclohexan
BIII5: trans,trans-4-Pentyl-4'-ethoxy-cyclohexylcyclohexan
BIII6: trans,trans-4-Propyl-4'-butyryloxy-cyclohexylcyclohexan
BIII7: trans,trans-4-Propyl-4'-hexanoyloxy-cyclohexylcyclohexan
BIII8: trans-4-Propylcyclohexylcarbonsäure-(trans-4-propylcyclohexylester)
BIII9: trans-4-Pentylcyclohexylcarbonsäure-(trans-4-propylcyclohexylester)
BIV1: trans-1-p-Methoxyphenyl-4-propylcyclohexan
BIV2: trans-1-p-Ethoxyphenyl-4-propylcyclohexan
BIV3: trans-1-p-Butoxyphenyl-4-propylcyclohexan
BIV4: trans-1-p-Methoxyphenyl-4-pentylcyclohexan
BIV5: trans-1-p-Propylphenyl-4-pentylcyclohexan
BIV6: trans-1-p-Ethylphenyl-4-pentylcyclohexan
BV1: trans,trans-4-Propylcyclohexylcyclohexan-4'-carbonsäure-(p-fluorphenylester)
BV2: trans,trans-4-Pentylcyclohexylcyclohexan-4'-carbonsäure-(p-fluorphenylester)
BV3: trans,trans-4-Propylcyclohexylcyclohexan-4'-carbonsäure-(trans-4-propylcyclohexylester)
BV4: trans,trans-4-Propylcyclohexylcyclohexan-4'-carbonsäure-(trans-4-pentylcyclohexylester)
BV5: trans,trans-4-Butylcyclohexylcyclohexan-4'-carbonsäure-(trans-4-propylcyclohexylester)
BV6: trans,trans-4-Butylcyclohexylcyclohexan-4'-carbonsäure-(trans-4-pentylcyclohexylester)
BV7: trans,trans-4-Propylcyclohexylcyclohexan-4'-carbonsäure-(p-propylphenylester)
BV8: trans,trans-4-Propylcyclohexylcyclohexan-4'-carbonsäure-(p-pentylphenylester)
BV9: trans,trans-4-Butylcyclohexylcyclohexan-4'-carbonsäure-(p-propylphenylester)
BV10: trans,trans-4-Butylcyclohexylcyclohexan-4'-carbonsäure-(p-pentylphenylester)
BVI1: 1-[trans-4-(trans-4-Propylcyclohexyl)-cyclohexyl]-2-(p-fluorphenyl)-ethan
BVI2: 1-[trans-4-(trans-4-Pentylcyclohexyl)-cyclohexyl]-2-(p-fluorphenyl)-ethan

BVIII1: 2-p-Ethylphenyl-5-propyl-pyrimidin
BVIII2: 2-p-Propylphenyl-5-propyl-pyrimidin
BVIII3: 2-p-Propylphenyl-5-pentyl-pyrimidin
BVIII4: 2-p-Ethylphenyl-5-heptyl-pyrimidin
BVIII5: 2-p-Pentyloxyphenyl-5-hexyl-pyrimidin
BVIII6: 2-p-Heptyloxyphenyl-5-hexyl-pyrimidin
BVIII7: 2-p-Nonyloxyphenyl-5-hexyl-pyrimidin
BVIII8: 2-p-Heptyloxyphenyl-5-heptyl-pyrimidin
BVIII9: 2-p-Nonyloxyphenyl-5-heptyl-pyrimidin
BVIII10: 2-p-Hexyloxyphenyl-5-nonyl-pyrimidin
BVIII11: 2-p-Nonyloxphenyl-5-nonyl-pyrimidin
C1: p-trans-4-Ethylcyclohexylbenzonitril
C2: p-trans-4-Propylcyclohexylbenzonitril
C3: p-trans-4-Butylcyclohexylbenzonitril
C4: p-trans-4-Pentylcyclohexylbenzonitril
C5: 1-(trans-4-Propylcyclohexyl)-2-(p-cyanphenyl)-ethan
C6: 1-(trans-4-Pentylcyclohexyl)-2-(p-cyanphenyl)-ethan
C7: 4-Ethyl-4'-cyanbiphenyl
C8: 4-Propyl-4'-cyanbiphenyl
C9: 4-Pentyl-4'-cyanbiphenyl
C10: 2-p-Cyanphenyl-5-propyl-1,3-dioxan
C11: 2-p-Cyanphenyl-5-butyl-1,3-dioxan
C12: 2-p-Cyanphenyl-5-pentyl-1,3-dioxan
C13: trans-1-p-Isothiocyanatophenyl-4-propylcyclohexan
C14: 1-[trans-4-(trans-4-Propylcyclohexyl)-cyclohexyl]-2-(p-cyanphenyl)-ethan
C15: p-Ethylbenzoesäure-(4-cyan-3-fluorphenylester)
C16: p-Propylbenzoesäure-(4-cyan-3-fluorphenylester)
C17: p-Pentylbenzoesäure-(4-cyan-3-fluorphenylester)
C18: p-Heptylbenzoesäure-(4-cyan-3-fluorphenylester)
C19: p-(trans-4-Propylcyclohexyl)-benzoesäure-(4-cyan-3-fluorphenylester)
C20: p-(trans-4-Butylcyclohexyl)-benzoesäure-(4-cyan-3-fluorphenylester)
C21: p-(trans-4-Pentylcyclohexyl)-benzoesäure-(4-cyan-3-fluorphenylester)
C22: 2-(3-Fluor-4-cyanphenyl)-5-pentyl-pyrimidin
C23: 2-(3-Fluor-4-cyanphenyl)-5-hexyl-pyrimidin
C24: 2-(3-Fluor-4-cyanphenyl)-5-heptyl-pyrimidin
F1: trans-1-p-Fluorphenyl-4-pentylcyclohexan
F2: trans-1-p-Fluorphenyl-4-hexylcyclohexan
F3: trans-1-p-Fluorphenyl-4-heptylcyclohexan
H1: 4-Butyl-4'-propyl-tolan
H2: 4-Pentyl-4'-propyl-tolan
H3: 4-Butyl-4'-pentyl-tolan
H4: 4-Ethyl-4'-methoxy-tolan
H5: 4-Methyl-4'-ethoxy-tolan
H6: 4-(trans-4-Propylcyclohexyl)-4'-methoxy-tolan
H7: 4-(trans-4-Propycyclohexyl)-4'-ethoxy-tolan
H8: 4-(trans-4-Propylcyclohexyl)-4'-propoxy-tolan
K1: 4-Ethyl-4'-(trans-4-propylcyclohexyl)-biphenyl
K2: 4-Ethyl-4'-(trans-4-pentylcyclohexyl)-biphenyl
K3: 4-Nonyl-4'-(trans-4-propylcyclohexyl)-biphenyl
K4: 4-Ethyl-4'-(trans-4-pentylcyclohexyl)-2'-flourbiphenyl
K5: 1-(trans-4-Pentylcyclohexyl)-2-(4'-ethyl-2'-fluorbiphenyl-4-yl)-ethan
L1: 4,4'-Bis-(trans-4-propylcyclohexyl)-biphenyl
L2: 4-(trans-4-Pentylcyclohexyl)-4'-(trans-4-propylcyclohexyl)-biphenyl
L3: 4,4'-Bis-(trans-4-pentylcyclohexyl)-biphenyl
L4: 4,4-Bis-(trans-4-propylcyclohexyl)-2-fluorbiphenyl
L5: 4-(trans-4-Pentylcyclohexyl)-4'-(trans-4-propylcyclohexyl)-2-fluorbiphenyl
L6: 4,4'-Bis-(trans-4-pentylcyclohexyl)-2-fluorbiphenyl.

Die Daten zu den Beispielen 22 bis 129 sind in Tabelle 17 zu finden.

Tabelle 1: Prozentuale Zusammensetzung der Flüssigkristallmischungen entsprechend den Beispielen 22 bis 47 in Bezug auf Komponenten der Gruppen A bis B V

| Verbindung | Beispiel 22 | 23 | 24 | 25 | 26 | 27 | 28 | 29 | 30 | 31 | 32 | 33 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|---|---|---|---|---|---|---|---|---|
| A III 1 | 8 | 7 | 8 | 8 | 7 | 8 | 8 | 8 | 7 | 7 | 8 | 6 | 8 | 7 | 5 | 8 | 7 | 6 | 6 | 6 | 4 | 5 | 7 | 7 | 7 |
| A III 2 | 8 | 7 | 8 | 8 | 7 | 8 | 8 | 8 | 6 | 6 | 8 | 4 | 8 | 7 | 5 | 8 | 8 | | 6 | 5 | 4 | 6 | 7 | 7 | 7 |
| A III 3 | 8 | 8 | 8 | 8 | 8 | 8 | 8 | 8 | 6 | 6 | 6 | 4 | 8 | 7 | 5 | 8 | 8 | 6 | 6 | 5 | 4 | 6 | 7 | 7 | 7 |
| A III 4 | | | | | | | | | | | | | | | | | | | | | | | | | |
| A III 5 | 8 | 8 | 8 | 8 | 8 | 8 | 8 | 8 | 6 | | | | 7 | 7 | 5 | 8 | 5 | 6 | 6 | 5 | 4 | 7 | 7 | 7 | 7 |
| B III 1 | | | | | | | | | | | | | 16 | | | | | | | | 10 | | | | |
| B III 2 | | | | | | | | | | | | | | | | | | | | | | 5 | | | |
| B III 3 | | | | | | | | | | | | | | 18 | | | | | | | | 16 | | | |
| B III 4 | | | | | | | | | | | | | 20 | 9 | | | | | | | | | | | |
| B III 5 | | | | | | | | | | | | | | | | | | | | | | 14 | | | |
| B III 6 | | | | | | | | | | | | | | | | | | | | | | | | | |
| B III 7 | | | | | | | | | | | | | | | | | | | | | | | | | |
| B III 8 | | | | | | | | | | | | | | | | | | | | | | | | | |
| B III 9 | | | | | | | | | | | | | | | | | | | | | | | | | |
| B IV 1 | 12 | 19 | 15 | 17 | 10 | 17 | 14 | 15 | | | 11 | 2 | | | 20 | 7 | 8 | 12 | 13 | 10 | 18 | 18 | 18 | | 12 |
| B IV 2 | | | | | | | | | | | | | | | | | | | | | | | | | |
| B IV 3 | | | | | | | | | | | | | | | 16 | | | | | | | | | | |
| B IV 4 | | | | | | | | | | | | | | | | | | | | | | | | | |
| B IV 5 | | 5 | 7 | | 5 | 5 | | 7 | | | | | | | | | | | | | | | | 7 | |
| B IV 6 | | | | | | | | | | | | | | | | | | | | | | | | | |
| B V 1 | | | | | | | | | 6 | 5 | | | | | | | | | | | | | | | |
| B V 2 | | | | | | | | | 4 | 5 | | | | | | | | | | | | | | | |
| B V 3 | | | | | | | | | | | 4 | 4 | | | | | | | | | | | | | |
| B V 4 | | | | | | | | | | | 4 | 4 | | | | | | | | | | | | | |
| B V 5 | | | | | | | | | | | 4 | | | | | | | | | | | | | | |
| B V 6 | | | | | | | | | | | | | | | | | | | | | | | | | |
| B V 7 | | | | | | | | | | | | | | | | | | | | | | | | | |
| B V 8 | | | | | | | | | | | | | | | | | | | | | | | | | |
| B V 9 | | | | | | | | | | | | | | | | | | | | | | | | | |
| B V 10 | | | | | | | | | | | | | | | | | | | | | | | | | |

Tabelle 2: Prozentuale Zusammensetzung der Flüssigkristallmischungen entsprechend den Beispielen 48 bis 77 in Bezug auf Komponenten der Gruppen A bis B V

| Verbindung | Beispiel 48 | 49 | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 |
|---|---|---|---|---|---|---|---|---|---|---|---|---|---|---|---|---|---|---|---|---|---|---|---|---|---|---|---|---|---|---|
| A III 1 | 9 | 8 | 8 | 7 | 8 | 8 | 8 | 8 | 9 | 9 | 9 | 7 | 8 | 7 | 7 | 7 | 8 | 8 | 8 | 8 | 8 | 7 | 8 | 7 | 6 | 5 | | 6 | 7 | 8 |
| A III 2 | 9 | 9 | 8 | 7 | 8 | 8 | 8 | 7 | 9 | 9 | 9 | 7 | 7 | 7 | 8 | 8 | 8 | 7 | 8 | 8 | 8 | 7 | 8 | 7 | 6 | | | 6 | 7 | |
| A III 3 | 9 | 9 | 8 | 7 | 8 | 8 | 7 | 7 | 9 | 9 | 9 | 7 | 8 | 7 | 8 | 8 | 7 | 7 | 8 | 8 | 8 | 7 | 8 | 7 | 6 | 5 | 6 | 7 | 7 | 8 |
| A III 4<br>A III 5 | 9 | 9 | 8 | 7 | 8 | 8 | 7 | 7 | 9 | 9 | 9 | 7 | 8 | 7 | 8 | 8 | 7 | 7 | 8 | 8 | 8 | 7 | 8 | 7 | 7 | 5 | 5 | 7 | 7 | 8 |
| B III 1 | | | | | | | | | | | | | | | | | | | | | | | | | | | | | | |
| B III 2 | | | | | | | | | | | | | | | | | | | | | | | 10 | | | | | | | |
| B III 3 | | | | | | | | | | | | | | | | | | | | | | | | | | | | | | |
| B III 4 | | | | | | | | | | | | | | | | | | | | | | | | | | | | | | |
| B III 5 | | | | | | | | | | | | | | | | | | | | | | | | | | | | | | |
| B III 6 | | | | | | | | | | | | | | | | | | | | | | | | | | | | | | |
| B III 7 | | | | | | | | | | | | | | | | | | | | | | | | | | | | | | |
| B III 8 | | | | | | | | | | | | | | | | | | | | | | | | | | | | | | |
| B III 9 | | | | | | | | | | | | | | | | | | | | | | | | | | | | | | |
| B IV 1 | 10 | | 9 | | | | | | | | | | | 12 | | 13 | | | | | | | | | | | | | | |
| B IV 2 | | | | | 10 | 10 | | | | | | | | | | | | | 9 | 11 | | | | | 5 | 10 | 16 | 8 | 13 | 9 |
| B IV 3 | | | | | | | | | | | | | | | | | | | | | | | | | | 12 | | | | |
| B IV 4 | | | | | | | | | | | | | | | | | | | | | | | | | | | | | | |
| B IV 5 | 15 | 17 | | | 5 | 5 | | | 15 | 5 | 5 | | 7 | | 10 | | | | | | | | | | | | | | | |
| B IV 6 | | | | | | | | 7 | | | | | | | | | | 7 | 8 | | 4 | 15 | 10 | | 10 | 10 | 17 | 10 | 12 | 10 |
| B V 1 | | | | | | | | | | | | | | | | | | | | | | | | | | | | | | |
| B V 2 | | | | | | | | | | | | | | | | | | | | | | | | | | | | | | |
| B V 3 | | | | | | | | | | | | | | | | | | | | | | | | | | | | | | |
| B V 4 | | | | | | | | | | | | | | | | | | | | | | | | | | | | | | |
| B V 5 | | | | | | | 4 | | | | | | | | | | 4 | | | | | | | | | | | | | |
| B V 6 | | | | | | | | | | | | | | | | | | | | | 5 | | | | | | | | | |
| B V 7 | | | | | | | | | | | | | | | | | | | | | | | | | | | | | | |
| B V 8 | | | | | | | | | | | | | | | | | | | | | 4 | | | | | | | | | |
| B V 9 | | | | | | | | | | | | | | | | | | | | | | | | | | | | | | |
| B V 10 | | | | | | | | | | | | | | | | | | | | | | | | | | | | | | |

Tabelle 3: Prozentuale Zusammensetzung der Flüssigkristallmischungen entsprechend den Beispielen 78 bis 108 in Bezug auf Komponenten der Gruppen A bis B V

| Verbindung / Beispiel | 78 | 79 | 80 | 81 | 82 | 83 | 84 | 85 | 86 | 87 | 88 | 89 | 90 | 91 | 92 | 93 | 94 | 95 | 96 | 97 | 98 | 99 | 100 | 101 | 102 | 103 | 104 | 105 | 106 | 107 | 108 |
|---|---|---|---|---|---|---|---|---|---|---|---|---|---|---|---|---|---|---|---|---|---|---|---|---|---|---|---|---|---|---|---|
| A III 1 | 7 | | 5 | 5 | 5 | 5 | 5 | 7 | 8 | 8 | 7 | 9 | 8 | 7 | 8 | 8 | 8 | 4 | 8 | | 5 | 11 | 9 | 9 | | 9 | 7 | | 8 | | |
| A III 2 | 7 | 9 | 5 | | 5 | 5 | 4 | | | | | | | | | | | | 8 | | | | | | | | | | | | |
| A III 3 | 7 | 8.1 | 4 | | | | | 7 | 7 | 8 | 7 | | 7 | 7 | 8 | 9 | 8 | 8 | 8 | 6 | 7 | 10 | 9 | 9 | 12 | 10 | 9 | 10 | 10 | 9 | 10 |
| A III 4 | | | | | | | | | | | | | | | | | | | | | | | | | | | | | | | |
| A III 5 | 7 | 8.1 | 4 | | | 5 | | | 7 | 8 | | | 7 | 7 | 7 | 9 | 7 | 9 | 8 | 5 | | 10 | 9 | 8 | 11 | 9 | | | | | 11 |
| B III 1 | | | 19 | | | | | | | | | | | | | | | | | | 7 | | | | | | | | | | |
| B III 2 | | | | | | | | | | | | | | | | | | | | | | | | | | | | | | | |
| B III 3 | | | | | | | | | | 14 | 16 | 15 | 16 | | | 16 | | | | | | | 12 | 13 | 17 | 14 | | 22 | 21 | | 10 |
| B III 4 | | | | | | | | | | | | | | | | | | | | | | | | | | | | | | | |
| B III 5 | | | | | | | | | | | | | | | | | | | | | | | 5 | 11 | 6 | 12 | | 11 | 5 | | |
| B III 6 | | | | 7 | 5 | 7 | 9 | 7 | 7 | | | | | | | | | | | | | | | | | | | | | | |
| B III 7 | | | | 6 | 6 | 7 | 7 | 7 | 7 | | | | | | | | | | | | | | | | | | | | | | |
| B III 8 | | | | | | | | | | | | | | 8 | | | | | | | | | | | | | 8 | | | 9 | |
| B III 9 | | | | | | | | | | | | | | 8 | | | | | | | | | | | | | 8 | | | 9 | |
| B IV 1 | | | | | | | | | | | | | | | | | | | | | | 8 | | | | | | | | | 9 |
| B IV 2 | | | | | | | | 12 | 12 | 8 | 10 | | 10 | 13 | 19 | 10 | 19 | 17 | 19 | | | 9 | 10 | | 5 | | 15 | 5 | 7 | 12 | 10 |
| B IV 3 | | | | | | | | | | | | | | | 10 | | 10 | 3 | 10 | | | 9 | | | | | | | | | |
| B IV 4 | | | | | | | | | | | | | | | | | | | | | | | | | | | | | | | |
| B IV 5 | | | | | | | | | | | | | | | | | | | | | | | | | | | | | | | |
| B IV 6 | | 11.7 | | | | | | | | | | | | | | | | | | | | | | | | | | | | | |
| B V 1 | | | | 7 | 7 | 7 | 7 | 8 | 8 | 8 | 8 | 7 | 8 | 8 | 8 | 8 | 8 | 8 | 8 | 7 | | 7 | 9 | 9 | 9 | 9 | 8 | 9 | 9 | 9 | 7 |
| B V 2 | | | | 7 | 7 | 7 | 7 | 8 | 8 | 8 | 8 | 7 | 8 | 8 | 8 | 8 | 8 | 8 | 8 | 6 | | 6 | 9 | 9 | 9 | 9 | 8 | 9 | 9 | 9 | 6 |
| B V 3 | | | | | | | | | | | | | | | | | | | | | 3 | | | | | | | | | | |
| B V 4 | | | | | | | | | | | | | | | | | | | | | 2 | | | | | | | | | | |
| B V 5 | | | | | | | | | | | | | | | | | | | | | 3 | | | | | | 2 | | | | |
| B V 6 | | | | | | | | | | | | | | | | | | | | | 3 | | | | | | 2 | | | | |
| B V 7 | | | | 8 | 6 | 7 | 6 | 7 | 6 | | 7 | 7 | 6 | 7 | 6 | 6 | 6 | 9 | | 5 | | | | | | | 3 | | | 4 | |
| B V 8 | | | | 8 | 7 | | 5 | | | | | 6 | | | | | | 9 | | 5 | | | | | | | | | | | |
| B V 9 | | | | | | | | | | | | | | | | | | | | 4 | | | | | | | | | | 3 | |
| B V 10 | | | | | | | | | | | | | | | | | | | | 4 | | | | | | | | | | 3 | |

Tabelle 4: Prozentuale Zusammensetzung der Flüssigkristallmischungen entsprechend den Beispielen 109 bis 129 in Bezug auf Komponenten der Gruppen A bis B V

| Verbindung / Beispiel | 109 | 110 | 111 | 112 | 113 | 114 | 115 | 116 | 117 | 118 | 119 | 120 | 121 | 122 | 123 | 124 | 125 | 126 | 127 | 128 | 129 |
|---|---|---|---|---|---|---|---|---|---|---|---|---|---|---|---|---|---|---|---|---|---|
| A III 1 | | | | | | | | | | | | | 6 | 5 | 5 | 9 | | 9 | 9 | 5 | |
| A III 2 | | | | | | | | | | | | | 6 | 5 | 4 | | | | | | |
| A III 3 | 11 | 8 | 9 | 4 | 7 | 11 | 11 | 12 | 4 | 11 | 11 | 12 | 5 | | | 9 | 6 | 9 | 9 | 7 | 6 |
| A III 4 | | | | | | | | | | | | | | | | | | | | | |
| A III 5 | 10 | 13 | 8 | | 6 | 10 | 12 | 12 | | 10 | 12 | 12 | 5 | 5 | | 8 | 5 | 8 | 8 | | 5 |
| B III 1 | 12 | 15 | 12 | | | | | | | | | | 14 | | | | | | | 7 | |
| B III 2 | | | | | | | | | | | | | | | | | | | | | |
| B III 3 | 12 | 14 | 12 | 19 | 19 | 20 | 15 | 18 | 19 | 20 | 15 | 18 | 10 | | | 12 | | 12 | 12 | | |
| B III 4 | | | | 12 | 12 | 10 | 7 | 8 | 12 | 10 | 7 | 8 | | | | 10 | | 8 | 6 | | |
| B III 5 | | | | 7 | 10 | 11 | 8 | 9 | 7 | 11 | 8 | 9 | | | | 11 | | 10 | 11 | | |
| B III 6 | | | | | | | | | | | | | | 7 | 9 | | | | | | |
| B III 7 | | | | | | | | | | | | | | 7 | 7 | | | | | | |
| B III 8 | | | | | | | | | | | | | | | | | | | | | |
| B III 9 | | | | | | | | | | | | | | | | | | | | | |
| B IV 1 | 5 | | 5 | | | | | | | | | | | | | | | | | | |
| B IV 2 | | | | | | | | | | | | | | | | | | | | | |
| B IV 3 | | | | | | | | | | | | | | | | | | | | | |
| B IV 4 | | | | | | | | | | | | | | | | | | | | | |
| B IV 5 | | | | | | | | | | | | | | | | | | | | | |
| B IV 6 | | | | | | | | | | | | | | | | | | | | | |
| B V 1 | 7 | 7 | 7 | 8 | | | 7 | | 8 | | 7 | | | 7 | 7 | 7 | 7 | 9 | 9 | | 7 |
| B V 2 | 6 | 6 | 6 | 6 | | | 8 | | 6 | | 8 | | | 7 | 7 | 7 | 6 | 9 | 9 | | 6 |
| B V 3 | | | | | | | | | | | | | 5 | | | | | | | 3 | |
| B V 4 | | | | | | | | | | | | | 5 | | | | | | | 2 | |
| B V 5 | | | | | | | | | | | | | 4 | | | | | | | 3 | |
| B V 6 | | | | | | | | | | | | | | | | | | | | 3 | |
| B V 7 | | | | | | | | | | | | | | | | | | | | | 5 |
| B V 8 | | | | | | | | 4 | | | | 4 | | 7 | 6 | 4 | 5 | | | | |
| B V 9 | | | | | | | | 4 | | | | 4 | | | 5 | | 5 | | | | 5 |
| B V 10 | | | | | | | | 5 | | | | 5 | | | | | 4 | | | | 4<br>4 |

Tabelle 5: Prozentuale Zusammensetzung der Flüssigkristallmischungen entsprechend den Beispielen 22 bis 47 in Bezug auf Komponenten der Gruppen B VI bis C 10

| Verbindung | Beispiel 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|---|---|---|---|---|---|---|---|---|---|
| B VI 1 | 9 | 8 | 8 | 9 | 8 | 8 | 8 | 8 | | 9 | 8 | | | | | | 8 | 8 | | | | | | 7 | 7 | 8 |
| B VI 2 | 8 | 8 | | 8 | 8 | 8 | | | | 8 | | | | | | | 6 | 6 | | | | | | | | |
| B VIII 1 | 5 | | | 5 | 5 | | 5 | | | | | | | | | | | | | 5 | | | | | | |
| B VIII 2 | 5 | | | | 4 | | 5 | | | | | | | | | | | | | 5 | 5 | | | | 5 | |
| B VIII 3 | | | | | | | | | | | | | | | | | | | | | | | | | | |
| B VIII 4 | | | | | | | | | | | | | | | | | | | | | | | 5 | | 5 | |
| B VIII 5 | | | | | | | | | | | | | | | | | | | | | | | | | 5 | |
| B VIII 6 | | | | | | | | | | | | | | | | | | | | | | | | | 4 | |
| B VIII 7 | | | | | | | | | | | | | | | | | | | | | | | | | 4 | |
| B VIII 8 | | | | | | | | | | | | | | | | | | | | | | | 5 | 5 | | |
| B VIII 9 | | | | | | | | | | | | | | | | | | | | | | | 4 | 5 | | |
| B VIII 10 | | | | | | | | | | | | | | | | | | | | | | | | 5 | | |
| B VIII 11 | | | | | | | | | | | | | | | | | | | | | | | 4 | | | |
| C 1 | | | | | | 7 | | | 15 | 10 | 10 | 15 | 12 | | | | 10 | 12 | | | | | | | | |
| C 2 | 15 | 15 | 15 | 15 | 15 | 13 | 14 | 15 | 22 | 20 | 20 | 22 | 13 | | 20 | | 20 | 20 | 20 | | 15 | | | 13 | 10 | 17 |
| C 3 | | | | | | | | | 14 | | | 17 | 11 | | 4 | | | | 10 | | | | | | | |
| C 4 | | 15 | 15 | | 15 | | | 15 | 10 | 7 | 10 | | | | | | 10 | 13 | 10 | | | | | 10 | | |
| C 5 | 14 | | | 14 | | | 14 | | | 17 | | | | | | | | | | | | | | | | 11 |
| C 6 | | | | | | | | | | | | | | | | | | | | | | | | | | |
| C 7 | | | | | | | | | | | | 7 | | | | | | | | | | | | | | |
| C 8 | | | | | | 3 | | | | | | | | | | | | | | | | | | | | |
| C 9 | | | | | | 7 | | | | | | | | | | | | | | | | | | | | |
| C 10 | | | | | | | | | | | | | | | | | | | | | | | | | | |

Tabelle 6: Prozentuale Zusammensetzung der Flüssigkristallmischungen entsprechend den Beispielen 48 bis 77 in Bezug auf Komponenten der Gruppen B VI bis C 10

| Verbindung / Beispiel | 48 | 49 | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 |
|---|---|---|---|---|---|---|---|---|---|---|---|---|---|---|---|---|---|---|---|---|---|---|---|---|---|---|---|---|---|---|
| B VI 1 | 9 | 8 | 8 | 8 | 9 | 9 | | | 10 | 10 | 10 | 9 | 9 | 8 | 7 | 7 | | | | 10 | | | | 9 | | | | | | |
| B VI 2 | | | | | 8 | 8 | | | 9 | 9 | 9 | | 8 | 7 | 7 | 7 | | | | | | | | | | | | | | |
| B VIII 1 | | | 6 | 5 | | | 7 | 7 | | | | 7 | | | | | 7 | 7 | 7 | 6 | 7 | 7 | | 7 | 6 | | | 6 | | |
| B VIII 2 | | | 6 | 5 | | | 7 | 7 | | | | 7 | | | | | 7 | 7 | 7 | 7 | 7 | 7 | | 7 | 7 | | | 6 | | |
| B VIII 3 | | | 7 | | | | | | | | | 7 | | | | | | | | 7 | | | | 7 | | | | | | |
| B VIII 4 | | | 7 | 5 | | | 7 | 7 | | | | 7 | | | | | 7 | 7 | 7 | 7 | 7 | 7 | | 7 | 7 | | | 7 | | |
| B VIII 5 | | | | | | | | | | | | | | | | | | | | | | | | | | | | | | |
| B VIII 6 | | | | | | | | | | | | | | | | | | | | | | | | | | | | | | |
| B VIII 7 | | | | | | | | | | | | | | | | | | | | | | | | | | | | | | |
| B VIII 8 | | | | | | | | | | | | | | | 5 | 5 | | | | | | | | | | | | | | |
| B VIII 9 | | | | | | 5 | | | | | 5 | | | | 5 | 5 | | | | | | | | | | | | | | |
| B VIII 10 | | | | | | 4 | | | | | 5 | | | | 5 | 5 | | | | | | | | | | | | | | |
| B VIII 11 | | | | | | | | | | | | | | | | | | | | | | | | | | | | | | |
| C 1 | | | | | | | | | | | | | | | | | | | | | | | | | | | | | | |
| C 2 | | | | 10 | 14 | 14 | 18 | 23 | 15 | 15 | 15 | 10 | 19 | 19 | 15 | 15 | 18 | 23 | | | 15 | | | 10 | 18 | 18 | 15 | | | 16 |
| C 3 | | | | | | | 5 | | | | | | | | | | 5 | | | | | | | | | | | | | |
| C 4 | | | | | | | | | | | | 15 | | | 15 | 12 | | | | | | | | | 6 | | 10 | | | |
| C 5 | | | | | | | | | | | | | 11 | 11 | | | | | | | | | | | | | | | | |
| C 6 | | | | | | | | | | | | | | | | | | | | | | | | | | | | | | |
| C 7 | | | | | | | | | | | | | | | | | | | | | | | | | | | | | | |
| C 8 | 10 | 10 | | | | | | | | | | | | | | | | | | | | | | | | | | | | |
| C 9 | 10 | 10 | | | | | | | | | | | | | | | | | | | | | | | | | | | | |
| C 10 | | | | | | | | | | | | | | | | | | | | | | | | | | | | 8 | 8 | 8 |

Tabelle 7: Prozentuale Zusammensetzung der Flüssigkristallmischungen entsprechend den Beispielen 78 bis 108 in Bezug auf Komponenten der Gruppen B VI bis C 10

| Verbindung / Beispiel | 78 | 79 | 80 | 81 | 82 | 83 | 84 | 85 | 86 | 87 | 88 | 89 | 90 | 91 | 92 | 93 |
|---|---|---|---|---|---|---|---|---|---|---|---|---|---|---|---|---|
| B VI 1 | 9 | 8.1 | | 11 | 11 | 10 | 10 | 7 | | 8 | 7 | 10 | | | | |
| B VI 2 | | | | 11 | 11 | 10 | 10 | | | | | 10 | | | | |
| B VIII 1 | 7 | 6.3 | | | | | | | | | | | | | | |
| B VIII 2 | 7 | 6.3 | | | | | | | | | | | | | | |
| B VIII 3 | 7 | 6.3 | | | | | | | | | | | | | | |
| B VIII 4 | 7 | 6.3 | | | | | | | | | | | | | | |
| B VIII 5 | | | | | | | | | | | | | | | | |
| B V III 6 | | | | | | | | | | | | | | | | |
| B VIII 7 | | | | | | | | | | | | | | | | |
| B VIII 8 | | | | | | | | | | | | | | | | |
| B VIII 9 | | | | | | | | | | | | | | | | |
| B VIII 10 | | | | | | | | | | | | | | | | |
| B VIII 11 | | | | | | | | | | | | | | | | |
| C 1 | | | | | | | | | | | | | | | | |
| C 2 | 10 | 10 | | 12 | | 12 | 12 | 12 | 12 | 12 | 12 | 12 | 12 | 10 | 10 | 10 |
| C 3 | | | | 8 | 16 | 8 | 10 | 11 | 11 | 11 | 11 | 10 | 11 | 10 | 9 | 9 |
| C 4 | | | | 10 | 14 | 10 | 8 | 7 | 7 | 7 | 7 | 7 | 7 | 7 | 7 | 7 |
| C 5 | | | | | | | | | | | | | | | | |
| C 6 | | | | | | | | | | | | | | | | |
| C 7 | | | | | | | | | | | | | | | | |
| C 8 | | | | | | | | | | | | | | | | |
| C 9 | | | | | | | | | | | | | | | | |
| C 10 | | | | | | | | | | | | | | | | |

| Verbindung / Beispiel | 94 | 95 | 96 | 97 | 98 | 99 | 100 | 101 | 102 | 103 | 104 | 105 | 106 | 107 | 108 |
|---|---|---|---|---|---|---|---|---|---|---|---|---|---|---|---|
| B VI 1 | | | | 10 | 11 | 11 | | | | | | | | | 10 |
| B VI 2 | | | | 10 | 11 | | | | | | | | | | |
| B VIII 1 | | | | | | | | | | | | | | | |
| B VIII 2 | | | | | | | | | | | | | | | |
| B VIII 3 | | | | | | | | | | | | | | | |
| B VIII 4 | | | | | | | | | | | | | | | |
| B VIII 5 | | | | | | | | | | | | | | | |
| B V III 6 | | | | | | | | | | | | | | | |
| B VIII 7 | | | | | | | | | | | | | | | |
| B VIII 8 | | | | | | | | | | | | | | | |
| B VIII 9 | | | | | | | | | | | | | | | |
| B VIII 10 | | | | | | | | | | | | | | | |
| B VIII 11 | | | | | | | | | | | | | | | |
| C 1 | | | | | | | | | | | | | | | |
| C 2 | 10 | 10 | 8 | 10 | 20 | 9 | 9 | 19 | 9 | 9 | 11 | 10 | 10 | 12 | 12 |
| C 3 | 9 | 9 | 9 | | | 7 | 12 | 13 | 12 | 12 | 12 | 13 | 13 | 13 | 10 |
| C 4 | 7 | 6 | 6 | | | 3 | 7 | | 7 | 7 | 7 | 8 | 8 | 8 | 5 |
| C 5 | | | | | | | | | | | | | | | |
| C 6 | | | | | | | | | | | | | | | |
| C 7 | | | | | | | | | | | | | | | |
| C 8 | | | | | | | | | | | | | | | |
| C 9 | | | | | | | | | | | | | | | |
| C 10 | | | | | | | | | | | | | | | |

Tabelle 8: Prozentuale Zusammensetzung der Flüssigkristallmischungen entsprechend den Beispielen 109 bis 129 in Bezug auf Komponenten der Gruppen B VI bis C 10

| Verbindung \| Beispiel | 109 | 110 | 111 | 112 | 113 | 114 | 115 | 116 | 117 | 118 | 119 | 120 | 121 | 122 | 123 | 124 | 125 | 126 | 127 | 128 | 129 |
|---|---|---|---|---|---|---|---|---|---|---|---|---|---|---|---|---|---|---|---|---|---|
| B VI 1 | 10 | 10 | 10 | | | | | | | | | | | 10 | 10 | | 10 | | | 11 | 10 |
| B VI 2 | | | | | | | | | | | | | | 10 | 10 | | 10 | | | 11 | 10 |
| B VIII 1 | | | | | | | | | | | | | | | | | | | | | |
| B VIII 2 | | | | | | | | | | | | | | | | | | | | | |
| B VIII 3 | | | | | | | | | | | | | | | | | | | | | |
| B VIII 4 | | | | | | | | | | | | | | | | | | | | | |
| B VIII 5 | | | | | | | | | | | | | | | | | | | | | |
| B VIII 6 | | | | | | | | | | | | | | | | | | | | | |
| B VIII 7 | | | | | | | | | | | | | | | | | | | | | |
| B VIII 8 | | | | | | | | | | | | | | | | | | | | | |
| B VIII 9 | | | | | | | | | | | | | | | | | | | | | |
| B VIII 10 | | | | | | | | | | | | | | | | | | | | | |
| B VIII 11 | | | | | | | | | | | | | | | | | | | | | |
| C 1 | | | | | | | | | | | | | 5 | | | | | | | | |
| C 2 | 12 | 12 | 13 | 10 | 14 | 17 | 18 | 16 | 10 | 17 | 18 | 16 | 10 | 12 | 12 | 8 | 10 | 8 | 10 | 20 | 10 |
| C 3 | 10 | 10 | 10 | 14 | 11 | | | | 14 | | | | | 8 | 10 | 15 | | 12 | 17 | | |
| C 4 | 5 | 5 | 8 | 10 | 7 | | 6 | | 10 | | 6 | | | 10 | 8 | | | 6 | | | |
| C 5 | | | | | | | | | | | | | | | | | | | | | |
| C 6 | | | | | | | | | | | | | | | | | | | | | |
| C 7 | | | | | | | | | | | | | | | | | | | | | |
| C 8 | | | | | | | | | | | | | | | | | | | | | |
| C 9 | | | | | | | | | | | | | | | | | | | | | |
| C 10 | | | | | | | | | | | | | | | | | | | | | |

Tabelle 9: Prozentuale Zusammensetzung der Flüssigkristallmischungen entsprechend den Beispielen 22 bis 47 in Bezug auf Komponenten der Gruppen C 11 bis H

| Verbindung | Beispiel 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|---|---|---|---|---|---|---|---|---|---|
| C 11 | | | | | | | | | | | | | | | | | | | | | | | | | | |
| C 12 | | | | | | | | | | | | | | | | | | | | | | | | | | |
| C 13 | | | | | | | | | | | | | | | | | | | | | | | | | 15 | |
| C 14 | | | 8 | | | | 8 | 8 | | | | 11 | 10 | | 6 | | | | | | | | | 9 | 10 | 9 |
| C 15 | | | | | | | | | | | 3 | | | 2 | | 2 | 3 | | | 4 | 4 | 4 | 2 | | | |
| C 16 | | | | | | | | | | | 4 | | | 3 | | 3 | 4 | | | 5 | 5 | 5 | 3 | | | |
| C 17 | | | | | | | | | | | | | | 8 | | 8 | | | | 9 | 12 | 12 | 9 | | | |
| C 18 | | | | | | | | | | | | | | | | | | | | 6 | 6 | 6 | 9 | | | |
| C 19 | | | | | | | | | 4 | | | 4 | | 7 | | 6 | | 5 | | 6 | 4 | 5 | | | | |
| C 20 | | | | | | | | | | | | | | 7 | | | | | | 7 | 5 | 7 | | | | |
| C 21 | | | | | | | | | | | | | | 6 | | | | | | 7 | 3 | 4 | | | | |
| C 22 | | | | | | | | | | | | | | | | | | | | | | | | | | |
| C 23 | | | | | | | | | | | | | | | | | | | | | | | | | | |
| C 24 | | | | | | | | | | | | | | | | | | | | | | | | | | |
| F 1 | | | | | | | | | | | | | | | | | | | | | | | | | | |
| F 2 | | | | | | | | | | | | | | | | | | | | | | | | | | |
| F 3 | | | | | | | | | | | | | | | | | | | | | | | | | | |
| H 1 | | | | | | | | | | | | | | | | | | | 3 | | | | | | | 5 |
| H 2 | | | | | | | | | | | | | | | | | | | 4 | | | | | | | 5 |
| H 3 | | | | | | | | | | | | | | | | | | | | | | | | | | 5 |
| H 4 | | | | | | | | | | | | | | | | | | | 4 | | | | | | | |
| H 5 | | | | | | | | | | | | | | | | | | | 4 | | | | | | | |
| H 6 | | | | | | | | | | | | | 4 | | | 6 | | | 5 | | | 3 | | | | |
| H 7 | | | | | | | | | | | | | 3 | | | 5 | | | 4 | | | 4 | | | | |
| H 8 | | | | | | | | | | | | | | | | 7 | | | 6 | | | 3 | | | | |

Tabelle 10: Prozentuale Zusammensetzung der Flüssigkristallmischungen entsprechend den Beispielen 48 bis 77 in Bezug auf Komponenten der Gruppen C 11 bis H

| Verbindung \ Beispiel | 48 | 49 | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 |
|---|---|---|---|---|---|---|---|---|---|---|---|---|---|---|---|---|---|---|---|---|---|---|---|---|---|---|---|---|---|---|
| C 11 | | | | | | | | | | | | | | | | | | | | | | | | | | | | 8 | 8 | |
| C 12 | | | | | | | | | | | | | | | | | | | | | | | | | | | | 8 | 8 | 8 |
| C 13 | | 10 | | 15 | 13 | 13 | 10 | 10 | 15 | 15 | 15 | | | | | | 10 | 10 | | | | 10 | | 15 | | | | | | |
| C 14 | 10 | 10 | | 9 | | | | | | | | 10 | | | | | | | | | | | | 10 | | | | | | |
| C 15 | | | | | | | | | | | | | | | | | | | | | | 3 | | | | | | | | |
| C 16 | | | | | | | | | | | | | | | | | | | 3 | | | 3 | 3 | | | 3 | | | | |
| C 17 | | | | | | | | | | | | | | | | | | | | | | 4 | | | | 4 | | | | |
| C 18 | | | | | | | | | | | | | | | | | | | | | | | | | | | | | | |
| C 19 | | | | | | | | | | | | | | | | | | | | | | 4 | | | | | | | | |
| C 20 | | | | | | | | | | | | | | | | | | | | | | | | | | | | | | |
| C 21 | | | | | | | | | | | | | | | | | | | | | | | | | | | | | | |
| C 22 | | | 4 | | | | | | | | | | | | | | | | 4 | 4 | 4 | | 4 | | | | | | | |
| C 23 | | | 4 | | | | | | | | | | | | | | | | 5 | 4 | 5 | | 5 | | | | | | | |
| C 24 | | | 5 | | | | | | | | | | | | | | | | 5 | 5 | | | 5 | | | | | | | |
| F 1 | | | | | | | | | | | | | | | | | | | | | | | | | | | | | | |
| F 2 | | | | | | | | | | | | | | | | | | | | | | | | | | | | | | |
| F 3 | | | | | | | | | | | | | | | | | | | | | | | | | | | | | | |
| H 1 | | | | 5 | 5 | | | | | 5 | | | 5 | 5 | | | | | | | | | 7 | | | | | | | |
| H 2 | | | | 5 | 4 | | | | | 5 | | | 5 | 5 | | | | | | | | | 7 | | | | | | | |
| H 3 | | | | 5 | | | | | | | | | 5 | 5 | | | | | | | | | | | | | | | | |
| H 4 | | | | | | | | | | | | | | | | | | | | | | | | | | | | | | |
| H 5 | | | | | | | | | | | | | | | | | | | | | | | 3 | | | | | | | |
| H 6 | | | | | | | | | | | | | | | | | | | | | | | | | | | | | | |
| H 7 | | | | | | | | | | | | | | | | | | | | | | | | | | | | | | |
| H 8 | | | | | | | | | | | | | | | | | | | | | | | | | | | | | | |

Tabelle 11: Prozentuale Zusammensetzung der Flüssigkristallmischungen entsprechend den Beispielen 78 bis 108 in Bezug auf Komponenten der Gruppen C 11 bis H

| Verbindung / Beispiel | 78 | 79 | 80 | 81 | 82 | 83 | 84 | 85 | 86 | 87 | 88 | 89 | 90 | 91 | 92 | 93 | 94 | 95 | 96 | 97 | 98 | 99 | 100 | 101 | 102 | 103 | 104 | 105 | 106 | 107 | 108 |
|---|---|---|---|---|---|---|---|---|---|---|---|---|---|---|---|---|---|---|---|---|---|---|---|---|---|---|---|---|---|---|---|
| C 11 | | | | | | | | | | | | | | | | | | | | | | | | | | | | | | | |
| C 12 | | | | | | | | | | | | | | | | | | | | | | | | | | | | | | | |
| C 13 | 15 | | | | | | | | | | | | | | | | | | | | | | | | | | | | | | |
| C 14 | 10 | 9 | | | | | | | | | | | | | | | | | | | | | | | | | | | | | |
| C 15 | | 2.7 | 3 | | | | | | | | | | | | | | | | | | | | | | | | | | | | |
| C 16 | | 2.7 | 4 | | | | | | | | | | | | | | | | | | | | | | | | | | | | |
| C 17 | | | 7 | | | | | | | | | | | | | | | | | | | | | | | | | | | | |
| C 18 | | | 4 | | | | | | | | | | | | | | | | | | | | | | | | | | | | |
| C 19 | | 5.4 | 5 | | | | | | | | | | | | | | | | | | | | | | | | | | | | |
| C 20 | | | 5 | | | | | | | | | | | | | | | | | | | | | | | | | | | | |
| C 21 | | | 4 | | | | | | | | | | | | | | | | | | | | | | | | | | | | |
| C 22 | | | | | | | | | | | | | | | | | | | | | | | | | | | | | | | |
| C 23 | | | | | | | | | | | | | | | | | | | | | | | | | | | | | | | |
| C 24 | | | | | | | | | | | | | | | | | | | | | | | | | | | | | | | |
| F 1 | | | | | | | | | | | | | | | | | | | | 11 | 10 | | | | | | | | | | |
| F 2 | | | | | | | | | | | | | | | | | | | | 9 | | | | | | | | | | | |
| F 3 | | | | | | | | | | | | | | | | | | | | 8 | 10 | | | | | | | | | | |
| H 1 | | | | | | | | | | | | | | | | | | | | | | | | | | | | | | | |
| H 2 | | | | | | | | | | | | | | | | | | | | | | | | | | | | | | | |
| H 3 | | | | | | | | | | | | | | | | | | | | | | | | | | | | | | | |
| H 4 | | | | | | | | | | | | | | | | | | | | | | | | | | | | | | | |
| H 5 | | | | | | | | | | | | | | | | | | | | | | | | | | | | | | | |
| H 6 | | | 3 | | | | | | | | | | | | | | | | | | | | | | | | | | | | |
| H 7 | | | 4 | | | | | | | | | | | | | | | | | | | | | | | | | | | | |
| H 8 | | | 4 | | | | | | | | | | | | | | | | | | | | | | | | | | | | |

Tabelle 12: Prozentuale Zusammensetzung der Flüssigkristallmischungen entsprechend den Beispielen 109 bis 129 in Bezug auf Komponenten der Gruppen C 11 bis H

| Verbindung / Beispiel | 109 | 110 | 111 | 112 | 113 | 114 | 115 | 116 | 117 | 118 | 119 | 120 | 121 | 122 | 123 | 124 | 125 | 126 | 127 | 128 | 129 |
|---|---|---|---|---|---|---|---|---|---|---|---|---|---|---|---|---|---|---|---|---|---|
| C 11 | | | | | | | | | | | | | | | | | | | | | |
| C 12 | | | | | | | | | | | | | | | | | | | | | |
| C 13 | | | | | | | | | | | | | | | | | | | | | |
| C 14 | | | | | | | | | | | | | 6 | | | | | | | | |
| C 15 | | | | | | 4 | 4 | 4 | | 4 | 4 | 4 | 2 | | | | | | | | |
| C 16 | | | | | | 5 | 4 | 4 | | 5 | 4 | 4 | 3 | | | | | | | | |
| C 17 | | | | | | | | | | | | | 5 | | | | | | | | |
| C 18 | | | | | | | | | | | | | 5 | | | | | | | | |
| C 19 | | | | | | | | | | | | | | | | | | | | | |
| C 20 | | | | | | | | | | | | | | | | | | | | | |
| C 21 | | | | | | | | | | | | | | | | | | | | | |
| C 22 | | | | | | | | | | | | | | | | | | | | | |
| C 23 | | | | | | | | | | | | | | | | | | | | | |
| C 24 | | | | | | | | | | | | | | | | | | | | | |
| F 1 | | | | | | | | | | | | | | | | | 11 | | | 10 | 11 |
| F 2 | | | | | | | | | | | | | | | | | 9 | | | | 9 |
| F 3 | | | | | | | | | | | | | | | | | 8 | | | 10 | 8 |
| H 1 | | | | | | | | | | | | | | | | | | | | | |
| H 2 | | | | | | | | | | | | | | | | | | | | | |
| H 3 | | | | | | | | | | | | | | | | | | | | | |
| H 4 | | | | | | | | | | | | | | | | | | | | | |
| H 5 | | | | | | | | | | | | | | | | | | | | | |
| H 6 | | | | | | | | | | | | | | | | | | | | | |
| H 7 | | | | | | | | | | | | | | | | | | | | | |
| H 8 | | | | | | | | | | | | | | | | | | | | | |

Tabelle 13: Prozentuale Zusammensetzung der Flüssigkristallmischungen entsprechend den Beispielen 22 bis 47 in Bezug auf Komponenten der Gruppen K und L

| Verbindung | Beispiel 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|---|---|---|---|---|---|---|---|---|---|
| K 1 | | | | | | | | | | | | | | | | | | | | | | | | | | |
| K 2 | | | | | | | | | | | | | | | | | | | | | | | | | | |
| K 3 | | | | | | | | | | | | | | | | | | | | | | | | | | |
| K 4 | | | | | | | | | | | | | | | | | | | | | | | | | | |
| K 5 | | | | | | | | | | | | | | | | | | | | | | | | | | |
| L 1 | | | | | | | | | | | | | | | | | | | | | | | | | | |
| L 2 | | | | | | | | | | | | | | | | | | | | | | | | | | |
| L 3 | | | | | | | | | | | | | | | | | | | | | | | | | | |
| L 4 | | | | | | | | | | | | | | | 5 | 4 | | | | 5 | 4 | | | | | |
| L 5 | | | | | | | | | | | | | | | 5 | 3 | | | | | 4 | 3 | | | | |
| L 6 | | | | | | | | | | | | | | | 5 | | | | | 4 | 2 | | | | | |

Tabelle 14: Prozentuale Zusammensetzung der Flüssigkristallmischungen entsprechend den Beispielen 48 bis 77 in Bezug auf Komponenten der Gruppen K und L

| Verbindung | Beispiel 48 | 49 | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 |
|---|---|---|---|---|---|---|---|---|---|---|---|---|---|---|---|---|---|---|---|---|---|---|---|---|---|---|---|---|---|---|
| K 1 | | | | | | | 6 | | | | | | | | | | 6 | | | | 10 | | 7 | | | 8 | 8 | | 9 | 8 |
| K 2 | | | | | | | 6 | | | | | | | | | | 6 | | | | | | 7 | | | 8 | 8 | | 8 | 8 |
| K 3 | | | | | | | | | | | | | | | | | | | | | | | | | | 7 | 7 | | 6 | |
| K 4 | | | | | | | | | | | | | | | | | | | | | | | | | | | | | | 9 |
| K 5 | | | | | | | | | | | | | | | | | | | | | | | | | | | | | | |
| L 1 | | | | | | | | 5 | | | | | | | | | | 5 | 5 | 4 | | 4 | | | 5 | | 4 | 4 | | |
| L 2 | | | | | | | | 5 | | | | | | | | | | 5 | 4 | 3 | | 4 | | | 5 | | 4 | 4 | | |
| L 3 | | | | | | | | | | | | | | | | | | | 4 | | | 4 | | | 6 | 5 | | 5 | | |
| L 4 | | | 4 | | | | | | | | | | | | | | | | | | | | | | | | | | | |
| L 5 | | | 4 | | | | | | | | | | | | | | | | | | | | | | | | | | | |
| L 6 | | | 4 | | | | | | | | | | | | | | | | | | | | | | | | | | | |

Tabelle 15: Prozentuale Zusammensetzung der Flüssigkristallmischungen entsprechend den Beispielen 78 bis 108 in Bezug auf Komponenten der Gruppen K und L

| Verbindung \ Beispiel | 78 | 79 | 80 | 81 | 82 | 83 | 84 | 85 | 86 | 87 | 88 | 89 | 90 | 91 | 92 | 93 | 94 | 95 | 96 | 97 | 98 | 99 | 100 | 101 | 102 | 103 | 104 | 105 | 106 | 107 | 108 |
|---|---|---|---|---|---|---|---|---|---|---|---|---|---|---|---|---|---|---|---|---|---|---|---|---|---|---|---|---|---|---|---|
| K 1 | | | | | | | | | | | | | | | | | | | | | | | | | | | | | | | |
| K 2 | | | | | | | | | | | | | | | | | | | | | | | | | | | | | | | |
| K 3 | | | | | | | | | | | | | | | | | | | | | | | | | | | | | | | |
| K 4 | | | | | | | | | | | | | | | | | | | | | | | | | | | | | | | |
| K 5 | | | 5 | | | | | | | | | | | | | | | | | | | | | | | | | | | | |
| L 1 | | | | | | | | | | | | | | | | | | | | | | | | | | | | | | | |
| L 2 | | | | | | | | | | | | | | | | | | | | | | | | | 3 | | | 3 | | | |
| L 3 | | | | | | | | | | | | | | | | | | | | | | | | | | | | | | | |
| L 4 | | | 5 | | | | | | | | | | | | | | | | | | 4 | | | | | | | | | | |
| L 5 | | | 5 | | | | | | | | | | | | | | | | | | 4 | | | | | | | | | | |
| L 6 | | | 5 | | | | | | | | | | | | | | | | | | | | | | | | | | | | |

Tabelle 16: Prozentuale Zusammensetzung der Flüssigkristallmischungen entsprechend den Beispielen 109 bis 129 in Bezug auf Komponenten der Gruppen K und L

| Verbindung / Beispiel | 109 | 110 | 111 | 112 | 113 | 114 | 115 | 116 | 117 | 118 | 119 | 120 | 121 | 122 | 123 | 124 | 125 | 126 | 127 | 128 | 129 |
|---|---|---|---|---|---|---|---|---|---|---|---|---|---|---|---|---|---|---|---|---|---|
| K 1 | | | | | | | | | | | | | | | | | | | | | |
| K 2 | | | | | | | | | | | | | | | | | | | | | |
| K 3 | | | | | | | | | | | | | | | | | | | | | |
| K 4 | | | | | | | | | | | | | | | | | | | | | |
| K 5 | | | | | | | | | | | | | | | | | | | | | |
| L 1 | | | | 5 | 5 | 6 | | | 5 | 6 | | | | | | | | | | | |
| L 2 | | | | 5 | 5 | 6 | | | 5 | 6 | | | | | | | | | | | |
| L 3 | | | | | 4 | | | | | | | | | | | | | | | | |
| L 4 | | | | | | | | | | | | | 4 | | | | | | | 4 | |
| L 5 | | | | | | | | | | | | | | | | | | | | 4 | |
| L 6 | | | | | | | | | | | | | | | | | | | | | |

Tabelle 17: Physikalische Daten zu den Beispielen 22 bis 129

| Beispiel | Klärpunkt (°C) | Viskosität bei 20° (mPa.S) | Δn | Schwellenspannung V (10, 0, 20) (Volt) | bevorzugte Anwendung |
|---|---|---|---|---|---|
| 22 | 79 | 16 | 0.1068 | 2.06 (1ST) | TFT |
| 23 | 76 | 15 | 0.0969 | 2.06 (1ST) | TFT |
| 24 | 82 | 17 | 0.1019 | 2.00 | TFT |
| 25 | 80 | 16 | 0.1019 | 1.98 (5.44) | TFT |
| 26 | 75 | 16 | 0.1043 | 2.05 (5.38) | TFT |
| 27 | 73 | 15 | 0.1059 | 1.89 (5.18) | TFT |
| 28 | 81 | 17 | 0.1106 | - | TFT |
| 29 | 82 | 17 | 0.1019 | - | TFT |
| 30 | 77 | 22 | 0.1147 | 1.82 (10.4) | STN |
| 31 | 84 | 21 | 0.1082 | 1.96 (5.12) | OMI |
| 32 | 77 | 20 | 0.1048 | 1.45 (5.31) | OMI |
| 33 | 79 | 25 | 0.1266 | 1.75 (9.81) | STN |
| 34 | 90 | 22 | 0.1108 | 1.99 (5.03) | OMI |
| 35 | 91 | 28 | 0.1003 | 1.34 (5.57) | OMI |
| 36 | 108 | 22 | 0.0999 | 2.42 (5.60) | TFT 2nd |
| 37 | 105 | 22 | 0.1447 | 2.30 (8.32) | GH |
| 38 | 80 | 19 | 0.1092 | 1.49 (5.07) | OMI |
| 39 | 83 | 20 | 0.1097 | 1.70 (5.02) | OMI |
| 40 | 82 | 18 | 0.1576 | 2.17 (2nd) | NTN |
| 41 | 99 | 41 | 0.1450 | 1.46 (2nd) | STN Low Duty |
| 42 | 87 | 37 | 0.1405 | 1.39 (2nd) | STN Low Duty |
| 43 | 89 | 34 | 0.1406 | 1.32 (2nd) | STN Low Duty |
| 44 | 64 | 31 | 0.1019 | 1.61 (5.51) | Low DN mpx |
| 45 | 86 | 19 | 0.1115 | 2.70 (2nd) | DSTN |
| 46 | 81 | 21 | 0.1310 | 2.68 (2nd) | DSTN |
| 47 | 82 | 16 | 0.1240 | 2.55 (2nd) | DSTN |
| 48 | 82 | 16 | 0.1181 | 2.70 (2nd) | DSTN |
| 49 | 81 | 16 | 0.1292 | 2.59 (2nd) | DSTN |
| 50 | 88 | 27 | 0.1355 | 2.71 (2nd) | DSTN |
| 51 | 80 | 18 | 0.1509 | 2.64 (2nd) | DSTN |
| 52 | 81 | 14 | 0.1226 | 2.81 | DSTN |
| 53 | 85 | 16 | 0.1144 | 2.83 | DSTN |
| 54 | 80 | 18 | 0.1339 | 2.75 (2nd) | DSTN |
| 55 | 78 | 17 | 0.1335 | 2.45 (2nd) | DSTN |
| 56 | 81 | 14 | 0.1072 | 2.29 | DSTN |

Tabelle 17: Physikalische Daten zu den Beispielen 22 bis 129

| Beispiel | Klärpunkt (°C) | Viskosität bei 20° (mPa.S) | Δn | Schwellenspannung V (10, 0, 20) (Volt) | bevorzugte Anwendung |
|---|---|---|---|---|---|
| 57 | 89 | 16 | 0.1271 | 2.82 (2nd) | DSTN |
| 58 | 93 | 18 | 0.1186 | 2.83 (2nd) | DSTN |
| 59 | 84 | 20 | 0.1250 | 2.59 | DSTN |
| 60 | 78 | - | - | - | DSTN |
| 61 | 76 | SW | - | - | DSTN |
| 62 | 80 | - | - | - | DSTN |
| 63 | 85 | SW | - | - | DSTN |
| 64 | 80 | 18 | 0.1339 | 2.75 (2nd) | DSTN High Response |
| 65 | 78 | 17 | 0.1335 | 2.45 (2nd) | TYPE |
| 66 | 81 | - | - | - | TYPE |
| 67 | 72 | 27 | 0.1480 | 2.53 | TYPE |
| 68 | 83 | 24 | 0.1313 | - | TYPE |
| 69 | 79 | 23 | 0.1366 | - | TYPE |
| 70 | 76 | SW | - | - | TYPE |
| 71 | 81 | 18 | 0.1387 | 2.64 | TYPE |
| 72 | 86 | 18 | 0.1251 | 2.708 | DSTN |
| 73 | 80 | 18 | 0.1180 | 2.273 | DSTN |
| 74 | 84 | 17 | 0.1167 | 2.705 | DSTN |
| 75 | 79 | 23 | 0.1189 | 2.43 (2nd) | DSTN |
| 76 | 85 | 20 | 0.1122 | 2.55 (2nd) | DSTN |
| 77 | 81 | 19 | 0.1219 | 2.29 | DSTN |
| 78 | 81 | 18 | 0.1387 | 2.64 | DSTN |
| 79 | 75 | 22 | 0.1241 | 2.21 (2nd) | DSTN |
| 80 | 128 | 40 | 0.1446 | 1.83 | STN |
| 81 | 110 | 23 | 0.0936 | 2.10 (1st) | TFT TV |
| 82 | 111 | 24 | 0.0933 | 2.06 (1st) | |
| 83 | 106 | 22 | 0.0934 | 2.02 (1st) | TFT |
| 84 | 105 | 22 | 0.0922 | 2.02 (1st) | TFT |
| 85 | 91 | 19 | 0.0939 | 2.03 (1st) | TFT TV |
| 86 | 91 | 19 | 0.0945 | 2.00 (1st) | TFT TV |
| 87 | 91 | 18 | 0.0929 | 2.08 (1st) | TFT |
| 88 | 89 | 18 | 0.0916 | 1.98 (1st) | TFT |
| 89 | 89 | 18 | 0.0916 | 1.98 (1st) | TFT |
| 90 | 90 | 18 | 0.0923 | 2.03 (1st) | TFT |
| 91 | 88 | 19 | 0.0903 | 2.07 (1st) | TFT |
| 92 | 87 | 17 | 0.0979 | 1.96 | TFT |
| 93 | 94 | 18 | 0.0914 | 2.17 (1st) | TFT TV |
| 94 | 87 | 17 | 0.0979 | 1.96 | TFT |

Tabelle 17: Physikalische Daten zu den Beispielen 22 bis 129

| Beispiel | Klärpunkt (°C) | Viskosität bei 20° (mPa.S) | Δn | Schwellenspannung V (10, 0, 20) (Volt) | bevorzugte Anwendung |
|---|---|---|---|---|---|
| 95 | 104 | 19 | 0.0985 | 2.18 | TFT |
| 96 | 88 | 17 | 0.0967 | 2.10 | TFT TV |
| 97 | 92 | 16 | 0.0812 | 2.11 | TFT |
| 98 | 88 | 17 | 0.0873 | 1.86 | TFT |
| 99 | 93 | - | 0.0950 | 2.27 | TFT TV |
| 100 | 90 | 18 | 0.0910 | 2.01 | TFT TV |
| 101 | 91 | 18 | 0.0901 | 1.88 | TFT TV |
| 102 | 93 | 18 | 0.0901 | 2.04 | TFT TV |
| 103 | 94 | 19 | 0.0871 | 2.04 | TFT TV |
| 104 | 82 | 18 | 0.0895 | 1.81 | TFT TV |
| 105 | 79 | 17 | 0.0856 | 1.80 | TFT TV |
| 106 | 80 | 16 | 0.0867 | 1.80 | TFT TV |
| 107 | 80 | 19 | 0.0865 | 1.67 | TFT TV |
| 108 | 81 | - | 0.0909 | 1.82 | TFT |
| 109 | 81 | 17 | 0.0845 | 1.83 | TFT TV USE |
| 110 | 83 | 17 | 0.0827 | 1.88 | TFT TV USE |
| 111 | 77 | 17 | 0.0858 | 1.74 | TFT TV USE |
| 112 | 83 | 19 | 0.0896 | 1.70 | |
| 113 | 84 | 19 | 0.0919 | 1.90 | |
| 114 | 87 | 19 | 0.0949 | 1.70 | |
| 115 | 80 | 19 | 0.0902 | 1.54 | |
| 116 | 86 | 19 | 0.086 | 1.78 | |
| 117 | 82 | 19 | 0.0896 | 1.70 | TFT |
| 118 | 82 | 19 | 0.0949 | 1.70 | TFT |
| 119 | 79 | 19 | 0.0902 | 1.54 | TFT |
| 120 | 86 | 19 | 0.086 | 1.78 | TFT |
| 121 | 90 | 23 | 0.0959 | 1.55 | OMI |
| 122 | 106 | 22 | 0.0934 | 2.02 | TFT TV |
| 123 | 105 | 22 | 0.0922 | 2.02 | TFT TV |
| 124 | 90 | 19 | 0.0816 | 2.14 | TFT TV |
| 125 | 92 | 16 | 0.0812 | 2.11 | TFT |
| 126 | 90 | 19 | 0.0815 | 2.03 | TFT TV |
| 127 | 90 | 19 | 0.0835 | 1.95 | TFT TV |
| 128 | 88 | 17 | 0.0873 | 1.86 | TFT |
| 129 | 92 | 16 | 0.0812 | 2.11 | TFT |

Die folgenden Beispiele betreffen weitere erfindungsgemäße Mischungen:

Beispiel 130

Eine Flüssigkristallmischung bestehend aus einer Basismischung enthaltend
21 % p-trans-4-Propylcyclohexylbenzonitril,
5 % trans-1-p-Methoxyphenyl-4-propylcyclohexan,
6 % 2-p-Ethylphenyl-5-propylpyrimidin,
6 % 2-p-Propylphenyl-5-propylpyrimidin,
6 % 2-p-Propylphenyl-5-pentylpyrimidin,
4 % 2-p-Ethylphenyl-5-heptylpyrimidin,
4 % 1-(trans-4-Propylcyclohexyl)-2-[trans-4-(p-propylphenyl)-cyclohexyl]-ethan,
4 % 1-(trans-4-Pentylcyclohexyl)-2-[trans-4-(p-propylphenyl)-cyclohexyl]-ethan,
4 % p-[trans-4-(trans-4-Propylcyclohexyl)-cyclohexyl]-ethylbenzol,
5 % 1,4-Bis-(trans-4-Propylcyclohexyl)-benzol,
5 % 4-Butyl-4'-propyl-tolan,
5 % 4-Pentyl-4'-propyl-tolan,
5 % 4-Methoxy-4'-ethyl-tolan,
7 % 4-(trans-4-Propylcyclohexyl)-4'-methoxy-tolan,
6 % 4-(trans-4-Propylcylcohexyl)-4'-ethoxy-tolan und
7 % 4-(trans-4-Propylcyclohexyl)-4'-propoxy-tolan
und einer geeigneten chiralen Komponente (z.B. 0,7 % p-(p-n-Hexylbenzoyloxy)-benzoesäure-2-octylester) zeigt kurze Schaltzeiten.

Beispiel 131

Man stellt eine Flüssigkristallmischung her bestehend aus:
13 % p-trans-4-Propylcyclohexyl-benzonitril,
14,3 % 1-(trans-4-Propylcyclohexyl)-2-(p-cyanphenyl)-ethan,
12 % 1-(trans-4-Pentylcyclohexyl)-2-(p-cyanphenyl)-ethan,
7 % 5-Propyl-2-(trans-4-ethylcyclohexyl)-trans-1,3-dioxan,
12 % 4-(trans-4-Propylcyclohexyl)-1-Propylcyclohex-1-en,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
5 % 1-[trans-4-(trans-4-Propylcyclohexyl)-cyclohexyl]-2-(3,4-difluorphenyl)-ethan,
5 % 1-(trans-4-Propylcyclohexyl)-2-[trans-4-(3-fluor-4-cyanphenyl)-cyclohexyl]-ethan,
4 % 4,4'-Bis-(trans-4-propylcyclohexyl)-biphenyl,
3 % 4,4'-Bis-(trans-4-pentylcyclohexyl)-biphenyl und
0,7 % optisch aktiver p-(p-n-Hexylbenzoyloxy)-benzoesäure-2-octylester.

Beispiel 132

Man stellt eine Flüssigkristallmischung her bestehend aus:
5 % p-trans-4-Propylcyclohexyl-benzonitril,
5 % p-trans-4-Ethylcyclohexyl-benzonitril,
14,3 % 1-(trans-4-Propylcyclohexyl)-2-(p-cyanphenyl)-ethan,
12 % 1-(trans-4-Pentylcyclohexy)-2-(p-cyanphenyl)-ethan,
10 % trans-1-p-Methoxyphenyl-4-propylcyclohexan,
5 % 1,2-Bis-(trans-4-Propylcyclohexyl)-ethan,
8 % 1-[trans-4-(trans-4-Propylcyclohexyl)-cyclohexyl]-2-(p-methylphenyl)-ethan,
8 % 1-[trans-4-(trans-4-Propylcyclohexyl)-cyclohexyl]-2-(p-ethylphenyl)-ethan
8 % 1-[trans-4-(trans-4-Propylcyclohexyl)-cyclohexyl]-2-(p-propylphenyl)-ethan
8 % 1-[trans-4-(trans-4-Propylcyclohexyl)-cyclohexyl]-2-(p-pentylphenyl)-ethan,
8 % 1-[trans-4-(trans-4-Propylcyclohexyl)-cyclohexyl]-3,4-difluorbenzol
8 % 4-(trans-4-Propylcyclohexyl)-3'-fluor-4'-cyanbiphenyl und
0,7 % optisch aktiver p-(p-n-Hexylbenzoyloxy)-benzoesäure-2-octylester

Beispiel 133

Man stellt eine Flüssigkristallmischung her bestehend aus:
15 % p-trans-4-Propylcyclohexylbenzonitril,
11 % p-trans-4-Butylcyclohexylbenzonitril,
4 % trans-1-p-Methoxyphenyl-4-propylcyclohexan,
14 % trans,trans-4-Methoxy-4'-pentylcyclohexylcyclohexan,
14 % trans,trans-4-Ethoxy-4'-pentylcyclohexylcyclohexan,
6 % 1-[trans-4-(trans-4-Propylcyclohexyl)-cyclohexyl]-2-(p-methylphenyl)-ethan,
6 % 1-[trans-4-(trans-4-Propylcyclohexyl)-cyclohexyl]-2-(p-ethylphenyl)-ethan,
6 % 1-[trans-4-(trans-4-Propylcyclohexyl)-cyclohexyl]-2-(p-propylphenyl)-ethan,
6 % 1-[trans-4-(trans-4-Propylcyclohexyl)-cyclohexyl]-2-(p-pentylphenyl)-ethan,
6 % 1-[trans-4-(trans-4-Propylcyclohexyl)-cyclohexyl]-2-(p-cyanphenyl)-ethan,
6 % 1-[trans-4-(trans-4-Propylcyclohexyl)-cyclohexyl]-2-(p-fluorphenyl)-ethan,
3 % 4,4'-Bis-(trans-4-propylcyclohexyl)-biphenyl und
3 % 2-(p-Pentylphenyl)-5-propyl-pyridin.

In den folgenden Tabellen sind Eigenschaften und Zusammensetzung der Mischungen der folgenden Beispiele angegeben, wobei die einzelnen Verbindungen wie folgt codiert sind:

| | |
|---|---|
| ECCP-31: | 1-[trans-4-(trans-4-Propylcyclohexyl)-cyclohexyl]-(2-p-methylphenyl)-ethan |
| ECCP-32: | 1-[trans-4-(trans-4-Propylcyclohexyl)-cyclohexyl]-(2-p-ethylphenyl)-ethan |
| ECCP-33: | 1-[trans-4-(trans-4-Propylcyclohexyl)-cyclohexyl]-(2-p-propylphenyl)-ethan |
| ECCP-34 | 1-[trans-4-(trans-4-Propylcyclohexyl)-cyclohexyl]-(2-p-butylphenyl)-ethan |
| ECCP-35: | 1-[trans-4-(trans-4-Propylcyclohexyl)-cyclohexyl]-(2-p-pentylphenyl)-ethan |
| CCH-301: | trans,trans-4-Propyl-4'-methoxy-cyclohexylcyclohexan |
| CCH-302: | trans,trans-4-Propyl-4'-ethoxy-cyclohexylcyclohexan |
| CCH-303: | trans,trans-4-Propyl-4'-propoxy-cyclohexylcyclohexan |
| CCH-501: | trans,trans-4-Pentyl-4'-methoxy-cyclohexylcyclohexan |
| CCH-502: | trans,trans-4-Pentyl-4'-ethoxy-cyclohexylcyclohexan |
| C-33: | trans,trans-4-Propyl-4'-butyryloxy-cyclohexylcyclohexan |
| C-35: | trans,trans-4-Propyl-4'-hexanoyloxy-cyclohexylcyclohexan |
| OS-33: | trans-4-Propylcyclohexylcarbonsäure-(trans-4-propylcyclohexylester) |
| OS-53: | trans-4-Pentylcyclohexylcarbonsäure-(trans-4-propylcyclohexylester) |
| PCH-301: | trans-1-p-Methoxyphenyl-4-propylcyclohexan |
| PCH-302: | trans-1-p-Ethoxyphenyl-4-propylcyclohexan |
| PCH-304: | trans-1-p-Butoxyphenyl-4-propylcyclohexan |
| PCH-501: | trans-1-p-Methoxyphenyl-4-propylcyclohexan |
| PCH-53: | trans-1-p-Propylphenyl-4-pentylcyclohexan |
| PCH-52: | trans-1-p-Ethylphenyl-4-pentylcyclohexan |
| CP-3F: | trans,trans-4-Propylcyclohexylcyclohexan-4'-carbonsäure-(p-fluorphenylester) |
| CP-5F: | trans,trans-4-Pentylcyclohexylcyclohexan-4'-carbonsäure-(p-fluorphenylester) |
| CH-33: | trans,trans-4-Propylcyclohexylcyclohexan-4'-carbonsäure-(trans-4-propylcyclohexylester) |
| CH-35: | trans,trans-4-Propylcyclohexylcyclohexan-4'-carbonsäure-(trans-4-pentylcyclohexylester) |
| CH-43: | trans,trans-4-Butylcyclohexylcyclohexan-4'-carbonsäure-(trans-4-propylcyclohexylester) |
| CH-45: | trans,trans-4-Butylcyclohexylcyclohexan-4'-carbonsäure-(trans-4-pentylcyclohexylester) |
| CP-33: | trans,trans-4-Propylcyclohexylcyclohexan-4'-carbonsäure-(p-propylphenylester) |
| CP-35: | trans,trans-4-Propylcyclohexylcyclohexan-4'-carbonsäure-(p-pentylphenylester) |
| CP-43: | trans,trans-4-Butylcyclohexylcyclohexan-4'-carbonsäure-(p-propylphenylester) |
| CP-45: | trans,trans-4-Butylcyclohexylcyclohexan-4'-carbonsäure-(p-pentylphenylester) |

| | |
|---|---|
| ECCP-3F: | 1-[trans-4-(trans-4-Propylcyclohexyl)-cyclohexyl]-2-(p-fluorphenyl)-ethan |
| ECCP-5F: | 1-[trans-4-(trans-4-Pentylcyclohexyl)-cyclohexyl]-2-(p-fluorphenyl)-ethan |
| PYP-32: | 2-p-Ethylphenyl-5-propyl-pyrimidin |
| PYP-33: | 2-p-Propylphenyl-5-propyl-pyrimidin |
| PYP-53: | 2-p-Propylphenyl-5-pentyl-pyrimidin |
| PYP-72: | 2-p-Ethylphenyl-5-heptyl-pyrimidin |
| PYP-605: | 2-p-Pentyloxyphenyl-5-hexyl-pyrimidin |
| PYP-607: | 2-p-Heptyloxyphenyl-5-hexyl-pyrimidin |
| PYP-609: | 2-p-Nontyloxyphenyl-5-hexyl-pyrimidin |
| PYP-707: | 2-p-Heptyloxyphenyl-5-hexyl-pyrimidin |
| PYP-709: | 2-p-Nonyloxyphenyl-5-heptyl-pyrimidin |
| PYP-706: | 2-p-Hexyloxyphenyl-5-nonyl-pyrimidin |
| PYP-909: | 2-p-Nonyloxyphenyl-5-nonyl-pyrimidin |
| PCH-2: | p-trans-4-Ethylcyclohexylbenzonitril |
| PCH-3: | p-trans-4-Propylcyclohexylbenzonitril |
| PCH-4: | p-trans-4-Butylcyclohexylbenzonitril |
| PCH-5: | p-trans-4-Pentylcyclohexylbenzonitril |
| G9 = EPCH-3: | 1-(trans-4-Propylcyclohexyl)-2-(p-cyanphenyl)-ethan |
| G15 = EPCH-5: | 1-(trans-4-Pentylcyclohexyl)-2-(p-cyanphenyl)-ethan |
| K6: | 4-Ethyl-4'-cyanbiphenyl |
| K9: | 4-Propyl-4'-cyanbiphenyl |
| K15: | 4-Pentyl-4'-cyanbiphenyl |
| PDX-3: | 2-p-Cyanphenyl-5-propyl-1,3-dioxan |
| PDX-4: | 2-p-Cyanphenyl-5-butyl-1,3-dioxan |
| PDX-5: | 2-p-Cyanphenyl-5-pentyl-1,3-dioxan |
| PCH-3S: | trans-1-p-Isothiocyanatophenyl-4-propylcyclohexan |
| ECCP-3: | 1-[trans-4-(trans-4-Propylcyclohexyl)-cyclohexyl]-2-(p-cyanphenyl)-ethan |
| ME-2N.F: | p-Ethylbenzoesäure-(4-cyan-3-fluorphenylester) |
| ME-3N.F: | p-Propylbenzoesäure-(4-cyan-3-fluorphenylester) |
| ME-5N.F: | p-Pentylbenzoesäure-(4-cyan-3-fluorphenylester) |
| ME-7N.F: | p-Heptylbenzoesäure-(4-cyan-3-fluorphenylester) |
| HP-3N.F: | p-(trans-4-Propylcyclohexyl)-benzoesäure-(4-cyan-3-fluorphenylester) |
| HP-4N.F: | p-(trans-4-Butylcyclohexyl)-benzoesäure-(4-cyan-3-fluorphenylester) |
| HP-5N.F: | p-(trans-4-Propylcyclohexyl)-benzoesäure-(4-cyan-3-fluorphenylester) |
| PYP-5N.F: | 2-(3-Fluor-4-cyanphenyl)-5-pentyl-pyrimidin |
| PYP-6N.F: | 2-(3-Fluor-4-cyanphenyl)-5-hexyl-pyrimidin |
| PYP-7N.F: | 2-(3-Fluor-4-cyanphenyl)-5-heptyl-pyrimidin |
| PCH-5F: | trans-1-p-Fluorphenyl-4-pentylcyclohexan |
| PCH-7F: | trans-1-p-Fluorphenyl-4-hexylcyclohexan trans-1-p-Fluorphenyl-4-heptylcyclohexan |
| PTP-34: | 4-Butyl-4'-propyl-tolan |
| PTP-35: | 4-Pentyl-4'-propyl-tolan |
| PTP-45: | 4-Butyl-4'-pentyl-tolan |
| PTP-201: | 4-Ethyl-4'-methoxy-tolan |
| PTP-102: | 4-Methyl-4'-ethoxy-tolan |
| CPTP-301: | 4-(trans-4-Propylcyclohexyl)-4'-methoxy-tolan |
| CPTP-302: | 4-(trans-4-Propylcyclohexyl)-4'-ethoxy-tolan |
| CPTP-303: | 4-(trans-4-Propylcylohexyl)-4'-propoxy-tolan |
| BCH-32: | 4-Ethyl-4'-(trans-4-propylcyclohexyl)-biphenyl |
| BCH-52: | 4-Ethyl-4'-(trans-4-pentylcyclohexyl)-biphenyl |
| BCH-59: | 4-Nonyl-4'-(trans-4-pentylcyclohexyl)-biphenyl |
| BCH-52F: | 4-Ethyl-4'-(trans-4-pentylcyclohexyl)-2'-fluorbiphenyl |
| I52: | 1-(trans-4-Pentylcyclohexyl)-2-(4'-ethyl-2'-fluorbiphenyl-4-yl)-ethan |
| CBC-33: | 4,4'-Bis-(trans-4-propylcyclohexyl)-biphenyl |
| CBC-35: (= CBC-53) | 4-(trans-4-Pentylcyclohexyl)-4'-(trans-4-propylcyclohexyl)-biphenyl |
| CBC-55: | 4,4'-Bis-(trans-4-pentylcyclohexyl)-biphenyl |
| CBC-33F: | 4,4-Bis-(trans-4-propylcyclohexyl)-2-fluorbiphenyl |
| CBC-35F: (= CBC-53F) | 4-(trans-4-Pentylcyclohexyl)-4'-(trans-4-propylcyclohexyl)-2-fluorbiphenyl |

| | |
|---|---|
| CBC-55F: | 4,4'-Bis-(trans-4-pentylcyclohexyl)-2-fluorbiphenyl. |
| D-301: | trans-4-Propylcyclohexancarbonsäure-(p-methoxyphenylester) |
| D-401: | trans-4-Butylcyclohexancarbonsäure-(p-methoxyphenylester) |
| D-501: | trans-4-Pentylcyclohexancarbonsäure-(p-methoxyphenylester) |
| D-302: | trans-4-Propylcyclohexancarbonsäure-(p-ethoxyphenylester) |
| D-402: | trans-4-Butylcyclohexancarbonsäure-(p-ethoxyphenylester) |
| PYP-3N.F: | 2-(3-Fluor-4-cyanphenyl)-5-propylpyrimidin |
| CBC-44: | 4,4'-bis-(trans-4-Butylcyclohexyl)-biphenyl |
| PYP-3F: | 2-(p-Fluorphenyl)-5-propylpyrimidin |
| PYP-5F: | 2-(p-Fluorphenyl)-5-pentylpyrimidin |
| PYP-35: | 2-(p-Pentylphenyl)-5-propylpyrimidin |
| PYP-53: | 2-(p-Propylphenyl)-5-pentylpyrimidin |
| PYP-5OCF$_3$: | 2-(p-Trifluormethoxyphenyl)-5-pentylpyrimidin |
| PYP-7OCF$_3$: | 2-(p-Trifluormethoxyphenyl)-5-heptylpyrimidin |
| I 32: | 1-(trans-4-Propylcyclohexyl)-2-(4'-ethyl-2'-fluorbiphenyl-4-yl)-ethan |
| I 35: | 1-(trans-4-Propylcyclohexyl)-2-(4'-pentyl-2'-fluorbiphenyl-4-yl)-ethan |
| ME-2N: | p-Ethylbenzoesäure-(p-cyanphenylester) |
| ME-3N: | p-Propylbenzoesäure-(p-cyanphenylester) |
| ME-4N.F: | p-Butylbenzoesäure-(3-fluor-4-cyanphenylester) |
| BCH-5: | 4-Cyan-4'-(trans-4-pentylcyclohexyl)-biphenyl |
| BCH-3OCF$_3$: | 4-Trifluormethoxy-4'(trans-4-propylcyclohexyl)-biphenyl |
| BCH-5OCF$_3$: | 4-Trifluormethoxy-4'(trans-4-pentylcyclohexyl)-biphenyl |
| CCP-3OCF$_3$: | 1-[trans-4-(trans-4-propylcyclohexyl)-cyclohexyl)-4 trifluomethoxybenzol |
| ECCP-3OCF$_3$: | 1-[trans-4-(trans-4-Propylcyclonexyl)-cyclohexyl]-2-p-trifluormethoxyphenyl)-ethan |
| ECCP-5OCF$_3$: | 1-[trans-4-(trans-4-Pentylcyclohexyl)-cyclohexyl]-2-(p-trifluormethoxyphenyl)-ethan |
| ECCP-3F.F: | 1-[trans-4-(trans-4-Propylcyclohexyl)-cyclohexyl]-2-(3,4-difluorphenyl)-ethan |
| CCPC-33: | trans-4-(trans-4-Propylcyclohexyl)-cyclohexancarbonsäure-p-(trans-4-propylcyclohexyl)-phenylester |
| CCPC-34: | trans-4-(trans-4-(Propylcyclohexyl)-cyclohexancarbonsäure-p-(trans-4-butylcyclohexyl)-phenylester |
| CCPC-35: | trans-4-(trans-4-Propylcyclohexyl)-cyclohexancarbonsäure-p-(trans-4-pentylcyclohexyl)-phenylester |
| K12: | 4-Butyl-4'-cyanbiphenyl |
| K18: | 4-Hexyl-4'-cyanbiphenyl |
| T15: | 4-p-Cyanphenyl-4'-pentylbiphenyl |
| DR-31: | trans-4-Propylcyclohexancarbonsäure-(2-methylpyridin-5-ylester) |
| DR-41: | trans-4-Butylcyclohexancarbonsäure-(2-methylpyridin-5-ylester) |
| DR-51: | trans-4-Pentylcyclohexancarbonsäure-(2-methylpyridin-5-ylester) |
| CP-33F: | trans-4-(trans-4-Propylcyclohexyl)-cyclohexancarbonsäure-(2-fluor-4-propylphenylester) |
| CP-35F: | trans-4-(trans-4-Propylcyclohexyl)-cyclohexancarbonsäure-(2-fluor-4-pentylphenylester) |
| CP-55F: | trans-4-(trans-4-Pentylcyclohexyl)-cyclohexancarbonsäure-(2-fluor-4-pentylphenylester) |
| HP-2N.F: | p-(trans-4-Ethylcyclohexyl)-benzoesäure-(3-fluor-4-cyanphenylester) |
| EHP-3F.F: | p-(trans-4-Propylcyclohexylethyl)-benzoesäure-(3,4-difluorphenylester) |
| PCH-5OCF$_2$: | trans-1-p-(Difluormethoxyphenyl)-4-pentylcyclohexan |
| PCH-7: | trans-1-p-(Cyanphenyl)-4-heptylcyclohexan |
| PDX-2: | 2-p-Cyanphenyl-5-ethyl-1,3-dioxan |
| OS-35: | trans-4-Propylcyclohexancarbonsäure-(trans-4-pentylcyclohexylester) |
| CCH-3: | trans,trans-4-Propylcyclohexylcyclohexan-4'-carbonitril |
| M3: | 4-Methoxy-4'-cyanbiphenyl |
| M9: | 4-Propoxy-4'-cyanbiphenyl |
| T-3FN: | 4-(p-Cyanphenyl)-2-fluor-4'-propylbiphenyl |

Multiplex values measured at 240° twist

| Beispiele | | 134 | |
|---|---|---|---|
| S → N [°C] | | | <-40 |
| Clearing point [°C] | | | +89 |
| Viscosity [$mm^2 s^{-1}$] | 20 °C | | 25 |
| $\Delta n$ | (589nm, 20 °C) | | +0.1222 |
| $n_e$ | (589nm, 20 °C) | | 1.6166 |
| $\Delta \epsilon$ | ( 1 kHz, 20 °C) | | +14.5 |
| $\epsilon_{\parallel}$ | ( 1 kHz, 20 °C) | | 19.3 |
| $V_{(10,0,20)}$ | | | 1.75 |
| $V_{(50,0,20)}$ | | | 1.81 |
| $V_{(90,0,20)}$ | | | 1.87 |
| $K_3/K_1$ | +20 °C | | 1.69 |
| Composition [%]: | | PCH-3 | 18 |
| | | PCH-4 | 12 |
| | | PCH-5 | 11 |
| | | MB2N.F | 3 |
| | | MB3N.F | 4 |
| | | MB5N.F | 8 |
| | | BCCP-31 | 5 |
| | | BCCP-32 | 4 |
| | | BCCP-33 | 4 |
| | | BCH-32 | 4 |
| | | CP-33 | 5 |
| | | CP-35 | 4 |
| | | CP-43 | 4 |
| | | BCCP-3 | 4 |
| | | BCCP-3F | 6 |
| | | BCCP-5F | 4 |

Multiplex values measured at 220° twist

| Beispiele | | 135 | | 136 |
|---|---|---|---|---|
| S → N [°C] | | <-40 | | <-40 |
| Clearing point [°C] | | +89 | | +96 |
| scosity [$mm^2 s^{-1}$] 20 °C | | 21 | | 20 |
| $\Delta n$ (589nm, 20 °C) | | +0.1433 | | +0.1374 |
| $n_e$ (589nm, 20 °C) | | 1.6410 | | 1.6346 |
| $\Delta\epsilon$ ( 1 kHz, 20 °C) | | +9.7 | | +8.6 |
| $\epsilon_{\parallel}$ ( 1 kHz, 20 °C) | | 13.8 | | 12.4 |
| $V_{(10,0,20)}$ | | 2.07 | | 2.25 |
| $V_{(50,0,20)}$ | | 2.12 | | 2.31 |
| $V_{(90,0,20)}$ | | 2.20 | | 2.38 |
| $K_3/K_1$ +20 °C | | 1.58 | | 1.59 |
| Composition [%]: | PCH-2 | 7.0 | PCH-2 | 12.0 |
| | PCH-3 | 18.0 | PCH-3 | 15.0 |
| | PCH-4 | 14.0 | PCH-4 | 10.0 |
| | PCH-5 | 12.0 | PCH-5 | 8.0 |
| | PTP-102 | 5.0 | PTP-201 | 3.0 |
| | PTP-201 | 5.0 | PCH-301 | 3.0 |
| | CPTP-302 | 4.0 | CPTP-301 | 5.0 |
| | CPTP-303 | 3.0 | CPTP-302 | 5.0 |
| | CP-33 | 4.0 | CPTP-303 | 4.0 |
| | CP-35 | 4.0 | BCCP-31 | 7.0 |
| | BCCP-31 | 4.0 | BCCP-33 | 7.0 |
| | BCCP-33 | 4.0 | BCCP-35 | 7.0 |
| | BCCP-35 | 4.0 | BCCP-3F | 7.0 |
| | BCCP-3 | 4.0 | BCCP-5F | 7.0 |
| | BCCP-3F | 4.0 | | |
| | BCCP-5F | 4.0 | | |

| Beispiele | 137 | | 138 | | 139 | | 140 | |
|---|---|---|---|---|---|---|---|---|
| S → N [°C] | | <-30 | | <-30 | | <-40 | | - |
| Clearing point [°C] | | +74 | | +118 | | +90 | | +85 |
| Viscosity [$mm^2 s^{-1}$] 20 °C | | 23 | | 31 | | 20 | | 22.2 |
| Δn (20 °C, 589 nm) | | +0.1105 | | +0.1184 | | +0.1564 | | +0.1021 |
| $V_{(10,0,20)}$ | | 1.15 | | 2.22 | | 2.06 | | 1.54(1st) |
| $V_{(50,0,20)}$ | | 1.51 | | 2.51 | | 2.34 | | 1.88 |
| $V_{(90,0,20)}$ | | 2.00 | | 2.97 | | 2.80 | | 2.32 |
| Composition [%]: | PCH-3 | 20.00 | PCH-3 | 18.00 | PCH-3 | 22.00 | PDX-3 | 11.00 |
| | PCH-4 | 12.00 | PDX-3 | 8.00 | PCH-4 | 23.00 | PDX-4 | 10.00 |
| | ME2N.F | 3.00 | PDX-4 | 8.00 | PCH-302 | 6.00 | PDX-5 | 6.00 |
| | ME3N.F | 4.00 | PDX-5 | 8.00 | PTP-102 | 5.00 | PCH-3 | 12.00 |
| | ME4N.F | 11.00 | CCH-301 | 10.00 | PTP-201 | 5.00 | PCH-4 | 8.00 |
| | PCH-301 | 6.00 | BCCP-31 | 4.00 | CPTP-301 | 5.00 | CCH-303 | 11.00 |
| | CCH-301 | 4.00 | BCCP-32 | 4.00 | CPTP-303 | 3.00 | BCCP-31 | 5.00 |
| | BCCP-31 | 5.00 | CH-33 | 3.00 | BCCP-31 | 6.00 | BCCP-32 | 5.00 |
| | BCCP-32 | 6.00 | CH-35 | 4.00 | BCCP-33 | 6.00 | BCCP-33 | 5.00 |
| | BCCP-33 | 7.00 | CP-43 | 3.00 | BCH-32 | 10.00 | BCCP-3 | 6.00 |
| | BCCP-35 | 7.00 | CBC-33 | 5.00 | BCH-52 | 9.00 | BCCP-3F | 7.00 |
| | CP-3F | 8.00 | CBC-53 | 6.00 | | | CP-3F | 7.00 |
| | CP-5F | 7.00 | CBC-53F | 5.00 | | | CP-5F | 7.00 |
| | | | CBC-55F | 5.00 | | | | |
| | | | BCCP-3 | 9.00 | | | | |

| Beispiele | 141 | 142 | 143 | 144 | 145 |
|---|---|---|---|---|---|
| S → N [°C] | <-40 | - | - | - | - |
| Clearing point [°C] | +90 | 95.0 | +87 | +87 | +86 |
| Viscosity [$mm^2s^{-1}$] 20 °C | 20 | - | | - | |
| Δn (20 °C,589 nm) | +0.1509 | - | +0.1073 | +0.1075 | +0.1070 |
| $V_{(10,0,20)}$ | 2.14 | - | 1.39(1st) | 1.41(1st) | 1.40(1st) |
| $V_{(50,0,20)}$ | 2.45 | - | 1.79 | 1.78 | 1.75 |
| $V_{(90,0,20)}$ | 2.93 | - | 2.33 | 2.27 | 2.21 |
| Composition [%]: | PCH-3 22.00 | PDX-2 7.00 | PDX-2 6.00 | PCH-2 7.00 | PDX-2 5.00 |
| | PCH-4 20.00 | PDX-3 10.50 | PDX-3 11.00 | PCH-3 15.00 | PCH-3 20.00 |
| | PCH-5 5.00 | PCH-3 9.30 | PDX-4 10.00 | PCH-4 12.00 | PCH-4 10.00 |
| | CCH-301 7.00 | PCH-4 5.80 | PCH-3 12.00 | MB2N.F 2.00 | MB2N.F 2.00 |
| | PTP-102 4.00 | MB2N.F 2.30 | PCH-4 8.00 | MB3N.F 3.00 | MB3N.F 3.00 |
| | PTP-201 5.00 | MB3N.F 3.50 | PCH-302 7.00 | MB5N.F 6.00 | MB5N.F 5.00 |
| | CPTP-301 5.00 | CCH-303 9.30 | BCCP-31 5.00 | CCH-303 10.00 | CCH-303 11.00 |
| | CPTP-302 5.00 | BCCP-31 7.00 | BCCP-32 5.00 | BCCP-31 6.00 | BCCP-31 6.00 |
| | CPTP-303 6.00 | BCCP-32 7.00 | BCCP-33 5.00 | BCCP-32 6.00 | BCCP-32 6.00 |
| | BCCP-31 6.00 | BCCP-33 7.00 | BCCP-35 4.00 | BCCP-33 6.00 | BCCP-33 5.00 |
| | BCCP-33 7.00 | BCCP-3 7.00 | BCCP-3 6.00 | BCCP-3 6.00 | BCCP-3 6.00 |
| | BCCP-35 8.00 | BCCP-3F 8.10 | BCCP-3F 7.00 | BCCP-3F 7.00 | BCCP-3F 7.00 |
| | | CP-3F 8.10 | CP-3F 7.00 | CP-3F 7.00 | CP-3F 7.00 |
| | | CP-5F 8.10 | CP-5F 7.00 | CP-5F 7.00 | CP-5F 7.00 |

| Beispiele | 146 | | 147 | | 148 | | 149 | |
|---|---|---|---|---|---|---|---|---|
| S → N [°C] | | <−20 | | <−40 | | <−30 | | <−20 |
| Clearing point [°C] | | +129 | | +92 | | +96 | | 83 |
| Viscosity [$mm^2s^{-1}$] 20 °C | | 34 | | 22 | | 22 | | 20 |
| Δn (20 °C,589 nm) | | +0.1381 | | +0.1046 | | +0.1229 | | 0.0987 |
| $V_{(10,0,20)}$ | | 2.04 | | 1.63(1st) | | 2.32 | | 2.20 |
| $V_{(50,0,20)}$ | | 2.33 | | 2.02 | | 2.64 | | 2.50 |
| $V_{(90,0,20)}$ | | 2.84 | | 2.55 | | 3.15 | | 3.08 |
| Composition [%]: | PCH-3 | 18.00 | PCH-3 | 20.00 | PCH-2 | 8.00 | PCH-3 | 17.00 |
| | MB2N.F | 2.00 | PCH-4 | 18.00 | PCH-3 | 17.00 | PDX-3 | 8.00 |
| | MB3N.F | 3.00 | MB2N.F | 2.00 | PCH-5 | 10.00 | PDX-4 | 7.00 |
| | MB5N.F | 6.00 | MB3N.F | 3.00 | G9 | 8.00 | D-301 | 11.00 |
| | MB7N.F | 6.00 | CCH-303 | 12.00 | MB2N.F | 2.00 | D-401 | 11.00 |
| | HP-3N.F | 6.00 | BCCP-31 | 5.00 | PCH-302 | 8.00 | D-501 | 11.00 |
| | PCH-302 | 6.[illegible] | BCCP-32 | 5.00 | CPTP-301 | 4.00 | CP-33 | 6.00 |
| | CCH-303 | 5.30 | BCCP-33 | 5.00 | BCCP-3F | 8.00 | CP-35 | 6.00 |
| | BCCP-31 | 4.00 | BCCP-3 | 7.00 | BCCP-31 | 8.00 | BCCP-31 | 5.00 |
| | BCCP-32 | 4.00 | BCCP-3F | 7.00 | BCCP-32 | 8.00 | BCCP-32 | 6.00 |
| | BCCP-3F | 10.00 | CP-3F | 8.00 | BCCP-33 | 9.00 | BCCP-33 | 6.00 |
| | CBC-33 | 4.00 | CP-5F | 8.00 | CBC-33F | 5.00 | BCCP-35 | 6.00 |
| | CBC-53 | 4.00 | | | CBC-53F | 5.00 | | |
| | CBC-55 | 4.00 | | | | | | |
| | CBC-33F | 6.00 | | | | | | |
| | CBC-53F | 6.00 | | | | | | |
| | CBC-55F | 6.00 | | | | | | |

| Beispiele | 150 | | 151 | | 152 | | 153 | |
|---|---|---|---|---|---|---|---|---|
| S → N [°C] | | - | | <-30 | | - | | <-40 |
| Clearing point [°C] | | +86 | | +90 | | 89.0 | | +85 |
| Viscosity [$mm^2s^{-1}$] 20 °C | | 21.5 | | 22 | | 19.0 | | 20 |
| Δn (20 °C, 589 nm) | | +0.1069 | | +0.1548 | | +0.1557 | | +0.1570 |
| $V_{(10,0,20)}$ | | 1.40(1st) | | 1.96 | | 2.1 | | 1.97 |
| $V_{(50,0,20)}$ | | 1.80 | | 2.25 | | 2.4 | | 2.26 |
| $V_{(90,0,20)}$ | | 2.34 | | 2.70 | | 2.9 | | 2.73 |
| Composition [%]: | PDX-2 | 5.00 | PCH-3 | 20.00 | PCH-3 | 22.00 | PCH-2 | 8.00 |
| | PCH-3 | 20.00 | PCH-4 | 16.00 | PCH-4 | 20.00 | PCH-3 | 17.00 |
| | PCH-4 | 10.00 | MB3N.F | 4.00 | PCH-5 | 3.00 | K6 | 6.00 |
| | MB2N.F | 2.00 | MB5N.F | 5.00 | PCH-301 | 7.00 | K9 | 6.00 |
| | MB3N.F | 2.00 | CCH-301 | 8.00 | PTP-102 | 5.00 | G9 | 6.00 |
| | MB5N.F | 6.00 | PTP-102 | 4.00 | PTP-201 | 5.00 | MB2N.F | 2.00 |
| | CCH-303 | 11.00 | PTP-201 | 4.00 | CPTP-301 | 6.00 | MB3N.F | 2.00 |
| | BCCP-31 | 6.00 | CPTP-301 | 6.00 | CPTP-302 | 5.00 | PCH-302 | 6.00 |
| | BCCP-32 | 6.00 | CPTP-302 | 5.00 | BCCP-31 | 5.00 | PTP-35 | 5.00 |
| | BCCP-33 | 5.00 | CPTP-303 | 6.00 | BCCP-33 | 6.00 | PTP-102 | 5.00 |
| | BCCP-3 | 6.00 | BCCP-31 | 7.00 | BCCP-35 | 6.00 | CPTP-301 | 4.00 |
| | BCCP-3F | 7.00 | BCCP-33 | 7.00 | BCH-32 | 10.00 | BCCP-31 | 8.00 |
| | CP-3F | 7.00 | BCCP-35 | 8.00 | | | BCCP-32 | 8.00 |
| | CP-5F | 7.00 | | | | | BCCP-33 | 7.00 |
| | | | | | | | CBC-33F | 5.00 |
| | | | | | | | CBC-53F | 5.00 |

| Beispiele | 154 | | 155 | | 156 | | 157 | | 158 | |
|---|---|---|---|---|---|---|---|---|---|---|
| S → N [°C] | | - | | - | | - | | <-30 | | <-30 |
| Clearing point [°C] | | 90.0 | | +85 | | +88 | | +85 | | +86 |
| Viscosity [$mm^2s^{-1}$] 20 °C | | - | | | | 22.4 | | 24 | | 24 |
| Δn (20 °C,589 nm) | | - | | +0.1082 | | +0.1094 | | +0.1073 | | +0.1082 |
| $V_{(10,0,20)}$ | | - | | 1.42(1st) | | 1.43(1st) | | 1.47(1st) | | 1.44(1st) |
| $V_{(50,0,20)}$ | | - | | 1.80 | | 1.83 | | 1.87 | | 1.82 |
| $V_{(90,0,20)}$ | | - | | 2.30 | | 2.35 | | 2.42 | | 2.30 |
| Composition [%]: | PDX-2 | 6.30 | PDX-3 | 11.00 | PDX-2 | 5.00 | PDX-3 | 11.00 | PCH-3 | 19.00 |
| | PDX-3 | 9.50 | PDX-5 | 10.00 | PCH-3 | 20.00 | PDX-5 | 9.00 | PCH-4 | 9.00 |
| | PCH-3 | 16.80 | PCH-3 | 21.00 | PCH-4 | 10.00 | PCH-3 | 20.00 | PCH-5 | 7.00 |
| | PCH-4 | 11.60 | PCH-4 | 12.00 | MB2N.F | 2.00 | PCH-4 | 13.00 | MB2N.F | 2.00 |
| | CCH-303 | 8.40 | CCH-303 | 5.00 | MB3N.F | 3.00 | CCH-303 | 6.00 | MB3N.F | 3.00 |
| | BCCP-31 | 6.30 | BCCP-31 | 4.00 | MB5N.F | 6.00 | BCCP-31 | 3.00 | ME5N.F | 6.00 |
| | BCCP-32 | 6.30 | BCCP-32 | 3.00 | CCH-303 | 8.00 | BCCP-32 | 5.00 | CCH-303 | 13.00 |
| | BCCP-33 | 6.30 | BCCP-33 | 4.00 | BCCP-31 | 6.00 | BCCP-33 | 3.00 | ECCP-31 | 4.00 |
| | ECCP-3 | 6.30 | BCCP-35 | 4.00 | BCCP-32 | 6.00 | BCCP-35 | 4.00 | ECCP-32 | 5.00 |
| | BCCP-3F | 7.40 | BCCP-3 | 5.00 | BCCP-33 | 6.00 | BCCP-3 | 5.00 | ECCP-33 | 4.00 |
| | CP-3F | 7.40 | BCCP-3F | 7.00 | BCCP-3 | 6.00 | ECCP-3F | 6.00 | ECCP-3 | 8.00 |
| | CP-5F | 7.40 | CP-3F | 7.00 | BCCP-3F | 8.00 | CP-3F | 8.00 | ECCP-3F | 6.00 |
| | | | CP-5F | 7.00 | CP-3F | 7.00 | CP-5F | 7.00 | CP-3F | 7.00 |
| | | | | | CP-5F | 7.00 | | | CP-5F | 7.00 |

| Beispiele | 159 | | 160 | | 161 | |
|---|---|---|---|---|---|---|
| S → N [°C] | | <0 | | <-20 | | <-30 |
| Clearing point [°C] | | +80 | | +112 | | +75 |
| Viscosity [$mm^2s^{-1}$] 20 °C | | 20 | | 26 | | 21 |
| Δn (20 °C, 589 nm) | | 0.0980 | | +0.1488 | | +0.1125 |
| $V_{(10,0,20)}$ | | 2.20 | | 1.95 | | 1.35 |
| $V_{(50,0,20)}$ | | 2.50 | | 2.26 | | 1.70 |
| $V_{(90,0,20)}$ | | 3.05 | | 2.74 | | 2.19 |
| Composition [%]: | PCH-3 | 17.00 | MB2N.F | 2.00 | PCH-3 | 20.00 |
| | PDX-3 | 8.00 | MB3N.F | 3.00 | PCH-5 | 12.00 |
| | PDX-4 | 7.00 | MB4N.F | 6.00 | ME2N.F | 3.00 |
| | PCH-301 | 3.00 | MB5N.F | 6.00 | ME3N.F | 4.00 |
| | D-301 | 10.00 | HP-3N.F | 4.00 | ME4N.F | 9.00 |
| | D-401 | 10.00 | PCH-301 | 19.00 | PCH-301 | 11.00 |
| | D-501 | 10.00 | BCCP-31 | 4.00 | BCCP-31 | 6.00 |
| | CP-33 | 6.00 | BCCP-32 | 6.00 | ECCP-32 | 6.00 |
| | BCCP-31 | 8.00 | BCCP-33 | 6.00 | ECCP-33 | 7.00 |
| | BCCP-32 | 7.00 | ECCP-35 | 6.00 | ECCP-35 | 7.00 |
| | BCCP-33 | 7.00 | CP-3F | 9.00 | ECCP-3F | 9.00 |
| | BCCP-35 | 7.00 | CP-5F | 8.00 | CP-3F | 6.00 |
| | | | PTP-201 | 5.00 | | |
| | | | CPTP-301 | 5.00 | | |
| | | | CPTP-302 | 5.00 | | |
| | | | CPTP-303 | 6.00 | | |

| Beispiele | 162 | | 163 | | 164 | |
|---|---|---|---|---|---|---|
| S → N [°C] | | <−40 | | − | | − |
| Clearing point [°C] | | +88 | | +78 | | 79.0 |
| Viscosity [$mm^2s^{-1}$] 20 °C | | 22 | | − | | 26 |
| Δn (20 °C,589 nm) | | +0.1210 | | 0.1047 | | +0.1637 |
| $V_{(10,0,20)}$ | | 2.05 | | 2.04 | | − |
| $V_{(50,0,20)}$ | | 2.32 | | 2.31 | | − |
| $V_{(90,0,20)}$ | | 2.78 | | 2.81 | | − |
| Composition [%]: | PCH-3 | 16.00 | PCH-3 | 17.00 | PCH-3 | 13.00 |
| | PCH-4 | 16.00 | PDX-3 | 8.00 | PYP-3N.F | 4.00 |
| | PCH-5 | 15.00 | PDX-4 | 7.00 | PYP-5N.F | 4.00 |
| | PCH-7 | 10.00 | PCH-301 | 3.00 | PYP-7N.F | 4.00 |
| | BCH-32 | 8.00 | D-301 | 12.00 | PYP-32 | 8.00 |
| | BCH-52 | 7.00 | D-401 | 12.00 | PYP-33 | 8.00 |
| | BCCP-31 | 6.00 | D-501 | 12.00 | PYP-53 | 8.00 |
| | BCCP-32 | 6.00 | BCH-52 | 4.00 | PYP-72 | 8.00 |
| | BCCP-33 | 6.00 | BCCP-31 | 6.00 | BCCP-31 | 8.00 |
| | BCCP-3F | 10.00 | BCCP-32 | 5.00 | BCCP-32 | 7.00 |
| | | | BCCP-33 | 5.00 | BCCP-33 | 7.00 |
| | | | BCCP-3 | 9.00 | BCCP-35 | 7.00 |
| | | | | | CPTP-301 | 5.00 |
| | | | | | CPTP-302 | 4.00 |
| | | | | | CPTP-303 | 5.00 |

| Beispiele | 165 | | 166 | |
|---|---|---|---|---|
| S → N [°C] | | <0 | | <-40 |
| Clearing point [°C] | | +88 | | +85 |
| Viscosity [$mm^2s^{-1}$] 20 °C | | 21 | | 22 |
| Δn (20 °C,589 nm) | | 0.1046 | | +0.1181 |
| $V_{(10,0,20)}$ | | 2.24 | | 2.04 |
| $V_{(50,0,20)}$ | | 2.54 | | 2.33 |
| $V_{(90,0,20)}$ | | 3.08 | | 2.83 |
| Composition [%]: | PCH-3 | 17.00 | PCH-3 | 15.00 |
| | PDX-3 | 8.00 | PCH-4 | 16.00 |
| | PDX-4 | 7.00 | PCH-5 | 14.00 |
| | D-301 | 10.00 | PCH-7 | 8.00 |
| | D-401 | 10.00 | I32 | 9.00 |
| | D-501 | 10.00 | BCH-52F | 9.00 |
| | CP-33 | 6.00 | BCCP-31 | 5.00 |
| | CP-35 | 6.00 | BCCP-32 | 5.00 |
| | BCCP-31 | 5.00 | BCCP-33 | 5.00 |
| | BCCP-32 | 6.00 | ECCP-3F | 8.00 |
| | BCCP-33 | 6.00 | ECCP-5F | 7.00 |
| | BCCP-35 | 6.00 | | |
| | CPTP-301 | 3.00 | | |

| Beispiele | 167 | | 168 | | 169 | |
|---|---|---|---|---|---|---|
| S → N [°C] | | < 0 | | < 20 | | <-30 |
| Clearing point [°C] | | +113 | | +110 | | +76 |
| Viscosity [$mm^2s^{-1}$] 20 °C | | 25 | | 24 | | 21 |
| Δn (20 °C,589 nm) | | +0.1523 | | +0.1518 | | 0.1144 |
| $V_{(10,0,20)}$ | | 2.24 | | 2.09 | | 2.04 |
| $V_{(50,0,20)}$ | | 2.55 | | 2.39 | | 2.34 |
| $V_{(90,0,20)}$ | | 3.05 | | 2.84 | | 2.86 |
| Composition [%]: | MB2N.F | 2.00 | MB2N.F | 2.00 | PCH-3 | 17.00 |
| | MB3N.F | 3.00 | MB3N.F | 3.00 | PDX-3 | 8.00 |
| | PYP-5N.F | 8.00 | MB4N.F | 6.00 | PDX-4 | 7.00 |
| | PYP-6N.F | 8.00 | MB5N.F | 6.00 | PCH-301 | 3.00 |
| | HP-3N.F | 3.00 | HP-3N.F | 4.00 | D-301 | 13.00 |
| | PCH-301 | 10.00 | PCH-301 | 15.00 | D-401 | 13.00 |
| | PCH-302 | 5.00 | PTP-35 | 8.00 | D-501 | 13.00 |
| | CCH-303 | 7.00 | BCCP-31 | 6.00 | ECCP-31 | 5.00 |
| | BCCP-31 | 7.00 | BCCP-32 | 6.00 | ECCP-32 | 4.00 |
| | BCCP-32 | 7.00 | BCCP-33 | 6.00 | ECCP-33 | 4.00 |
| | BCCP-33 | 8.00 | BCCP-35 | 6.00 | ECCP-35 | 4.00 |
| | BCCP-35 | 8.00 | BCCP-3F | 7.00 | CPTP-301 | 5.00 |
| | CPTP-301 | 6.00 | CP-3F | 9.00 | CPTP-302 | 4.00 |
| | CPTP-302 | 5.00 | CPTP-301 | 5.00 | | |
| | CPTP-303 | 7.00 | CPTP-302 | 5.00 | | |
| | CBC-33F | 4.00 | CPTP-303 | 6.00 | | |
| | CBC-53F | 2.00 | | | | |

| Beispiele | 170 | | 171 | | 172 | | 173 | |
|---|---|---|---|---|---|---|---|---|
| S → N [°C] | | <0 | | <−20 | | <−40 | | <−40 |
| Clearing point [°C] | | 78 | | 82 | | +92 | | +85 |
| Viscosity [$mm^2s^{-1}$] 20 °C | | 19 | | 21 | | 22 | | 20 |
| Δn (20 °C,589 nm) | | +0.1616 | | +0.1609 | | +0.1046 | | +0.1272 |
| $V_{(10,0,20)}$ | | 2.15 | | 2.06 | | 1.63(1st) | | 2.03 |
| $V_{(50,0,20)}$ | | 2.44 | | 2.33 | | 2.02 | | 2.29 |
| $V_{(90,0,20)}$ | | 2.87 | | 2.71 | | 2.55 | | 2.75 |
| Composition [%]: | K6 | 8.00 | PYP-3N.F | 4.00 | PCH-3 | 20.00 | PCH-3 | 15.00 |
| | K9 | 10.00 | PYP-5N.F | 4.00 | PCH-4 | 18.00 | PCH-4 | 15.00 |
| | K12 | 6.00 | PYP-6N.F | 4.00 | MB2N.F | 2.00 | PCH-5 | 14.00 |
| | K15 | 10.00 | PYP-7N.F | 5.00 | MB3N.F | 3.00 | K15 | 8.00 |
| | PCH-301 | 8.00 | PYP-32 | 5.00 | CCH-303 | 12.00 | CCH-303 | 5.00 |
| | BCCP-31 | 8.00 | PYP-33 | 5.00 | BCCP-31 | 5.00 | BCH-32 | 9.00 |
| | BCCP-32 | 8.00 | PTP-34 | 4.00 | BCCP-32 | 5.00 | BCH-52 | 9.00 |
| | BCCP-33 | 8.00 | PTP-35 | 4.00 | BCCP-33 | 5.00 | BCCP-31 | 5.00 |
| | BCCP-35 | 8.00 | PTP-45 | 4.00 | BCCP-3 | 7.00 | BCCP-32 | 5.00 |
| | BCCP-3 | 10.00 | PCH-301 | 10.00 | BCCP-3F | 7.00 | BCCP-33 | 5.00 |
| | PYP-32 | 5.00 | BCCP-31 | 7.00 | CP-3F | 8.00 | BCCP-3F | 10.00 |
| | PYP-33 | 5.00 | BCCP-32 | 8.00 | CP-5F | 8.00 | | |
| | PTP-35 | 6.00 | BCCP-33 | 8.00 | | | | |
| | | | BCCP-35 | 8.00 | | | | |
| | | | BCCP-3 | 10.00 | | | | |
| | | | PTP-201 | 5.00 | | | | |
| | | | CPTP-301 | 5.00 | | | | |

| Beispiele | 174 | | 175 | | 176 | | 177 | |
|---|---|---|---|---|---|---|---|---|
| S → N [°C] | | - | | <-40 | | <-40 | | - |
| Clearing point [°C] | | +90 | | +88 | | +82 | | +82 |
| Viscosity [$mm^2s^{-1}$] 20 °C | | 21 | | 21 | | 21 | | 20.1 |
| Δn (20 °C,589 nm) | | +0.1168 | | +0.1468 | | +0.1003 | | +0.1241 |
| $V_{(10,0,20)}$ | | 2.18 | | 1.98 | | 1.88 | | 1.85 |
| $V_{(50,0,20)}$ | | 2.49 | | 2.23 | | 2.12 | | 2.12 |
| $V_{(90,0,20)}$ | | 2.99 | | 2.70 | | 2.55 | | 2.56 |
| Composition [%]: | PCH-3 | 20.00 | PCH-2 | 9.00 | PCH-3 | 11.00 | PCH-2 | 17.00 |
| | PCH-4 | 16.00 | PCH-3 | 16.00 | ME2N.F | 2.00 | PCH-3 | 15.00 |
| | PCH-5 | 15.00 | PCH-4 | 11.00 | ME3N.F | 3.00 | PYP-3N.F | 5.00 |
| | PTP-201 | 4.00 | PCH-5 | 12.00 | ME5N.F | 7.00 | PYP-5N.F | 5.00 |
| | BCCP-31 | 7.00 | BCH-5 | 8.00 | ME7N.F | 7.00 | PCH-304 | 10.00 |
| | BCCP-32 | 7.00 | BCH-32 | 8.00 | PCH-301 | 10.00 | PCH-501 | 12.00 |
| | BCCP-33 | 7.00 | BCH-52 | 8.00 | CCH-301 | 9.00 | BCCP-31 | 6.00 |
| | BCCP-35 | 7.00 | BCCP-3F | 6.00 | CCH-303 | 9.00 | BCCP-32 | 6.00 |
| | BCCP-3F | 7.00 | BCCP-5F | 6.00 | BCCP-31 | 6.00 | BCCP-33 | 6.00 |
| | CP-3F | 8.00 | BCCP-33 | 6.00 | BCCP-32 | 6.00 | CBC-33 | 5.00 |
| | CPTP-301 | 2.00 | PTP-35 | 6.00 | BCCP-33 | 5.00 | CBC-53 | 5.00 |
| | | | PTP-102 | 4.00 | BCCP-35 | 5.00 | CBC-33F | 4.00 |
| | | | | | CP-33F | 6.00 | CBC-55F | 4.00 |
| | | | | | CP-35F | 6.00 | | |
| | | | | | CP-55F | 5.00 | | |
| | | | | | CBC-53F | 3.00 | | |

| Beispiele | 178 | | 179 | | 180 | | 181 | |
|---|---|---|---|---|---|---|---|---|
| S → N [°C] | | <-30 | | - | | <-40 | | <-40 |
| Clearing point [°C] | | +86 | | +93 | | +88 | | +91 |
| Viscosity [$mm^2s^{-1}$] 20 °C | | 24 | | 18 | | 19 | | 19 |
| Δn (20 °C,589 nm) | | +0.1073 | | +0.0901 | | 0.0903 | | +0.0945 |
| $V_{(10,0,20)}$ | | 1.48(1st) | | 2.04 | | 19 | | 2.00 |
| $V_{(50,0,20)}$ | | 1.86 | | 2.50 | | 2.54 | | 2.46 |
| $V_{(90,0,20)}$ | | 2.40 | | 3.11 | | 3.20 | | 3.07 |
| Composition [%]: | PDX-2 | 6.00 | PCH-3 | 9 | PCH-3 | 10.00 | PCH-3 | 12.00 |
| | PDX-3 | 9.00 | PCH-4 | 12 | PCH-4 | 10.00 | PCH-4 | 11.00 |
| | PCH-3 | 16.00 | PCH-5 | 7 | PCH-5 | 7.00 | PCH-5 | 7.00 |
| | PCH-4 | 11.00 | PCH-302 | 5 | PCH-302 | 13.00 | PCH-302 | 12.00 |
| | ME2N.F | 2.00 | CCH-303 | 17 | OS-33 | 6.00 | C-33 | 7.00 |
| | ME3N.F | 3.00 | CCH-502 | 6 | OS-35 | 6.00 | C-35 | 7.00 |
| | CCH-303 | 8.00 | CP-3F | 9 | OS-53 | 4.00 | CP-3F | 8.00 |
| | BCCP-31 | 6.00 | CP-5F | 9 | CP-3F | 8.00 | CP-5F | 8.00 |
| | BCCP-32 | 6.00 | BCCP-33 | 12 | CP-5F | 8.00 | BCCP-31 | 8.00 |
| | BCCP-33 | 6.00 | BCCP-35 | 11 | BCCP-31 | 7.00 | BCCP-33 | 7.00 |
| | BCCP-3 | 6.00 | CBC-53 | 3 | BCCP-33 | 7.00 | BCCP-35 | 7.00 |
| | BCCP-3F | 7.00 | | | BCCP-35 | 7.00 | CP-33 | 6.00 |
| | CP-3F | 7.00 | | | CP-33 | 7.00 | | |
| | CP-5F | 7.00 | | | | | | |

| Beispiele | 182 | | 183 | | 184 | | 185 | | 186 | | 187 | |
|---|---|---|---|---|---|---|---|---|---|---|---|---|
| S → N [°C] | <-30 | | <-40 | | - | | - | | <-30 | | <-30 | |
| Clearing point [°C] | +81 | | +85 | | +67 | | +94 | | +91 | | +106 | |
| Viscosity [$mm^2 s^{-1}$] 20 °C | 19 | | 23 | | 40 | | 19 | | 18 | | 21 | |
| $\Delta n$ (20 °C, 589 nm) | +0.0997 | | +0.1072 | | +0.1235 | | +0.0871 | | +0.0929 | | 0.0915 | |
| $V_{(10,0,20)}$ | 1.71(1st) | | 1.44(1st) | | 1.14 | | 2.04 | | 2.08 | | 2.08 | |
| $V_{(50,0,20)}$ | 2.13 | | 1.79 | | 1.28 | | 2.46 | | 2.55 | | 2.57 | |
| $V_{(90,0,20)}$ | 2.72 | | 2.25 | | 1.46 | | 3.14 | | 3.18 | | 3.23 | |
| Composition [%]: | PCH-3 | 14.60 | PCH-3 | 19.00 | MB2N.F | 4 | PCH-3 | 9 | PCH-3 | 12.00 | PCH-3 | 12.00 |
| | PCH-4 | 13.80 | PCH-4 | 11.00 | MB3N.F | 6 | PCH-4 | 12 | PCH-4 | 11.00 | PCH-4 | 10.00 |
| | PCH-5 | 15.60 | PCH-5 | 6.00 | MB5N.F | 10 | PCH-5 | 7 | PCH-5 | 7.00 | PCH-5 | 7.00 |
| | PCH-302 | 9.60 | MB2N.F | 2.00 | MB7N.F | 10 | CCH-303 | 14 | PCH-302 | 8.00 | CCH-303 | 15.00 |
| | C-33 | 5.60 | MB3N.F | 4.00 | HP-3N.F | 4 | CCH-502 | 12 | CCH-303 | 14.00 | CP-3F | 7.00 |
| | C-35 | 5.60 | MB5N.F | 5.00 | HP-4N.F | 8 | CP-3F | 9 | CP-3F | 8.00 | CP-5F | 7.00 |
| | CP-3F | 6.40 | CCH-303 | 12.00 | HP-5N.F | 4 | CP-5F | 9 | CP-5F | 8.00 | CP-33 | 7.00 |
| | CP-5F | 6.40 | BCCP-31 | 5.00 | CCH-303 | 9 | BCCP-31 | 9 | BCCP-3F | 8.00 | CP-35 | 6.00 |
| | BCCP-3F | 5.60 | BCCP-32 | 5.00 | CCH-502 | 9 | BCCP-33 | 10 | BCCP-31 | 8.00 | BCCP-31 | 9.00 |
| | BCCP-31 | 5.60 | BCCP-33 | 4.00 | PCH-302 | 13 | BCCP-35 | 9 | BCCP-33 | 8.00 | BCCP-3F | 10.00 |
| | BCCP-33 | 5.60 | BCCP-3 | 5.00 | PYP-707 | 4 | | | BCCP-35 | 8.00 | BCCP-5F | 10.00 |
| | CP-33 | 5.60 | BCCP-3F | 7.00 | PYP-709 | 4 | | | | | | |
| | | | CP-3F | 8.00 | PYP-909 | 3 | | | | | | |
| | | | CP-5F | 7.00 | BCCP-31 | 4 | | | | | | |
| | | | | | BCCP-33 | 4 | | | | | | |
| | | | | | BCCP-35 | 4 | | | | | | |

| Beispiele | 188 | | 189 | | 190 | | 191 | |
|---|---|---|---|---|---|---|---|---|
| S → N [°C] | | <−30 | | <−40 | | <−30 | | <−40 |
| Clearing point [°C] | | +91 | | +90 | | +94 | | +89 |
| Viscosity [$mm^2 s^{-1}$] 20 °C | | 23 | | 18 | | 18 | | 18 |
| Δn (20 °C, 589 nm) | | +0.1081 | | 0.0923 | | 0.0914 | | +0.0916 |
| $V_{(10,0,20)}$ | | 1.62 | | 2.03 | | 2.17 | | 1.98 |
| $V_{(50,0,20)}$ | | 2.00 | | 2.49 | | 2.65 | | 2.45 |
| $V_{(90,0,20)}$ | | 2.52 | | 3.11 | | 3.27 | | 3.11 |
| Composition [%]: | PCH-3 | 20.00 | PCH-3 | 12.00 | PCH-3 | 10.00 | PCH-3 | 12.00 |
| | PCH-4 | 10.00 | PCH-4 | 11.00 | PCH-4 | 9.00 | PCH-4 | 11.00 |
| | PCH-5 | 10.00 | PCH-5 | 7.00 | PCH-5 | 7.00 | PCH-5 | 7.00 |
| | MB2N.F | 3.00 | PCH-302 | 10.00 | PCH-302 | 10.00 | PCH-302 | 10.00 |
| | MB3N.F | 4.00 | CCH-303 | 16.00 | CCH-303 | 16.00 | CCH-303 | 16.00 |
| | PCH-302 | 7.00 | CP-3F | 8.00 | CP-3F | 8.00 | CP-3F | 8.00 |
| | BCCP-31 | 7.00 | CP-5F | 8.00 | CP-5F | 8.00 | CP-5F | 8.00 |
| | BCCP-32 | 7.00 | BCCP-31 | 8.00 | BCCP-31 | 8.00 | ECCP-3F | 7.00 |
| | BCCP-33 | 9.00 | BCCP-33 | 7.00 | BCCP-33 | 9.00 | ECCP-31 | 7.00 |
| | CH-33 | 4.00 | BCCP-35 | 7.00 | BCCP-35 | 9.00 | ECCP-33 | 7.00 |
| | CH-35 | 4.00 | CP-33 | 6.00 | CP-33 | 6.00 | CP-33 | 7.00 |
| | CP-3F | 8.00 | | | | | | |
| | CP-5F | 7.00 | | | | | | |

| Beispiele | 192 | | 193 | | 194 | | 195 | |
|---|---|---|---|---|---|---|---|---|
| S → N [°C] | | <−20 | | <−40 | | <−40 | | <−40 |
| Clearing point [°C] | | +87 | | +90 | | +91 | | +91 |
| Viscosity [$mm^2s^{-1}$] 20 °C | | 27 | | 18 | | 19 | | 19 |
| Δn (20 °C, 589 nm) | | +0.1076 | | 0.0923 | | +0.0939 | | +0.0939 |
| $V_{(10,0,20)}$ | | 1.54 | | 2.03 | | 2.03 | | 2.03 |
| $V_{(50,0,20)}$ | | 1.87 | | 2.49 | | 2.47 | | 2.47 |
| $V_{(90,0,20)}$ | | 2.37 | | 3.11 | | 3.05 | | 3.05 |
| Composition [%]: | PDX-2 | 7.00 | PCH-3 | 12.00 | PCH-3 | 12.00 | PCH-3 | 12.00 |
| | PDX-3 | 12.00 | PCH-4 | 11.00 | PCH-4 | 11.00 | PCH-4 | 11.00 |
| | PDX-4 | 13.00 | PCH-5 | 7.00 | PCH-5 | 7.00 | PCH-5 | 7.00 |
| | PDX-5 | 12.00 | PCH-302 | 10.00 | PCH-302 | 12.00 | PCH-302 | 12.00 |
| | PCH-302 | 18.00 | CCH-303 | 16.00 | C-33 | 7.00 | C-33 | 7.00 |
| | BCCP-31 | 4.00 | CP-3F | 8.00 | C-35 | 7.00 | C-35 | 7.00 |
| | BCCP-32 | 5.00 | CP-5F | 8.00 | CP-3F | 8.00 | CP-3F | 8.00 |
| | BCCP-33 | 5.00 | BCCP-31 | 8.00 | CP-5F | 8.00 | CP-5F | 8.00 |
| | CH-33 | 3.00 | BCCP-33 | 7.00 | BCCP-3F | 7.00 | BCCP-3F | 7.00 |
| | CH-35 | 3.00 | BCCP-35 | 7.00 | BCCP-31 | 7.00 | BCCP-31 | 7.00 |
| | CH-43 | 3.00 | CP-33 | 6.00 | BCCP-33 | 7.00 | BCCP-33 | 7.00 |
| | CH-45 | 3.00 | | | CP-33 | 7.00 | CP-33 | 7.00 |
| | CBC-33F | 4.00 | | | | | | |
| | CBC-53F | 4.00 | | | | | | |
| | CBC-55F | 4.00 | | | | | | |

| Beispiele | 196 | | 197 | |
|---|---|---|---|---|
| S → N [°C] | | <-40 | | - |
| Clearing point [°C] | | +91 | | +84 |
| Viscosity [$mm^2s^{-1}$] 20 °C | | 23 | | 19 |
| Δn (20 °C,589 nm) | | +0.1170 | | +0.1186 |
| $V_{(10,0,20)}$ | | 1.99 | | 1.97(2nd) |
| $V_{(50,0,20)}$ | | 2.30 | | 2.25 |
| $V_{(90,0,20)}$ | | 2.78 | | 2.68 |
| Composition [%]: | PCH-3 | 22.0 | PCH-3 | 15.0 |
| | PCH-4 | 23.0 | PCH-4 | 10.0 |
| | PCH-5 | 9.0 | PCH-5 | 15.0 |
| | K6 | 5.0 | MB2N.F | 2.0 |
| | BCCP-31 | 4.0 | MB3N.F | 3.0 |
| | BCCP-32 | 5.0 | PCH-302 | 7.0 |
| | BCCP-33 | 5.0 | CCH-303 | 5.0 |
| | BCCP-35 | 5.0 | BCH-32 | 9.0 |
| | CP-3F | 10.0 | BCH-52 | 9.0 |
| | CP-5F | 7.0 | BCCP-31 | 5.0 |
| | CCPC-33 | 5.0 | BCCP-32 | 5.0 |
| | | | BCCP-33 | 5.0 |
| | | | BCCP-3F | 10.0 |

| Beispiele | | 198 | | 199 | | 200 |
|---|---|---|---|---|---|---|
| S → N [°C] | | <-20 | | <-40 | | <-20 |
| Clearing point [°C] | | +126 | | +89 | | +117 |
| Viscosity [$mm^2s^{-1}$] 20 °C | | 33 | | 22 | | 30 |
| Δn (20 °C,589 nm) | | +0.1316 | | +0.1493 | | +0.1167 |
| $V_{(10,0,20)}$ | | 2.00 | | 1.92 | | 2.03 |
| $V_{(50,0,20)}$ | | 2.30 | | 2.17 | | 2.32 |
| $V_{(90,0,20)}$ | | 2.76 | | 2.64 | | 2.78 |
| Composition [%]: | PCH-3 | 18.00 | PCH-2 | 9.00 | PCH-3 | 14.00 |
| | MB2N.F | 2.00 | PCH-3 | 16.00 | MB2N.F | 2.00 |
| | MB3N.F | 3.00 | PCH-4 | 11.00 | MB3N.F | 3.00 |
| | MB5N.F | 6.00 | PCH-5 | 12.00 | MB5N.F | 7.00 |
| | MB7N.F | 6.00 | BCH-5 | 8.00 | MB7N.F | 7.00 |
| | HP-3N.F | 6.00 | BCH-32 | 8.00 | CCH-301 | 9.00 |
| | CCH-302 | 5.00 | BCH-52 | 8.00 | CCH-303 | 8.00 |
| | CCH-303 | 6.00 | BCCP-3F | 6.00 | ECCP-31 | 4.00 |
| | BCCP-31 | 4.00 | BCCP-5F | 6.00 | ECCP-32 | 6.00 |
| | BCCP-32 | 4.00 | BCCP-33 | 6.00 | ECCP-33 | 4.00 |
| | BCCP-33 | 4.00 | PTP-102 | 4.00 | CH-33 | 4.00 |
| | BCCP-3F | 5.00 | PTP-201 | 6.00 | CH-35 | 4.00 |
| | BCCP-5F | 5.00 | | | CH-43 | 4.00 |
| | CBC-33 | 4.00 | | | CBC-53 | 6.00 |
| | CBC-53 | 4.00 | | | CBC-33F | 6.00 |
| | CBC-33F | 6.00 | | | CBC-53F | 6.00 |
| | CBC-53F | 6.00 | | | CBC-55F | 6.00 |
| | CBC-55F | 6.00 | | | | |

| Beispiele | 201 | | 202 | |
|---|---|---|---|---|
| S → N [°C] | | <-40 | | <-40 |
| Clearing point [°C] | | +80 | | +91 |
| Viscosity [$mm^2s^{-1}$] 20 °C | | 20 | | 20 |
| Δn (20 °C,589 nm) | | +0.1465 | | +0.1554 |
| $V_{(10,0,20)}$ | | 1.93 | | 2.10 |
| $V_{(50,0,20)}$ | | 2.21 | | 2.38 |
| $V_{(90,0,20)}$ | | 2.69 | | 2.81 |
| Composition [%]: | PCH-2 | 10.00 | PCH-3 | 22.00 |
| | PCH-3 | 18.00 | PCH-4 | 18.00 |
| | PCH-4 | 14.00 | PCH-302 | 4.00 |
| | PCH-5 | 18.00 | PTP-102 | 5.00 |
| | PTP-102 | 5.00 | PTP-201 | 6.00 |
| | PTP-201 | 5.00 | CPTP-301 | 4.00 |
| | BCCP-3F | 4.00 | BCCP-31 | 6.00 |
| | BCCP-5F | 4.00 | BCCP-33 | 6.00 |
| | BCCP-31 | 5.00 | BCH-32 | 10.00 |
| | BCCP-32 | 5.00 | BCH-52 | 9.00 |
| | BCCP-33 | 5.00 | BCH-52F | 10.00 |
| | CPTP-301 | 5.00 | | |
| | CPTP-302 | 5.00 | | |

| Beispiele | | 203 | | 204 | |
|---|---|---|---|---|---|
| S → N [°C] | | <−30 | | <−40 | |
| Clearing point [°C] | | +91 | | +80 | |
| Viscosity [$mm^2s^{-1}$] 20 °C | | 22 | | 21 | |
| Δn (20 °C,589 nm) | | +0.1510 | | +0.1536 | |
| $V_{(10,0,20)}$ | | 2.01 | | 1.85 | |
| $V_{(50,0,20)}$ | | 2.26 | | 2.12 | |
| $V_{(90,0,20)}$ | | 2.73 | | 2.53 | |
| Composition [%]: | | PCH-2 | 8.00 | PCH-3 | 10.00 |
| | | PCH-3 | 16.00 | MB2N.F | 2.00 |
| | | PCH-4 | 10.00 | MB3N.F | 3.00 |
| | | PCH-5 | 12.00 | MB5N.F | 7.00 |
| | | BCH-5 | 8.00 | MB7N.F | 7.00 |
| | | BCH-32 | 9.00 | PCH-301 | 16.00 |
| | | BCH-52 | 8.00 | PCH-501 | 4.00 |
| | | I32 | 5.00 | PTP-35 | 7.00 |
| | | BCCP-31 | 3.00 | PTP-45 | 7.00 |
| | | BCCP-32 | 3.00 | BCCP-31 | 5.00 |
| | | BCCP-33 | 3.00 | BCCP-32 | 5.00 |
| | | BCCP-3F | 3.00 | BCCP-33 | 5.00 |
| | | BCCP-5F | 3.00 | BCCP-35 | 5.00 |
| | | PTP-102 | 3.00 | CBC-53F | 4.00 |
| | | PTP-201 | 6.00 | CPTP-301 | 5.00 |
| | | | | CPTP-302 | 4.00 |
| | | | | CPTP-303 | 4.00 |

| Beispiele | 205 | | 206 | |
|---|---|---|---|---|
| S → N [°C] | | - | | - |
| Clearing point [°C] | | - | | 125.0 |
| Viscosity [$mm^2s^{-1}$] 20 °C | | - | | - |
| Δn (20 °C,589 nm) | | - | | +0.1364 |
| $V_{(10,0,20)}$ | | - | | - |
| $V_{(50,0,20)}$ | | - | | - |
| $V_{(90,0,20)}$ | | - | | - |
| Composition [%]: | PCH-3 | 20.0 | PCH-3 | 18.00 |
| | MB2N.F | 3.0 | MB2N.F | 2.00 |
| | MB3N.F | 4.0 | MB3N.F | 3.00 |
| | MB5N.F | 6.0 | MB5N.F | 6.00 |
| | PCH-301 | 8.0 | MB7N.F | 6.00 |
| | PCH-302 | 20.0 | HP-3N.F | 6.00 |
| | BCCP-31 | 5.0 | PCH-302 | 8.00 |
| | BCCP-32 | 5.0 | CCH-303 | 3.00 |
| | BCCP-33 | 5.0 | BCCP-31 | 5.00 |
| | BCCP-35 | 5.0 | BCCP-32 | 5.00 |
| | CPTP-301 | 4.0 | BCCP-33 | 5.00 |
| | CPTP-302 | 3.0 | BCCP-3F | 7.00 |
| | CPTP-303 | 4.0 | CBC-33 | 5.00 |
| | CCPC-33 | 4.0 | CBC-53 | 5.00 |
| | CCPC-35 | 4.0 | CBC-33F | 5.00 |
| | | | CBC-53F | 6.00 |
| | | | CBC-55F | 5.00 |

| Beispiele | 207 | | 208 | | 209 | | 210 | | 211 | |
|---|---|---|---|---|---|---|---|---|---|---|
| S → N [°C] | | <−40 | | - | | <−40 | | <0 | | <−20 |
| Clearing point [°C] | | +82 | | 89.0 | | +85 | | +122 | | +119 |
| Viscosity [$mm^2s^{-1}$] 20 °C | | 19 | | - | | 20 | | 30 | | 31 |
| Δn (20 °C,589 nm) | | 0.1178 | | +0.1603 | | +0.1574 | | +0.1198 | | 0.1156 |
| $V_{(10,0,20)}$ | | 1.65 | | 2.0 | | 1.93 | | 1.99 | | 1.93 |
| $V_{(50,0,20)}$ | | 2.06 | | 2.4 | | 2.20 | | 2.29 | | 2.21 |
| $V_{(90,0,20)}$ | | 2.67 | | 2.8 | | 2.63 | | 2.76 | | 2.64 |
| Composition [%]: | PCH-3 | 22.00 | PCH-2 | 7.00 | PCH-2 | 8.00 | PCH-3 | 14.00 | PCH-3 | 14.00 |
| | MB2N.F | 3.00 | PCH-3 | 17.00 | PCH-3 | 17.00 | MB2N.F | 2.00 | MB2N.F | 2.00 |
| | MB3N.F | 3.00 | K6 | 7.00 | K6 | 6.00 | MB3N.F | 3.00 | MB3N.F | 3.00 |
| | MB5N.F | 2.00 | K9 | 5.00 | K9 | 5.00 | MB4N.F | 7.00 | MB4N.F | 7.00 |
| | PCH-53 | 9.00 | G9 | 6.00 | G9 | 7.00 | MB5N.F | 7.00 | MB5N.F | 7.00 |
| | PCH-302 | 18.00 | MB2N.F | 2.00 | MB2N.F | 2.00 | CCH-301 | 8.00 | CCH-301 | 10.00 |
| | BCH-52 | 12.00 | MB3N.F | 2.00 | MB3N.F | 3.00 | CCH-303 | 9.00 | CCH-303 | 6.00 |
| | BCCP-31 | 6.00 | PCH-302 | 7.00 | PCH-302 | 6.00 | BCCP-31 | 4.00 | BCCP-31 | 4.00 |
| | BCCP-32 | 6.00 | PTP-35 | 5.00 | PTP-35 | 5.00 | BCCP-32 | 3.00 | BCCP-32 | 4.00 |
| | BCCP-33 | 6.00 | PTP-102 | 5.00 | PTP-102 | 5.00 | BCCP-33 | 3.00 | BCCP-33 | 4.00 |
| | BCCP-3 | 13.00 | CPTP-301 | 4.00 | CPTP-301 | 4.00 | CP-33 | 5.00 | CH-33 | 4.00 |
| | | | BCCP-31 | 8.00 | BCCP-31 | 8.00 | CP-35 | 5.00 | CH-35 | 4.00 |
| | | | BCCP-32 | 8.00 | BCCP-32 | 7.00 | CH-33 | 3.00 | CH-43 | 4.00 |
| | | | BCCP-33 | 7.00 | BCCP-33 | 8.00 | CH-35 | 3.00 | CH-45 | 3.00 |
| | | | CBC-33 | 5.00 | CBC-33 | 5.00 | CBC-33 | 6.00 | CBC-53 | 6.00 |
| | | | CBC-53 | 5.00 | CBC-53 | 4.00 | CBC-53 | 6.00 | CBC-33F | 6.00 |
| | | | | | | | CBC-53F | 6.00 | CBC-53F | 6.00 |
| | | | | | | | CBC-55F | 6.00 | CBC-55F | 6.00 |

| Beispiele | 212 | | 213 | | 214 | | 215 | | 216 | |
|---|---|---|---|---|---|---|---|---|---|---|
| S → N [°C] | | <−40 | | − | | <−40 | | <−30 | | − |
| Clearing point [°C] | | +90 | | +115 | | +89 | | +116 | | +85 |
| Viscosity [$mm^2s^{-1}$] 20 °C | | 20 | | − | | 22 | | 30 | | − |
| Δn (20 °C,589 nm) | | +0.1498 | | +0.1211 | | 0.1155 | | 0.1165 | | +0.1073 |
| $V_{(10,0,20)}$ | | 2.09 | | 2.04 | | 2.11 | | 1.96 | | 1.41(1st) |
| $V_{(50,0,20)}$ | | 2.40 | | 2.35 | | 2.46 | | 2.24 | | 1.79 |
| $V_{(90,0,20)}$ | | 2.90 | | 2.85 | | 3.03 | | 2.71 | | 2.32 |
| Composition [%]: | PCH-3 | 22.00 | PCH-3 | 18.00 | PCH-3 | 18.00 | PCH-3 | 14.00 | PDX-2 | 6.00 |
| | PCH-4 | 23.00 | MB2N.F | 2.00 | PDX-3 | 8.00 | MB2N.F | 2.00 | PDX-3 | 11.00 |
| | CCH-301 | 8.00 | MB3N.F | 3.00 | PDX-4 | 7.00 | MB3N.F | 3.00 | PDX-4 | 10.00 |
| | PTP-102 | 4.00 | MB4N.F | 5.00 | PCH-301 | 2.00 | MB4N.F | 7.00 | PCH-3 | 12.00 |
| | PTP-201 | 5.00 | MB5N.F | 5.00 | D-301 | 10.00 | MB5N.F | 7.00 | PCH-4 | 8.00 |
| | CPTP-301 | 6.00 | PCH-301 | 8.00 | D-401 | 10.00 | CCH-301 | 9.00 | PCH-302 | 8.00 |
| | CPTP-302 | 5.00 | CCH-301 | 9.00 | D-501 | 10.00 | CCH-303 | 8.00 | BCCP-31 | 6.00 |
| | CPTP-303 | 5.00 | BCCP-31 | 4.00 | CP-33 | 6.00 | BCCP-31 | 4.00 | BCCP-32 | 6.00 |
| | BCCP-31 | 7.00 | BCCP-32 | 4.00 | CP-35 | 6.00 | BCCP-32 | 6.00 | BCCP-33 | 6.00 |
| | BCCP-33 | 7.00 | BCCP-33 | 4.00 | BCCP-31 | 5.00 | BCCP-33 | 4.00 | BCCP-3 | 6.00 |
| | BCCP-35 | 8.00 | CP-33 | 5.00 | BCCP-32 | 5.00 | CH-33 | 4.00 | BCCP-3F | 7.00 |
| | | | CP-35 | 5.00 | BCCP-33 | 5.00 | CH-35 | 4.00 | CP-3F | 7.00 |
| | | | CH-33 | 4.00 | CPTP-301 | 4.00 | CH-43 | 4.00 | CP-5F | 7.00 |
| | | | CBC-53 | 6.00 | CPTP-302 | 4.00 | CBC-53 | 6.00 | | |
| | | | CBC-33F | 6.00 | | | CBC-33F | 6.00 | | |
| | | | CBC-53F | 6.00 | | | CBC-53F | 6.00 | | |
| | | | CBC-55F | 6.00 | | | CBC-55F | 6.00 | | |

| Beispiele | 217 | | 218 | | 219 | | 220 | |
|---|---|---|---|---|---|---|---|---|
| S → N [°C] | | < 20 | | <−40 | | – | | <−30 |
| Clearing point [°C] | | +112 | | +91 | | 117.0 | | +118 |
| Viscosity [$mm^2s^{-1}$] 20 °C | | 26 | | 20 | | – | | 33 |
| Δn (20 °C,589 nm) | | +0.1499 | | +0.1554 | | +0.1256 | | +0.1241 |
| $V_{(10,0,20)}$ | | 2.09 | | 2.17 | | 2.1 | | 1.97 |
| $V_{(60,0,20)}$ | | 2.31 | | 2.47 | | 2.4 | | 2.27 |
| $V_{(90,0,20)}$ | | 2.81 | | 2.94 | | 2.9 | | 2.73 |
| Composition [%]: | MB2N.F | 2.00 | PCH-3 | 20.00 | PCH-3 | 20.00 | PCH-3 | 20.00 |
| | MB3N.F | 3.00 | PCH-4 | 11.00 | PYP-3N.F | 5.00 | PYP-3N.F | 5.00 |
| | PYP-5N.F | 8.00 | G9 | 15.00 | PYP-5N.F | 6.00 | PYP-5N.F | 6.00 |
| | PYP-6N.F | 8,00 | PTP-35 | 6.00 | PYP-7N.F | 4.00 | PYP-7N.F | 6.00 |
| | HP-3N.F | 5.00 | PTP-102 | 2.00 | CCH-301 | 12.00 | CCH-301 | 12.00 |
| | PCH-301 | 10.00 | PTP-201 | 5.00 | BCCP-31 | 4.00 | BCCP-31 | 3.00 |
| | CCH-303 | 12.00 | CPTP-301 | 4.00 | BCCP-32 | 4.00 | CH-33 | 5.00 |
| | BCCP-31 | 7.00 | CPTP-303 | 4.00 | BCCP-33 | 5.00 | CH-35 | 5.00 |
| | BCCP-32 | 7.00 | BCCP-31 | 6.00 | CP-43 | 4.00 | CH-43 | 5.00 |
| | BCCP-33 | 8.00 | BCCP-33 | 6.00 | CH-33 | 4.00 | CH-45 | 5.00 |
| | BCCP-35 | 8.00 | CP-3F | 8.00 | CH-35 | 4.00 | CBC-33 | 4.00 |
| | CPTP-301 | 6.00 | BCH-32 | 6.00 | CH-43 | 4.00 | CBC-53 | 4.00 |
| | CPTP-302 | 5.00 | BCH-52 | 7.00 | CBC-33 | 6.00 | CBC-53F | 5.00 |
| | CPTP-303 | 7.00 | | | CBC-53 | 5.00 | CBC-55F | 5.00 |
| | CBC-33F | 4.00 | | | CBC-53F | 6.00 | BCCP-3 | 10.00 |
| | | | | | CBC-55F | 5.00 | | |

| Beispiele | 221 | | 222 | | 223 | | 224 | |
|---|---|---|---|---|---|---|---|---|
| S → N [°C] | | < 20 | | <0 | | <0 | | <-40 |
| Clearing point [°C] | | +110 | | +106 | | 83 | | +79 |
| Viscosity [$mm^2s^{-1}$] 20 °C | | 24 | | 25 | | 19 | | 18 |
| Δn (20 °C,589 nm) | | +0.1518 | | +0.1168 | | +0.1527 | | +0.1514 |
| $V_{(10,0,20)}$ | | 2.09 | | 2.15 | | 2.17 | | 2.07 |
| $V_{(50,0,20)}$ | | 2.39 | | 2.46 | | 2.46 | | 2.37 |
| $V_{(90,0,20)}$ | | 2.84 | | 2.95 | | 2.89 | | 2.85 |
| Composition [%]: | MB2N.F | 2.00 | PCH-3 | 18.00 | ME2N.F | 2.00 | PCH-3 | 20.00 |
| | ME3N.F | 3.00 | PDX-3 | 8.00 | ME3N.F | 3.00 | PCH-4 | 18.00 |
| | MB4N.F | 6.00 | PDX-4 | 8.00 | K6 | 6.00 | PCH-5 | 5.00 |
| | ME5N.F | 6.00 | PDX-5 | 8.00 | K9 | 8.00 | PCH-302 | 14.00 |
| | HP-3N.F | 4.00 | PCH-301 | 13.00 | K15 | 8.00 | PTP-35 | 3.00 |
| | PCH-301 | 16.00 | BCCP-31 | 3.00 | PCH-301 | 7.00 | PTP-102 | 5.00 |
| | PTP-35 | 8.00 | ECCP-32 | 3.00 | PYP-32 | 6.00 | PTP-201 | 5.00 |
| | BCCP-31 | 6.00 | ECCP-33 | 3.00 | PYP-33 | 6.00 | BCCP-31 | 5.00 |
| | BCCP-32 | 6.00 | BCCP-35 | 4.00 | PTP-201 | 6.00 | BCCP-32 | 5.00 |
| | BCCP-33 | 6.00 | CH-33 | 4.00 | BCCP-31 | 8.00 | BCCP-33 | 5.00 |
| | BCCP-35 | 6.00 | CH-35 | 4.00 | BCCP-32 | 8.00 | BCCP-35 | 3.00 |
| | BCCP-3F | 7.00 | CH-43 | 3.00 | BCCP-33 | 8.00 | CPTP-301 | 5.00 |
| | CP-3F | 9.00 | CBC-33 | 5.00 | BCCP-35 | 8.00 | CPTP-302 | 3.00 |
| | CPTP-301 | 5.00 | CBC-44 | 3.00 | BCCP-3F | 8.00 | CPTP-303 | 4.00 |
| | CPTP-302 | 5.00 | CBC-53 | 5.00 | BCCP-3 | 8.00 | | |
| | CPTP-303 | 6.00 | CBC-55 | 4.00 | | | | |
| | | | ECCP-3 | 4.00 | | | | |

| Beispiele | 225 | | 226 | | 227 | | 228 | | 229 | |
|---|---|---|---|---|---|---|---|---|---|---|
| S → N [°C] | | – | | – | | <-40 | | – | | <-40 |
| Clearing point [°C] | | 99.4 | | 91.0 | | +85 | | +86 | | +87 |
| Viscosity [mm$^2$ s$^{-1}$] 20 °C | | – | | – | | 23 | | 21.5 | | 23 |
| Δn (20 °C, 589 nm) | | – | | – | | +0.1072 | | +0.1069 | | +0.1074 |
| $V_{(10,0,20)}$ | | – | | – | | 1.44(1st) | | 1.40(1st) | | 1.49(1st) |
| $V_{(50,0,20)}$ | | – | | – | | 1.79 | | 1.80 | | 1.88 |
| $V_{(90,0,20)}$ | | – | | – | | 2.25 | | 2.34 | | 2.38 |
| Composition [%]: | PCH-3 | 18.80 | PDX-2 | 6.50 | PCH-3 | 19.00 | PDX-2 | 5.00 | PCH-3 | 19.00 |
| | PCH-4 | 12.90 | PDX-3 | 9.80 | PCH-4 | 11.00 | PCH-3 | 20.00 | PCH-4 | 11.00 |
| | MB2N.F | 2.40 | PCH-3 | 17.40 | PCH-5 | 6.00 | PCH-4 | 10.00 | PCH-5 | 8.00 |
| | MB3N.F | 3.50 | PCH-4 | 12.00 | MB2N.F | 2.00 | MB2N.F | 2.00 | MB2N.F | 2.00 |
| | CCH-303 | 9.40 | MB2N.F | 2.20 | MB3N.F | 4.00 | MB3N.F | 2.00 | MB3N.F | 3.00 |
| | BCCP-31 | 7.10 | MB3N.F | 3.30 | MB5N.F | 5.00 | MB5N.F | 6.00 | MB5N.F | 4.00 |
| | BCCP-32 | 7.10 | BCCP-31 | 6.50 | CCH-303 | 12.00 | CCH-303 | 11.00 | CCH-303 | 11.00 |
| | BCCP-33 | 7.10 | BCCP-32 | 6.50 | BCCP-31 | 5.00 | BCCP-31 | 6.00 | BCCP-31 | 3.00 |
| | BCCP-3 | 7.10 | BCCP-33 | 6.50 | BCCP-32 | 5.00 | BCCP-32 | 6.00 | BCCP-32 | 3.00 |
| | BCCP-3F | 8.20 | BCCP-3 | 6.50 | BCCP-33 | 4.00 | BCCP-33 | 5.00 | BCCP-33 | 3.00 |
| | CP-3F | 8.20 | BCCP-3F | 7.60 | BCCP-3 | 5.00 | BCCP-3 | 6.00 | BCCP-3 | 7.00 |
| | CP-5F | 8.20 | CP-3F | 7.60 | BCCP-3F | 7.00 | BCCP-3F | 7.00 | BCCP-3F | 6.00 |
| | | | CP-5F | 7.60 | CP-3F | 8.00 | CP-3F | 7.00 | BCCP-5F | 6.00 |
| | | | | | CP-5F | 7.00 | CP-5F | 7.00 | CP-3F | 7.00 |
| | | | | | | | | | CP-5F | 7.00 |

| Beispiele | 230 | | 231 | | 232 | |
|---|---|---|---|---|---|---|
| S → N [°C] | | <-40 | | - | | <-40 |
| Clearing point [°C] | | +85 | | +80 | | +91 |
| Viscosity [$mm^2s^{-1}$] 20 °C | | 20 | | - | | 23 |
| Δn (20 °C, 589 nm) | | +0.1570 | | +0.1647 | | +0.1155 |
| $V_{(10,0,20)}$ | | 1.97 | | 2.12 | | 1.94 |
| $V_{(50,0,20)}$ | | 2.26 | | 2.38 | | 2.24 |
| $V_{(90,0,20)}$ | | 2.73 | | 2.80 | | 2.72 |
| Composition [%]: | PCH-2 | 8.00 | PCH-3 | 15.0 | PCH-3 | 22.00 |
| | PCH-3 | 17.00 | PDX-3 | 8.0 | PCH-4 | 20.00 |
| | K6 | 6.00 | PDX-5 | 8.0 | PCH-5 | 13.00 |
| | K9 | 6.00 | PCH-301 | 8.0 | HP-3N.F | 4.00 |
| | G9 | 6.00 | PTP-35 | 5.0 | BCCP-31 | 6.00 |
| | MB2N.F | 2.00 | PTP-45 | 5.0 | BCCP-32 | 6.00 |
| | MB3N.F | 2.00 | PTP-102 | 7.0 | BCCP-33 | 6.00 |
| | PCH-302 | 6.00 | PTP-201 | 7.0 | BCCP-35 | 6.00 |
| | PTP-35 | 5.00 | BCCP-31 | 7.0 | CP-3F | 8.00 |
| | PTP-102 | 5.00 | BCCP-33 | 6.0 | CP-5F | 5.00 |
| | CPTP-301 | 4.00 | BCH-32 | 12.0 | BCH-32 | 4.00 |
| | BCCP-31 | 8.00 | BCH-52 | 12.0 | | |
| | BCCP-32 | 8.00 | | | | |
| | BCCP-33 | 7.00 | | | | |
| | CBC-33F | 5.00 | | | | |
| | CBC-53F | 5.00 | | | | |

| Beispiele | 233 | | 234 | | 235 | |
|---|---|---|---|---|---|---|
| S → N [°C] | | – | | – | | <-20 |
| Clearing point [°C] | | 87.0 | | +92 | | +124 |
| Viscosity [$mm^2 s^{-1}$] 20 °C | | 21 | | – | | 32 |
| Δn (20 °C,589 nm) | | +0.1322 | | +0.1182 | | +0.1385 |
| $V_{(10,0,20)}$ | | 2.1 | | 2.09 | | 1.98 |
| $V_{(50,0,20)}$ | | 2.4 | | 2.41 | | 2.26 |
| $V_{(90,0,20)}$ | | 2.8 | | 2.94 | | 2.74 |
| Composition [%]: | PCH-2 | 10.0 | PCH-3 | 22.0 | PCH-3 | 18.00 |
| | PCH-3 | 20.0 | PCH-4 | 23.0 | MB2N.F | 2.00 |
| | PCH-5 | 10.0 | PCH-5 | 9.0 | MB3N.F | 3.00 |
| | G9 | 10.0 | BCH-5 | 5.0 | MB5N.F | 6.00 |
| | MB2N | 5.0 | PCH-302 | 2.0 | MB7N.F | 6.00 |
| | CCH-303 | 4.0 | BCCP-31 | 5.0 | HP-3N.F | 6.00 |
| | BCCP-3F | 6.0 | BCCP-32 | 5.0 | PCH-302 | 11.00 |
| | BCCP-5F | 6.0 | BCCP-33 | 5.0 | BCCP-31 | 5.00 |
| | BCCP-31 | 6.0 | BCCP-35 | 4.0 | BCCP-32 | 5.00 |
| | BCCP-32 | 6.0 | CP-3F | 10.0 | BCCP-33 | 5.00 |
| | BCCP-33 | 5.0 | CP-5F | 7.0 | BCCP-3F | 7.00 |
| | CPTP-301 | 4.0 | BCH-32 | 3.0 | CBC-33 | 5.00 |
| | CPTP-302 | 4.0 | | | CBC-53 | 5.00 |
| | CPTP-303 | 4.0 | | | CBC-33F | 5.00 |
| | | | | | CBC-53F | 6.00 |
| | | | | | CBC-55F | 5.00 |

| Beispiele | 236 | | 237 | | 238 | | 239 | |
|---|---|---|---|---|---|---|---|---|
| S → N [°C] | | < 0 | | <-40 | | <-40 | | <-20 |
| Clearing point [°C] | | +90 | | +87 | | +82 | | +85 |
| Viscosity [$mm^2s^{-1}$] 20 °C | | 36 | | 22 | | 17 | | 18 |
| Δn (20 °C,589 nm) | | +0.1528 | | +0.1355 | | +0.1425 | | +0.1579 |
| $V_{(10,0,20)}$ | | 1.35 | | 1.85 | | 2.21 | | 2.26 |
| $V_{(50,0,20)}$ | | 1.57 | | 2.14 | | 2.52 | | 2.55 |
| $V_{(90,0,20)}$ | | 1.91 | | 2.60 | | 3.01 | | 3.05 |
| Composition [%]: | MB2N.F | 4.00 | PCH-2 | 7.00 | PCH-3 | 20.00 | PYP-3N.F | 4.00 |
| | MB3N.F | 6.00 | PCH-3 | 17.00 | PCH-4 | 9.00 | PYP-5N.F | 4.00 |
| | MB4N.F | 10.00 | G9 | 10.00 | MB5N.F | 4.00 | PYP-7N.F | 5.00 |
| | MB5N.F | 10.00 | MB2N | 5.00 | PCH-301 | 15.00 | PTP-35 | 8.00 |
| | HP-3N.F | 5.00 | MB2N.F | 2.00 | PCH-302 | 4.00 | PTP-45 | 8.00 |
| | HP-4N.F | 5.00 | MB3N.F | 3.00 | BCCP-31 | 7.00 | PCH-301 | 16.00 |
| | HP-5N.F | 4.00 | HP-3N.F | 5.00 | BCCP-32 | 7.00 | BCCP-31 | 7.00 |
| | PCH-302 | 18.00 | PCH-302 | 10.00 | BCCP-33 | 7.00 | BCCP-32 | 7.00 |
| | BCCP-31 | 5.00 | CCH-303 | 4.00 | BCCP-35 | 7.00 | BCCP-33 | 8.00 |
| | BCCP-32 | 5.00 | BCCP-31 | 6.00 | PTP-102 | 5.00 | BCCP-35 | 8.00 |
| | BCCP-33 | 6.00 | BCCP-32 | 7.00 | PTP-201 | 5.00 | BCCP-3 | 15.00 |
| | BCCP-35 | 6.00 | BCCP-33 | 7.00 | CPTP-301 | 5.00 | PTP-102 | 5.00 |
| | CP-3F | 4.00 | BCCP-35 | 5.00 | CPTP-302 | 5.00 | PTP-201 | 5.00 |
| | PTP-201 | 6.00 | CPTP-301 | 4.00 | | | | |
| | CPTP-301 | 6.00 | CPTP-302 | 4.00 | | | | |
| | | | CPTP-303 | 4.00 | | | | |

| Beispiele | | 240 |
|---|---|---|
| S → N [°C] | | <−30 |
| Clearing point [°C] | | +77 |
| Viscosity [$mm^2s^{-1}$] | 20 °C | 21 |
| Δn | (20 °C,589 nm) | +0.1467 |
| $V_{(10,0,20)}$ | | 1.84 |
| $V_{(50,0,20)}$ | | 2.10 |
| $V_{(90,0,20)}$ | | 2.50 |
| Composition [%]: | PCH-2 | 8.00 |
| | PCH-3 | 18.00 |
| | K6 | 6.00 |
| | K9 | 5.00 |
| | G9 | 9.00 |
| | MB2N | 3.00 |
| | MB2N.F | 2.00 |
| | MB3N.F | 3.00 |
| | PCH-302 | 6.00 |
| | PTP-35 | 3.00 |
| | PTP-102 | 4.00 |
| | BCCP-31 | 6.00 |
| | BCCP-32 | 6.00 |
| | BCCP-33 | 5.00 |
| | BCCP-35 | 5.00 |
| | CBC-33F | 5.00 |
| | CBC-53F | 6.00 |

| Beispiele | 241 | | 242 | | 243 | |
|---|---|---|---|---|---|---|
| S → N [°C] | | – | | <-30 | | <-20 |
| Clearing point [°C] | | 112.0 | | +90 | | +93 |
| Viscosity [$mm^2s^{-1}$] 20 °C | | – | | 42 | | 21 |
| Δn (20 °C, 589 nm) | | +0.1345 | | +0.1507 | | 0.1079 |
| $V_{(10,0,20)}$ | | 2.0 | | 1.24 | | 2.21 |
| $V_{(50,0,20)}$ | | 2.3 | | 1.44 | | 2.52 |
| $V_{(90,0,20)}$ | | 2.7 | | 1.95 | | 3.04 |
| Composition [%]: | PCH-3 | 13.00 | MB2N.F | 4.00 | PCH-3 | 17.00 |
| | MB2N.F | 2.00 | MB3N.F | 6.00 | PDX-3 | 8.00 |
| | MB3N.F | 3.00 | MB4N.F | 10.00 | PDX-4 | 8.00 |
| | MB5N.F | 6.00 | MB5N.F | 10.00 | PCH-301 | 8.00 |
| | MB7N.F | 6.00 | HP-3N.F | 6.00 | D-301 | 8.00 |
| | HP-3N.F | 6.00 | HP-4N.F | 6.00 | D-401 | 7.00 |
| | PCH-302 | 15.00 | HP-5N.F | 4.00 | D-501 | 7.00 |
| | ECCP-31 | 5.00 | PCH-302 | 19.00 | CP-33 | 7.00 |
| | ECCP-32 | 5.00 | ECCP-33 | 6.00 | ECCP-31 | 5.00 |
| | ECCP-33 | 6.00 | ECCP-35 | 6.00 | ECCP-32 | 5.00 |
| | ECCP-3F | 5.00 | BCH-32 | 10.00 | ECCP-33 | 5.00 |
| | I32 | 7.00 | BCH-52F | 10.00 | ECCP-35 | 5.00 |
| | CBC-53 | 6.00 | CPTP-301 | 3.00 | CBC-33 | 5.00 |
| | CBC-33F | 5.00 | | | CBC-53 | 5.00 |
| | CBC-53F | 5.00 | | | | |
| | CBC-55F | 5.00 | | | | |

| Beispiele | 244 | 245 | 246 | 247 |
|---|---|---|---|---|
| S → N [°C] | - | <−40 | <−40 | <0 |
| Clearing point [°C] | 92.0 | +85 | +91 | +90 |
| Viscosity [$mm^2s^{-1}$] 20 °C | 21 | 19 | 23 | 21 |
| Δn (20 °C,589 nm) | +0.1278cal | +0.1360 | +0.1153 | +0.1035 |
| $V_{(10,0,20)}$ | 2.0 | 1.92 | 1.94 | 2.24 |
| $V_{(50,0,20)}$ | 2.4 | 2.38 | 2.24 | 2.54 |
| $V_{(90,0,20)}$ | 2.9 | 2.61 | 2.72 | 3.06 |

Composition [%]:

| 244 | | 245 | | 246 | | 247 | |
|---|---|---|---|---|---|---|---|
| PCH-2 | 7.00 | PCH-2 | 6.0 | PCH-3 | 22.00 | PCH-3 | 18.00 |
| PCH-3 | 17.00 | PCH-3 | 18.0 | PCH-4 | 20.00 | PCH-4 | 17.00 |
| G9 | 10.00 | MB2N.F | 2.0 | PCH-5 | 5.00 | PCH-5 | 17.00 |
| MB2N | 3.00 | MB3N.F | 3.0 | MB3N.F | 3.00 | ECCP-31 | 8.00 |
| MB2N.F | 2.00 | MB5N.F | 6.0 | MB5N.F | 3.00 | ECCP-32 | 8.00 |
| MB3N.F | 3.00 | PCH-302 | 16.0 | BCCP-31 | 6.00 | ECCP-33 | 8.00 |
| HP-3N.F | 3.00 | PCH-501 | 11.0 | BCCP-32 | 6.00 | ECCP-35 | 8.00 |
| CCH-303 | 12.00 | BCCP-31 | 6.0 | BCCP-33 | 6.00 | ECCP-3F | 8.00 |
| BCCP-3F | 6.00 | BCCP-32 | 6.0 | BCCP-35 | 6.00 | ECCP-5F | 8.00 |
| BCCP-31 | 6.00 | BCH-32 | 6.0 | CP-3F | 9.00 | | |
| BCCP-32 | 7.00 | BCH-52 | 5.0 | CP-5F | 7.00 | | |
| BCCP-33 | 7.00 | CPTP-301 | 3.0 | BCH-32 | 7.00 | | |
| BCCP-35 | 5.00 | CPTP-302 | 4.0 | | | | |
| CPTP-301 | 4.00 | CPTP-303 | 4.0 | | | | |
| CPTP-302 | 4.00 | CCPC-35 | 4.0 | | | | |
| CPTP-303 | 4.00 | | | | | | |

| Beispiele | 248 | | 249 | |
|---|---|---|---|---|
| S → N [°C] | | <−20 | | <−30 |
| Clearing point [°C] | | +121 | | +84 |
| Viscosity [$mm^2s^{-1}$] 20 °C | | 31 | | 20 |
| Δn (20 °C,589 nm) | | +0.1306 | | +0.1398 |
| $V_{(10,0,20)}$ | | 1.96 | | 2.09 |
| $V_{(50,0,20)}$ | | 2.23 | | 2.42 |
| $V_{(90,0,20)}$ | | 2.67 | | 2.94 |
| Composition [%]: | MB2N.F | 3.00 | PCH-2 | 6.00 |
| | MB3N.F | 4.00 | PCH-3 | 20.00 |
| | MB5N.F | 7.00 | PCH-4 | 11.00 |
| | MB7N.F | 8.00 | PCH-5 | 11.00 |
| | HP-3N.F | 6.00 | PTP-102 | 7.00 |
| | PCH-302 | 12.00 | PTP-201 | 7.00 |
| | PCH-501 | 8.00 | BCCP-31 | 8.00 |
| | CCH-303 | 5.00 | BCCP-33 | 8.00 |
| | BCCP-31 | 4.00 | BCCP-35 | 8.00 |
| | BCCP-32 | 4.00 | BCCP-3 | 7.00 |
| | BCCP-33 | 4.00 | BCCP-3F | 7.00 |
| | BCCP-3F | 4.00 | | |
| | BCCP-5F | 5.00 | | |
| | CBC-33 | 4.00 | | |
| | CBC-53 | 4.00 | | |
| | CBC-33F | 6.00 | | |
| | CBC-53F | 6.00 | | |
| | CBC-55F | 6.00 | | |

| Beispiele | 250 | | 251 | |
|---|---|---|---|---|
| S → N [°C] | | <-30 | | - |
| Clearing point [°C] | | +88 | | 81.0 |
| Viscosity [$mm^2s^{-1}$] 20 °C | | 23 | | - |
| Δn (20 °C, 589 nm) | | +0.1169 | | +0.1408 |
| $V_{(10,0,20)}$ | | 1.98 | | 1.9 |
| $V_{(50,0,20)}$ | | 2.28 | | 2.2 |
| $V_{(90,0,20)}$ | | 2.76 | | 2.7 |
| Composition [%]: | PCH-3 | 22.00 | PCH-2 | 10.00 |
| | PCH-4 | 20.00 | PCH-3 | 18.00 |
| | G9 | 13.00 | PCH-4 | 14.00 |
| | HP-3N.F | 4.00 | PCH-5 | 14.00 |
| | BCCP-31 | 6.00 | PTP-102 | 6.00 |
| | BCCP-32 | 6.00 | PTP-201 | 3.00 |
| | BCCP-33 | 6.00 | BCCP-3F | 5.00 |
| | BCCP-35 | 5.00 | BCCP-5F | 5.00 |
| | CP-3F | 8.00 | BCCP-31 | 6.00 |
| | CP-5F | 5.00 | BCCP-32 | 6.00 |
| | BCH-32 | 5.00 | BCCP-33 | 5.00 |
| | | | CPTP-301 | 4.00 |
| | | | CPTP-302 | 4.00 |

| Beispiele | | 252 | | 253 |
|---|---|---|---|---|
| S → N [°C] | | <-20 | | <-20 |
| Clearing point [°C] | | +121 | | +121 |
| Viscosity [$mm^2s^{-1}$] 20 °C | | 30 | | 31 |
| Δn (20 °C,589 nm) | | +0.1185 | | +0.1119 |
| $V_{(10,0,20)}$ | | 2.07 | | 2.09 |
| $V_{(50,0,20)}$ | | 2.37 | | 2.37 |
| $V_{(90,0,20)}$ | | 2.86 | | 2.86 |
| Composition [%]: | PCH-2 | 9.00 | PCH-2 | 9.00 |
| | PCH-3 | 19.00 | PCH-3 | 19.00 |
| | MB2N.F | 2.00 | MB2N.F | 2.00 |
| | MB3N.F | 3.00 | MB3N.F | 3.00 |
| | MB5N.F | 8.00 | MB5N.F | 8.00 |
| | CCH-303 | 7.00 | CCH-303 | 7.00 |
| | BCCP-31 | 5.00 | BCCP-31 | 5.00 |
| | BCCP-32 | 6.00 | BCCP-32 | 6.00 |
| | BCCP-33 | 4.00 | BCCP-33 | 4.00 |
| | CH-33 | 5.00 | CH-33 | 5.00 |
| | CP-33 | 5.00 | CH-35 | 4.00 |
| | CP-35 | 4.00 | CH-43 | 4.00 |
| | CCPC-33 | 5.00 | CCPC-33 | 5.00 |
| | CCPC-34 | 4.00 | CCPC-34 | 5.00 |
| | CBC-33F | 5.00 | CBC-33F | 5.00 |
| | CBC-53F | 5.00 | CBC-53F | 5.00 |
| | CBC-55F | 4.00 | CBC-55F | 4.00 |

| Beispiele | 254 | | 255 | | 256 | |
|---|---|---|---|---|---|---|
| S → N [°C] | | <-40 | | - | | <-40 |
| Clearing point [°C] | | +78 | | +90 | | +87 |
| Viscosity [$mm^2s^{-1}$] 20 °C | | 21 | | 21.8 | | 22 |
| Δn (20 °C,589 nm) | | +0.1398 | | +0.1303 | | +0.1355 |
| $V_{(10,0,20)}$ | | 1.80 | | 2.02 | | 1.85 |
| $V_{(50,0,20)}$ | | 2.07 | | 2.32 | | 2.14 |
| $V_{(90,0,20)}$ | | 2.47 | | 2.80 | | 2.60 |
| Composition [%]: | PCH-2 | 8.00 | PCH-2 | 8.00 | PCH-2 | 7.00 |
| | PCH-3 | 18.00 | PCH-3 | 18.00 | PCH-3 | 17.00 |
| | K6 | 6.00 | PCH-4 | 18.00 | G9 | 10.00 |
| | K9 | 5.00 | PCH-5 | 14.00 | MB2N | 5.00 |
| | G9 | 9.00 | PYP-53 | 5.00 | MB2N.F | 2.00 |
| | MB2N | 3.00 | BCCP-31 | 5.00 | MB3N.F | 3.00 |
| | MB2N.F | 2.00 | BCCP-32 | 5.00 | HP-3N.F | 5.00 |
| | MB3N.F | 3.00 | BCCP-33 | 5.00 | PCH-302 | 10.00 |
| | PCH-302 | 8.00 | BCCP-35 | 6.00 | CCH-303 | 4.00 |
| | PTP-102 | 3.00 | CBC-53 | 4.00 | BCCP-31 | 6.00 |
| | BCCP-31 | 6.00 | CBC-33F | 4.00 | BCCP-32 | 7.00 |
| | BCCP-32 | 7.00 | CBC-53F | 3.00 | BCCP-33 | 7.00 |
| | BCCP-33 | 7.00 | CPTP-301 | 2.00 | BCCP-35 | 5.00 |
| | BCCP-35 | 5.00 | CPTP-303 | 3.00 | CPTP-301 | 4.00 |
| | CBC-33F | 5.00 | | | CPTP-302 | 4.00 |
| | CBC-53F | 5.00 | | | CPTP-303 | 4.00 |

| Beispiele | 257 | | 258 | | 259 | |
|---|---|---|---|---|---|---|
| S → N [°C] | | <-40 | | - | | <-30 |
| Clearing point [°C] | | +84 | | 121.0 | | +93 |
| Viscosity [$mm^2s^{-1}$] 20 °C | | 20 | | - | | 21 |
| Δn (20 °C, 589 nm) | | +0.0997 | | +0.1127 | | +0.1492 |
| $V_{(10,0,20)}$ | | 2.03 | | 2.0 | | 2.12 |
| $V_{(50,0,20)}$ | | 2.32 | | 2.3 | | 2.42 |
| $V_{(90,0,20)}$ | | 2.82 | | 2.7 | | 2.86 |
| Composition [%]: | PCH-2 | 5.00 | PCH-2 | 9.00 | PCH-2 | 8.00 |
| | PCH-3 | 18.00 | PCH-3 | 18.00 | PCH-3 | 20.00 |
| | PCH-4 | 14.00 | ME2N.F | 2.00 | PDX-3 | 8.00 |
| | PCH-5 | 9.00 | ME3N.F | 3.00 | PCH-301 | 4.00 |
| | ME2N.F | 2.00 | ME5N.F | 9.00 | D-401 | 5.00 |
| | ME3N.F | 3.00 | CCH-303 | 7.00 | D-501 | 5.00 |
| | CCH-303 | 7.00 | BCCP-31 | 4.00 | PTP-35 | 5.00 |
| | CCH-502 | 10.00 | BCCP-32 | 6.00 | PTP-45 | 4.00 |
| | BCCP-31 | 5.00 | BCCP-33 | 4.00 | CPTP-301 | 6.00 |
| | BCCP-32 | 6.00 | CH-33 | 5.00 | CPTP-302 | 6.00 |
| | BCCP-33 | 5.00 | CH-35 | 4.00 | CPTP-303 | 5.00 |
| | BCCP-35 | 6.00 | CH-43 | 5.00 | BCCP-31 | 5.00 |
| | CCPC-33 | 5.00 | CCPC-33 | 6.00 | BCCP-32 | 5.00 |
| | CCPC-34 | 5.00 | CCPC-34 | 5.00 | BCCP-33 | 4.00 |
| | | | CBC-33F | 4.00 | BCCP-35 | 5.00 |
| | | | CBC-53F | 5.00 | BCCP-3 | 5.00 |
| | | | CBC-55F | 4.00 | | |

| Beispiele | 260 | | 261 | | 262 | |
|---|---|---|---|---|---|---|
| S → N [°C] | | <-40 | | - | | - |
| Clearing point [°C] | | +82 | | +96 | | +90 |
| Viscosity [$mm^2s^{-1}$] 20 °C | | 19 | | 44 | | - |
| Δn (20 °C,589 nm) | | +0.1416 | | +0.1512 | | +0.1234 |
| $V_{(10,0,20)}$ | | 1.91 | | 1.30(2nd) | | 2.36(2nd) |
| $V_{(50,0,20)}$ | | 2.16 | | 1.48 | | 2.69 |
| $V_{(90,0,20)}$ | | 2.54 | | 1.78 | | 3.19 |
| Composition [%]: | PCH-2 | 10.00 | MB2N.F | 8.0 | PCH-2 | 8.0 |
| | PCH-3 | 22.00 | MB3N.F | 10.0 | PCH-3 | 17.0 |
| | PCH-4 | 8.00 | MB5N.F | 11.0 | PCH-5 | 14.0 |
| | PCH-5 | 15.00 | HP-3N.F | 6.0 | PCH-302 | 7.0 |
| | PTP-102 | 6.00 | HP-4N.F | 6.0 | I32 | 8.0 |
| | PTP-201 | 6.00 | HP-5N.F | 4.0 | I35 | 8.0 |
| | BCCP-3F | 3.00 | PCH-302 | 15.0 | I52 | 8.0 |
| | BCCP-31 | 6.00 | BCCP-31 | 4.0 | BCCP-31 | 6.0 |
| | BCCP-32 | 6.00 | BCCP-33 | 4.0 | BCCP-32 | 6.0 |
| | BCCP-33 | 5.00 | BCCP-35 | 4.0 | ECCP-3 | 6.0 |
| | BCCP-35 | 5.00 | BCH-32 | 9.0 | ECCP-3F | 8.0 |
| | CPTP-302 | 4.00 | BCH-52 | 9.0 | CBC-33F | 4.0 |
| | CCPC-33 | 4.00 | BCH-52F | 10.0 | | |

| Beispiele | 263 | | 264 | |
|---|---|---|---|---|
| S → N [°C] | | <−30 | | <−30 |
| Clearing point [°C] | | +88 | | +115 |
| Viscosity [$mm^2 s^{-1}$] 20 °C | | 22 | | 30 |
| Δn (20 °C, 589 nm) | | +0.1389 | | +0.1391 |
| $V_{(10,0,20)}$ | | 1.95 | | 2.00 |
| $V_{(50,0,20)}$ | | 2.24 | | 2.29 |
| $V_{(90,0,20)}$ | | 2.70 | | 2.75 |
| Composition [%]: | PCH-2 | 10.00 | PCH-3 | 10.00 |
| | PCH-3 | 20.00 | MB2N.F | 2.00 |
| | PCH-4 | 13.00 | MB3N.F | 3.00 |
| | PCH-5 | 15.00 | ME5N.F | 6.00 |
| | MB2N | 4.00 | ME7N.F | 6.00 |
| | BCCP-3F | 7.00 | HP-3N.F | 6.00 |
| | BCCP-31 | 6.00 | PCH-302 | 16.00 |
| | BCCP-32 | 6.00 | BCCP-31 | 5.00 |
| | BCCP-33 | 6.00 | BCCP-32 | 5.00 |
| | CPTP-301 | 5.00 | ECCP-33 | 5.00 |
| | CPTP-302 | 4.00 | I32 | 7.00 |
| | CPTP-303 | 4.00 | I52 | 8.00 |
| | | | CBC-53 | 6.00 |
| | | | CBC-33F | 5.00 |
| | | | CBC-53F | 5.00 |
| | | | CBC-55F | 5.00 |

| Beispiele | 265 | | 266 | | 267 | |
|---|---|---|---|---|---|---|
| S → N [°C] | | <−30 | | <−30 | | <−40 |
| Clearing point [°C] | | +86 | | +89 | | +94 |
| Viscosity [$mm^2s^{-1}$] 20 °C | | 24 | | 23 | | 20 |
| Δn (20 °C, 589 nm) | | +0.1073 | | +0.1147 | | +0.1517 |
| $V_{(10,0,20)}$ | | 1.48 | | 1.92 | | 2.29 |
| $V_{(50,0,20)}$ | | 1.86 | | 2.21 | | 2.63 |
| $V_{(90,0,20)}$ | | 2.40 | | 2.68 | | 3.17 |
| Composition [%]: | PDX-2 | 6.00 | PCH-3 | 22.00 | PCH-3 | 20.0 |
| | PDX-3 | 9.00 | PCH-4 | 23.00 | PCH-4 | 10.0 |
| | PCH-3 | 16.00 | PCH-5 | 9.00 | PCH-5 | 15.0 |
| | PCH-4 | 11.00 | HP-3N.F | 3.00 | CCH-303 | 8.0 |
| | MB2N.F | 2.00 | PCH-302 | 2.00 | PTP-102 | 4.0 |
| | MB3N.F | 3.00 | BCCP-31 | 5.00 | PTP-201 | 5.0 |
| | CCH-303 | 8.00 | BCCP-32 | 5.00 | CPTP-301 | 6.0 |
| | BCCP-31 | 6.00 | BCCP-33 | 5.00 | CPTP-302 | 5.0 |
| | BCCP-32 | 6.00 | BCCP-35 | 4.00 | CPTP-303 | 5.0 |
| | BCCP-33 | 6.00 | CP-3F | 10.00 | BCCP-31 | 7.0 |
| | BCCP-3 | 6.00 | CP-5F | 7.00 | BCCP-33 | 7.0 |
| | BCCP-3F | 7.00 | BCH-32 | 5.00 | BCCP-35 | 8.0 |
| | CP-3F | 7.00 | | | | |
| | CP-5F | 7.00 | | | | |

| Beispiele | 268 | | 269 | | 270 | | 271 | | 272 | |
|---|---|---|---|---|---|---|---|---|---|---|
| S → N [°C] | | - | | - | | - | | - | | <-30 |
| Clearing point [°C] | | +87 | | +87 | | +88 | | +85 | | +81 |
| Viscosity [$mm^2s^{-1}$] 20 °C | | 22.2 | | | | 21.5 | | - | | 19 |
| Δn (20 °C,589 nm) | | +0.1033 | | +0.1078 | | +0.1090 | | +0.1074 | | +0.0997 |
| $V_{(10,0,20)}$ | | 1.47(1st) | | 1.43(1st) | | 1.51(1st) | | 1.37(1st) | | 1.71(1st) |
| $V_{(50,0,20)}$ | | 1.85 | | 1.82 | | 1.91 | | 1.76 | | 2.13 |
| $V_{(90,0,20)}$ | | 2.36 | | 2.36 | | 2.44 | | 2.30 | | 2.72 |
| Composition [%]: | PDX-2 | 6.00 | PDX-3 | 9.00 | PCH-3 | 20.00 | PDX-2 | 5.00 | PCH-3 | 14.60 |
| | PDX-3 | 11.00 | PDX-4 | 8.00 | PCH-4 | 11.00 | PCH-3 | 20.00 | PCH-4 | 13.80 |
| | PDX-4 | 10.00 | PDX-5 | 6.00 | PCH-5 | 6.00 | PCH-4 | 9.00 | PCH-5 | 15.60 |
| | PCH-3 | 12.00 | PCH-3 | 20.00 | MB2N.F | 2.00 | MB2N.F | 2.00 | PCH-302 | 9.60 |
| | PCH-4 | 8.00 | PCH-4 | 9.00 | MB3N.F | 3.00 | MB3N.F | 3.00 | C-33 | 5.60 |
| | CCH-303 | 8.00 | CCH-303 | 4.00 | MB5N.F | 5.00 | MB5N.F | 6.00 | C-35 | 5.60 |
| | BCCP-31 | 6.00 | BCCP-31 | 5.00 | CCH-303 | 10.00 | CCH-303 | 11.00 | CP-3F | 6.40 |
| | BCCP-32 | 6.00 | BCCP-32 | 4.00 | BCCP-31 | 6.00 | BCCP-31 | 6.00 | CP-5F | 6.40 |
| | BCCP-33 | 6.00 | BCCP-33 | 5.00 | BCCP-32 | 5.00 | BCCP-32 | 5.00 | BCCP-3F | 5.60 |
| | BCCP-3 | 6.00 | BCCP-35 | 4.00 | BCCP-33 | 5.00 | BCCP-33 | 5.00 | BCCP-31 | 5.60 |
| | BCCP-3F | 7.00 | BCCP-3 | 5.00 | BCCP-3 | 6.00 | BCCP-3 | 6.00 | BCCP-33 | 5.60 |
| | CP-3F | 7.00 | BCCP-3F | 7.00 | BCCP-3F | 7.00 | BCCP-3F | 8.00 | CP-33 | 5.60 |
| | CP-5F | 7.00 | CP-3F | 7.00 | CP-3F | 7.00 | CP-3F | 7.00 | | |
| | | | CP-5F | 7.00 | CP-5F | 7.00 | CP-5F | 7.00 | | |

| Beispiele | 273 | | 274 | | 275 | | 276 | |
|---|---|---|---|---|---|---|---|---|
| S → N [°C] | | <−20 | | <−30 | | <−40 | | <−20 |
| Clearing point [°C] | | +129 | | +95 | | +85 | | +78 |
| Viscosity [$mm^2s^{-1}$] 20 °C | | 34 | | 21 | | 22 | | 19 |
| Δn (20 °C,589 nm) | | +0.1381 | | +0.1373 | | +0.1165 | | 0.1031 |
| $V_{(10,0,20)}$ | | 2.04 | | 2.35 | | 2.08 | | 2.26 |
| $V_{(50,0,20)}$ | | 2.33 | | 2.69 | | 2.36 | | 2.57 |
| $V_{(90,0,20)}$ | | 2.84 | | 3.22 | | 2.85 | | 3.15 |
| Composition [%]: | PCH-3 | 18.00 | PCH-2 | 8.00 | PCH-3 | 18.00 | PCH-3 | 17.00 |
| | MB2N.F | 2.00 | PCH-3 | 17.00 | PCH-4 | 15.00 | PDX-3 | 8.00 |
| | MB3N.F | 3.00 | PCH-5 | 8.00 | PCH-5 | 16.00 | PDX-4 | 7.00 |
| | MB5N.F | 6.00 | G9 | 8.00 | PCH-7 | 8.00 | PCH-301 | 3.00 |
| | MB7N.F | 6.00 | MB2N.F | 2.00 | BCH-32 | 5.00 | D-301 | 10.00 |
| | HP-3N.F | 6.00 | PCH-302 | 6.00 | BCH-52F | 5.00 | D-401 | 10.00 |
| | PCH-302 | 6.00 | PTP-35 | 4.00 | BCCP-31 | 6.00 | D-501 | 10.00 |
| | CCH-303 | 5.00 | PTP-102 | 3.00 | BCCP-32 | 6.00 | BCH-32 | 6.00 |
| | BCCP-31 | 4.00 | CPTP-301 | 5.00 | BCCP-33 | 6.00 | BCCP-31 | 8.00 |
| | BCCP-32 | 4.00 | BCCP-3F | 6.00 | BCCP-3F | 8.00 | BCCP-32 | 7.00 |
| | BCCP-3F | 10.00 | BCCP-31 | 7.00 | BCCP-5F | 7.00 | BCCP-33 | 7.00 |
| | CBC-33 | 4.00 | BCCP-32 | 8.00 | | | BCCP-35 | 7.00 |
| | CBC-53 | 4.00 | BCCP-33 | 8.00 | | | | |
| | CBC-55 | 4.00 | CBC-33F | 5.00 | | | | |
| | CBC-33F | 6.00 | CBC-53F | 5.00 | | | | |
| | CBC-53F | 6.00 | | | | | | |
| | CBC-55F | 6.00 | | | | | | |

| Beispiele | 277 | | 278 | | 279 | |
|---|---|---|---|---|---|---|
| S → N [°C] | | < 20 | | <−30 | | <0 |
| Clearing point [°C] | | +112 | | +76 | | +94 |
| Viscosity [$mm^2s^{-1}$] 20 °C | | 26 | | 19 | | 21 |
| Δn (20 °C, 589 nm) | | +0.1499 | | 0.1093 | | +0.1201 |
| $V_{(10,0,20)}$ | | 2.09 | | 2.06 | | 2.31 |
| $V_{(50,0,20)}$ | | 2.31 | | 2.37 | | 2.60 |
| $V_{(90,0,20)}$ | | 2.81 | | 2.92 | | 3.08 |
| Composition [%]: | MB2N.F | 2.00 | PCH-3 | 17.00 | MB2N.F | 2.00 |
| | MB3N.F | 3.00 | PDX-3 | 8.00 | MB3N.F | 3.00 |
| | PYP-5N.F | 8.00 | PDX-4 | 7.00 | MB5N.F | 7.00 |
| | PYP-6N.F | 8.00 | PCH-301 | 3.00 | MB7N.F | 6.00 |
| | HP-3N.F | 5.00 | D-301 | 12.00 | CCH-301 | 16.00 |
| | PCH-301 | 10.00 | D-401 | 12.00 | CCH-303 | 20.00 |
| | CCH-303 | 12.00 | D-501 | 12.00 | BCCP-31 | 8.00 |
| | BCCP-31 | 7.00 | BCH-52 | 3.00 | BCCP-32 | 7.00 |
| | BCCP-32 | 7.00 | BCCP-31 | 6.00 | BCCP-33 | 7.00 |
| | BCCP-33 | 8.00 | BCCP-32 | 5.00 | BCCP-35 | 7.00 |
| | BCCP-35 | 8.00 | BCCP-33 | 5.00 | CPTP-301 | 6.00 |
| | CPTP-301 | 6.00 | BCCP-35 | 5.00 | CPTP-302 | 5.00 |
| | CPTP-302 | 5.00 | CPTP-301 | 5.00 | CPTP-303 | 6.00 |
| | CPTP-303 | 7.00 | | | | |
| | CBC-33F | 4.00 | | | | |

| Beispiele | | 280 | |
|---|---|---|---|
| S → N [°C] | | | <0 |
| Clearing point [°C] | | | +98 |
| Viscosity [$mm^2 s^{-1}$] 20 °C | | | 22 |
| Δn (20 °C,589 nm) | | | +0.1011 |
| $V_{(10,0,20)}$ | | | 2.23 |
| $V_{(50,0,20)}$ | | | 2.49 |
| $V_{(90,0,20)}$ | | | 2.90 |
| Composition [%]: | | PCH-2 | 8.00 |
| | | PCH-3 | 18.00 |
| | | PCH-4 | 10.00 |
| | | PDX-3 | 8.00 |
| | | CCH-303 | 7.00 |
| | | D-501 | 5.00 |
| | | CP-33 | 5.00 |
| | | CP-35 | 5.00 |
| | | BCCP-31 | 6.00 |
| | | BCCP-32 | 6.00 |
| | | BCCP-33 | 6.00 |
| | | BCCP-35 | 6.00 |
| | | CCPC-33 | 5.00 |
| | | CCPC-34 | 5.00 |

| Beispiele | 281 | | 282 | | 283 | | 284 | |
|---|---|---|---|---|---|---|---|---|
| S → N [°C] | | <-40 | | - | | - | | - |
| Clearing point [°C] | | +93 | | +86 | | +93 | | +75 |
| Viscosity [$mm^2s^{-1}$] 20 °C | | 21 | | 19.9 | | 23 | | - |
| $\Delta n$ (20 °C, 589 nm) | | +0.1475 | | +0.1279 | | +0.1243 | | +0.1009 |
| $V_{(10,0,20)}$ | | 2.12 | | 1.91 | | 2.34(2nd) | | - |
| $V_{(50,0,20)}$ | | 2.43 | | 2.19 | | 2.68 | | - |
| $V_{(90,0,20)}$ | | 2.94 | | 2.78 | | 3.23 | | - |
| Composition [%]: | PCH-3 | 15.00 | PCH-2 | 13.00 | PCH-2 | 8.00 | PCH-3 | 20.00 |
| | PDX-3 | 8.00 | PCH-3 | 7.00 | PCH-3 | 19.00 | PCH-4 | 8.00 |
| | PDX-4 | 7.00 | G9 | 10.00 | PCH-5 | 18.00 | PCH-5 | 8.00 |
| | PCH-301 | 4.00 | K9 | 2.00 | I32 | 8.00 | PCH-5F | 10.00 |
| | D-301 | 7.00 | PYP-3N.F | 5.00 | I35 | 8.00 | PCH-6F | 10.00 |
| | D-401 | 7.00 | PYP-5N.F | 5.00 | I52 | 8.00 | BCCP-3F | 10.00 |
| | D-501 | 7.00 | PCH-301 | 10.00 | BCCP-31 | 7.00 | BCCP-5F | 10.00 |
| | PTP-35 | 5.00 | PCH-501 | 10.00 | BCCP-32 | 7.00 | CP-3F | 6.00 |
| | PTP-45 | 4.00 | BCCP-31 | 6.00 | BCCP-3 | 7.00 | CP-5F | 6.00 |
| | CPTP-301 | 6.00 | BCCP-32 | 6.00 | BCCP-3F | 8.00 | BCCP-33 | 6.00 |
| | CPTP-302 | 6.00 | BCCP-33 | 6.00 | CBC-33F | 2.00 | CPTP-303 | 6.00 |
| | CPTP-303 | 5.00 | CBC-33 | 5.00 | | | | |
| | BCCP-31 | 5.00 | CBC-53 | 5.00 | | | | |
| | BCCP-32 | 5.00 | CBC-33F | 5.00 | | | | |
| | BCCP-33 | 4.00 | CBC-55F | 5.00 | | | | |
| | BCCP-3 | 5.00 | | | | | | |

| Beispiele | 285 | | 286 | | 287 | |
|---|---|---|---|---|---|---|
| S → N [°C] | | - | | <-30 | | <-40 |
| Clearing point [°C] | | +93 | | +87 | | +94 |
| Viscosity [$mm^2s^{-1}$] 20 °C | | 21 | | 23 | | 20 |
| Δn (20 °C,589 nm) | | +0.1228 | | +0.1359 | | +0.1510 |
| $V_{(10,0,20)}$ | | 2.44(2nd) | | 1.88 | | 2.26 |
| $V_{(50,0,20)}$ | | 2.76 | | 2.17 | | 2.58 |
| $V_{(90,0,20)}$ | | 3.28 | | 2.60 | | 3.10 |
| Composition [%]: | PCH-2 | 6.0 | PCH-2 | 10.0 | PCH-3 | 22.0 |
| | PCH-3 | 16.0 | PCH-3 | 20.0 | PCH-4 | 20.0 |
| | PCH-5 | 13.0 | PCH-5 | 17.0 | PCH-5 | 3.0 |
| | PCH-302 | 8.0 | MB2N | 5.0 | CCH-303 | 8.0 |
| | I32 | 8.0 | MB3N | 5.0 | PTP-102 | 4.0 |
| | I35 | 9.0 | CCH-303 | 4.0 | PTP-201 | 4.0 |
| | I52 | 9.0 | BCCP-3F | 5.0 | CPTP-301 | 6.0 |
| | BCCP-31 | 7.0 | BCCP-5F | 5.0 | CPTP-302 | 5.0 |
| | BCCP-32 | 7.0 | BCCP-31 | 6.0 | CPTP-303 | 6.0 |
| | BCCP-3 | 5.0 | BCCP-32 | 6.0 | BCCP-31 | 7.0 |
| | BCCP-3F | 8.0 | BCCP-33 | 5.0 | BCCP-33 | 7.0 |
| | CBC-33F | 4.0 | CPTP-301 | 4.0 | BCCP-35 | 8.0 |
| | | | CPTP-302 | 4.0 | | |
| | | | CPTP-303 | 4.0 | | |

| Beispiele | 288 | | 289 | | 290 | | 291 | |
|---|---|---|---|---|---|---|---|---|
| S → N [°C] | | - | | < 0 | | <-20 | | <-30 |
| Clearing point [°C] | | +85 | | +94 | | +124 | | +91 |
| Viscosity [$mm^2s^{-1}$] 20 °C | | - | | 43 | | 33 | | 22 |
| Δn (20 °C,589 nm) | | +0.1157 | | +0.1532 | | +0.1274 | | +0.1512 |
| $V_{(10,0,20)}$ | | 2.28(2nd) | | 1.27 | | 1.99 | | 2.02 |
| $V_{(50,0,20)}$ | | 2.60 | | 1.47 | | 2.25 | | 2.30 |
| $V_{(90,0,20)}$ | | 3.15 | | 1.80 | | 2.64 | | 2.82 |
| Composition [%]: | PCH-3 | 15.0 | MB2N.F | 4.00 | PCH-3 | 10.00 | PCH-2 | 8.00 |
| | PCH-4 | 15.0 | MB3N.F | 6.00 | MB2N.F | 2.00 | PCH-3 | 16.00 |
| | PCH-5 | 14.0 | MB4N.F | 10.00 | MB3N.F | 3.00 | PCH-4 | 10.00 |
| | PCH-302 | 8.0 | MB5N.F | 10,00 | MB5N.F | 6.00 | PCH-5 | 12.00 |
| | CCH-303 | 5.0 | HP-3N.F | 6.00 | MB7N.F | 6.00 | BCH-5 | 8.00 |
| | BCH-32 | 9.0 | HP-4N.F | 6.00 | HP-3N.F | 6.00 | BCH-32 | 9.00 |
| | BCH-52 | 9.0 | HP-5N.F | 5.00 | PCH-302 | 12.00 | BCH-52 | 8.00 |
| | BCCP-31 | 5.0 | PCH-302 | 20.00 | BCH-32 | 8.00 | I32 | 5.00 |
| | BCCP-32 | 5.0 | BCCP-33 | 5.00 | BCCP-31 | 5.00 | ECCP-31 | 3.00 |
| | BCCP-33 | 5.0 | BCCP-35 | 5.00 | BCCP-32 | 6.00 | ECCP-32 | 3.00 |
| | BCCP-3F | 10.0 | BCH-32 | 10.00 | BCCP-33 | 6.00 | ECCP-33 | 3.00 |
| | | | BCH-52 | 10.00 | CH-33 | 4.00 | ECCP-3F | 3.00 |
| | | | CPTP-301 | 3.00 | CH-35 | 4.00 | ECCP-5F | 3.00 |
| | | | | | CH-43 | 3.00 | PTP-35 | 3.00 |
| | | | | | CH-45 | 4.00 | PTP-102 | 6.00 |
| | | | | | CBC-33F | 5.00 | | |
| | | | | | CBC-53F | 5.00 | | |

| Beispiele | 292 | | 293 | | 294 | | 295 | | 296 | |
|---|---|---|---|---|---|---|---|---|---|---|
| S → N [°C] | | <20 | | <−30 | | - | | <−20 | | - |
| Clearing point [°C] | | +88 | | +85 | | +92 | | +84 | | +91 |
| Viscosity [$mm^2 s^{-1}$] 20 °C | | 22 | | 22 | | - | | 21 | | - |
| Δn (20 °C,589 nm) | | 0.1553 | | +0.1290 | | +0.1235 | | 0.1029 | | +0.1156 |
| $V_{(10,0,20)}$ | | 1.86 | | 1.88 | | 2.38(2nd) | | 1.86 | | 2.06 |
| $V_{(50,0,20)}$ | | 2.12 | | 2.15 | | 2.70 | | 2.12 | | 2.36 |
| $V_{(90,0,20)}$ | | 2.51 | | 2.62 | | 3.20 | | 2.57 | | 2.85 |
| Composition [%]: | PCH-3 | 14.00 | PCH-2 | 10.0 | PCH-2 | 7.0 | PCH-3 | 14.00 | PCH-3 | 22.0 |
| | MB2N.F | 2.00 | PCH-3 | 20.0 | PCH-3 | 17.0 | MB2N.F | 2.00 | PCH-4 | 23.0 |
| | MB3N.F | 3.00 | PCH-4 | 10.0 | PCH-5 | 16.0 | MB3N.F | 3.00 | PCH-5 | 9.0 |
| | MB4N.F | 7.00 | PYP-3N.F | 4.0 | PCH-302 | 5.0 | MB4N.F | 7.00 | BCCP-3 | 5.0 |
| | MB5N.F | 7.00 | PYP-5N.F | 5.0 | I32 | 8.0 | MB5N.F | 7.00 | PCH-53 | 2.0 |
| | PCH-301 | 8.00 | PCH-301 | 11.0 | I35 | 8.0 | PCH-301 | 8.00 | BCCP-31 | 4.0 |
| | PTP-35 | 7.00 | BCCP-31 | 6.0 | I52 | 8.0 | CCH-301 | 8.00 | BCCP-32 | 5.0 |
| | PTP-45 | 7.00 | BCCP-32 | 6.0 | BCCP-31 | 7.0 | CCH-303 | 9.00 | BCCP-33 | 5.0 |
| | BCCP-31 | 8.00 | BCCP-33 | 6.0 | BCCP-32 | 7.0 | BCCP-31 | 6.00 | BCCP-35 | 2.0 |
| | BCCP-32 | 8.00 | BCCP-35 | 5.0 | BCCP-3 | 5.0 | BCCP-32 | 6.00 | CP-3F | 10.0 |
| | BCCP-33 | 8.00 | CBC-33F | 5.0 | BCCP-3F | 8.0 | BCCP-33 | 6.00 | CP-5F | 7.0 |
| | BCCP-35 | 8.00 | CBC-53F | 5.0 | CBC-33F | 4.0 | BCCP-35 | 6.00 | BCH-32 | 6.0 |
| | CPTP-301 | 5.00 | CBC-55F | 4.0 | | | CP-33 | 5.00 | | |
| | CPTP-302 | 4.00 | CPTP-302 | 3.0 | | | CP-35 | 5.00 | | |
| | CPTP-303 | 4.00 | | | | | CP-43 | 5.00 | | |
| | | | | | | | CBC-33 | 3.00 | | |

| Beispiele | 297 | | 298 | | 299 | |
|---|---|---|---|---|---|---|
| S → N [°C] | | – | | <0 | | <-30 |
| Clearing point [°C] | | +90 | | +96 | | +90 |
| Viscosity [$mm^2s^{-1}$] 20 °C | | 21.0 | | 21 | | 21 |
| Δn (20 °C, 589 nm) | | +0.1284 | | +0.1104 | | +0.1074 |
| $V_{(10,0,20)}$ | | – | | 2.14 | | 2.21 |
| $V_{(50,0,20)}$ | | – | | 2.42 | | 2.52 |
| $V_{(90,0,20)}$ | | – | | 2.89 | | 3.04 |
| Composition [%]: | PCH-2 | 10.00 | PCH-2 | 8.00 | PCH-2 | 8.00 |
| | PCH-3 | 20.00 | PCH-3 | 21.00 | PCH-3 | 20.00 |
| | PCH-4 | 10.00 | MB2N.F | 2.00 | PCH-4 | 10.00 |
| | PYP-3N.F | 4.00 | MB3N.F | 4.00 | PDX-3 | 8.00 |
| | PYP-5N.F | 5.00 | CCH-303 | 5.00 | CCH-303 | 7.00 |
| | PCH-501 | 11.00 | PCH-501 | 6.00 | CCH-502 | 7.00 |
| | BCCP-31 | 6.00 | D-401 | 6.00 | CP-33 | 4.00 |
| | BCCP-32 | 6.00 | D-501 | 6.00 | CP-35 | 3.00 |
| | BCCP-33 | 6.00 | CP-33 | 8.00 | BCCP-31 | 5.00 |
| | BCCP-35 | 6.00 | BCCP-31 | 6.00 | BCCP-32 | 6.00 |
| | CBC-33 | 4.00 | BCCP-32 | 6.00 | BCCP-33 | 6.00 |
| | CBC-53 | 4.00 | BCCP-33 | 6.00 | BCCP-35 | 6.00 |
| | CBC-53F | 5.00 | BCCP-35 | 6.00 | CCPC-33 | 5.00 |
| | CPTP-302 | 3.00 | CBC-33 | 5.00 | CBC-53F | 5.00 |
| | | | CBC-53 | 5.00 | | |

| Beispiele | | 300 |
|---|---|---|
| S → N [°C] | | <-30 |
| Clearing point [°C] | | +77 |
| Viscosity [$mm^2s^{-1}$] 20 °C | | 21 |
| $\Delta n$ (20 °C,589 nm) | | +0.1464 |
| $V_{(10,0,20)}$ | | 1.82 |
| $V_{(50,0,20)}$ | | 2.10 |
| $V_{(90,0,20)}$ | | 2.54 |
| Composition [%]: | PCH-2 | 7.00 |
| | PCH-3 | 12.00 |
| | K6 | 7.00 |
| | K9 | 7.00 |
| | K15 | 4.00 |
| | G9 | 9.00 |
| | MB2N | 3.00 |
| | MB2N.F | 2.00 |
| | MB3N.F | 3.00 |
| | PCH-302 | 8.00 |
| | PTP-102 | 3.00 |
| | BCCP-31 | 6.00 |
| | BCCP-32 | 7.00 |
| | BCCP-33 | 7.00 |
| | BCCP-35 | 5.00 |
| | CBC-33F | 5.00 |
| | CBC-53F | 5.00 |

| Beispiele | 301 | | 302 | | 303 | | 304 | |
|---|---|---|---|---|---|---|---|---|
| S → N [°C] | | - | | <-40 | | <-40 | | - |
| Clearing point [°C] | | +90 | | +88 | | +82 | | +82 |
| Viscosity [$mm^2s^{-1}$] 20 °C | | 21 | | 21 | | 21 | | 20.1 |
| Δn (20 °C,589 nm) | | +0.1168 | | +0.1468 | | +0.1003 | | +0.1341 |
| $V_{(10,0,20)}$ | | 2.18 | | 1.98 | | 1.88 | | 1.85 |
| $V_{(50,0,20)}$ | | 2.49 | | 2.23 | | 2.12 | | 2.12 |
| $V_{(90,0,20)}$ | | 2.99 | | 2.70 | | 2.55 | | 2.56 |
| Composition [%]: | PCH-3 | 20.00 | PCH-2 | 9.00 | PCH-3 | 11.00 | PCH-2 | 17.00 |
| | PCH-4 | 16.00 | PCH-3 | 16.00 | MB2N.F | 2.00 | PCH-3 | 15.00 |
| | PCH-5 | 15.00 | PCH-4 | 11.00 | MB3N.F | 3.00 | PYP-3N.F | 5.00 |
| | PTP-201 | 4.00 | PCH-5 | 12.00 | MB5N.F | 7.00 | PYP-5N.F | 5.00 |
| | BCCP-31 | 7.00 | BCH-5 | 8.00 | MB7N.F | 7.00 | PCH-304 | 10.00 |
| | BCCP-32 | 7.00 | BCH-32 | 8.00 | PCH-301 | 10.00 | PCH-501 | 12.00 |
| | BCCP-33 | 7.00 | BCH-52 | 8.00 | CCH-301 | 9.00 | ECCP-31 | 6.00 |
| | BCCP-35 | 7.00 | BCCP-3F | 6.00 | CCH-303 | 9.00 | ECCP-32 | 6.00 |
| | BCCP-3F | 7.00 | BCCP-5F | 6.00 | BCCP-31 | 6.00 | ECCP-33 | 6.00 |
| | CP-3F | 8.00 | BCCP-33 | 6.00 | BCCP-32 | 6.00 | CBC-33 | 5.00 |
| | CPTP-301 | 2.00 | PTP-35 | 6.00 | BCCP-33 | 5.00 | CBC-53 | 5.00 |
| | | | PTP-102 | 4.00 | BCCP-35 | 5.00 | CBC-33F | 4.00 |
| | | | | | CP-33F | 6.00 | CBC-55F | 4.00 |
| | | | | | CP-35F | 6.00 | | |
| | | | | | CP-55F | 5.00 | | |
| | | | | | CBC-53F | 3.00 | | |

| Beispiele | 305 | | 306 | | 307 | |
|---|---|---|---|---|---|---|
| S → N [°C] | | <-40 | | <-40 | | <-40 |
| Clearing point [°C] | | +83 | | +91 | | +90 |
| Viscosity [$mm^2s^{-1}$] 20 °C | | 19 | | 22 | | 22 |
| Δn (20 °C,589 nm) | | +0.1258 | | +0.1150 | | +0.1150 |
| $V_{(10,0,20)}$ | | 2.23 | | 2.06 | | 2.01 |
| $V_{(50,0,20)}$ | | 2.54 | | 2.35 | | 2.31 |
| $V_{(90,0,20)}$ | | 3.06 | | 2.81 | | 2.79 |
| Composition [%]: | PCH-3 | 13.00 | PCH-3 | 22.00 | PCH-3 | 22.00 |
| | PDX-3 | 8.00 | PCH-4 | 20.00 | PCH-4 | 20.00 |
| | PDX-4 | 7.00 | PCH-5 | 7.00 | PCH-5 | 5.00 |
| | PCH-301 | 10.00 | BHP-3F.F | 6.00 | BHP-3F.F | 11.00 |
| | D-301 | 8.00 | BCH-32 | 8.00 | BCH-32 | 8.00 |
| | D-401 | 7.00 | BCCP-31 | 6.00 | BCCP-31 | 6.00 |
| | D-501 | 8.00 | BCCP-32 | 6.00 | BCCP-32 | 6.00 |
| | CP-33 | 5.00 | BCCP-33 | 5.00 | BCCP-33 | 6.00 |
| | CP-35 | 5.00 | BCCP-35 | 5.00 | BCCP-35 | 5.00 |
| | PTP-35 | 3.00 | BCCP-3F | 10.00 | BCCP-3F | 8.00 |
| | PTP-45 | 3.00 | CP-3F | 5.00 | CP-3F | 3.00 |
| | CPTP-301 | 5.00 | | | | |
| | CPTP-302 | 5.00 | | | | |
| | BCCP-31 | 5.00 | | | | |
| | BCCP-32 | 4.00 | | | | |
| | BCCP-33 | 4.00 | | | | |

| Beispiele | 308 | | 309 | | 310 | |
|---|---|---|---|---|---|---|
| S → N [°C] | | <−40 | | <−20 | | <0 |
| Clearing point [°C] | | +82 | | +96 | | +86 |
| Viscosity [$mm^2s^{-1}$] 20 °C | | 19 | | 20 | | 18 |
| Δn (20 °C,589 nm) | | +0.1098 | | +0.1572 | | +0.1564 |
| $V_{(10,0,20)}$ | | 1.68(1st) | | 2.23 | | 2.33 |
| $V_{(50,0,20)}$ | | 2.13 | | 2.64 | | 2.66 |
| $V_{(90,0,20)}$ | | 2.78 | | 3.05 | | 3.18 |
| Composition [%]: | PCH-2 | 6.00 | MB2N.F | 2.00 | MB2N.F | 2.00 |
| | PCH-3 | 20.00 | MB3N.F | 3.00 | MB3N.F | 3.00 |
| | PCH-4 | 11.00 | MB5N.F | 8.00 | MB5N.F | 7.00 |
| | PCH-5 | 11.00 | MB7N.F | 7.00 | PTP-35 | 8.00 |
| | PCH-301 | 10.00 | PCH-301 | 15.00 | PTP-45 | 8.00 |
| | BCCP-31 | 7.00 | PCH-302 | 10.00 | PCH-301 | 15.00 |
| | BCCP-32 | 7.00 | BCCP-31 | 8.00 | BCCP-31 | 7.00 |
| | BCCP-33 | 7.00 | BCCP-32 | 8.00 | BCCP-32 | 7.00 |
| | BCCP-35 | 7.00 | BCCP-33 | 8.00 | BCCP-33 | 8.00 |
| | BCCP-3 | 7.00 | BCCP-35 | 7.00 | BCCP-35 | 8.00 |
| | BCCP-3F | 7.00 | PTP-102 | 8.00 | BCCP-3 | 15.00 |
| | | | CPTP-301 | 8.00 | PTP-102 | 6.00 |
| | | | CPTP-302 | 8.00 | PTP-201 | 6.00 |

| Beispiele | 311 | | 312 | | 313 | | 314 | |
|---|---|---|---|---|---|---|---|---|
| S → N [°C] | | <0 | | <-20 | | <-40 | | <-40 |
| Clearing point [°C] | | 78 | | 82 | | +92 | | +85 |
| Viscosity [$mm^2s^{-1}$] 20 °C | | 19 | | 21 | | 22 | | 20 |
| Δn (20 °C,589 nm) | | +0.1616 | | +0.1609 | | +0.1046 | | +0.1272 |
| $V_{(10,0,20)}$ | | 2.15 | | 2.06 | | 1.63(1st) | | 2.03 |
| $V_{(50,0,20)}$ | | 2.44 | | 2.33 | | 2.02 | | 2.29 |
| $V_{(90,0,20)}$ | | 2.87 | | 2.71 | | 2.55 | | 2.75 |
| Composition [%]: | K6 | 8.00 | PYP-3N.F | 4.00 | PCH-3 | 20.00 | PCH-3 | 15.00 |
| | K9 | 10.00 | PYP-5N.F | 4.00 | PCH-4 | 18.00 | PCH-4 | 15.00 |
| | K12 | 6.00 | PYP-6N.F | 4.00 | MB2N.F | 2.00 | PCH-5 | 14.00 |
| | K15 | 10.00 | PYP-7N.F | 5.00 | MB3N.F | 3.00 | K15 | 8.00 |
| | PCH-301 | 8.00 | PYP-32 | 5.00 | CCH-303 | 12.00 | CCH-303 | 5.00 |
| | BCCP-31 | 8.00 | PYP-33 | 5.00 | BCCP-31 | 5.00 | BCH-32 | 9.00 |
| | BCCP-32 | 8.00 | PTP-34 | 4.00 | BCCP-32 | 5.00 | BCH-52 | 9.00 |
| | BCCP-33 | 8.00 | PTP-35 | 4.00 | BCCP-33 | 5.00 | BCCP-31 | 5.00 |
| | BCCP-35 | 8.00 | PTP-45 | 4.00 | BCCP-3 | 7.00 | BCCP-32 | 5.00 |
| | BCCP-3 | 10.00 | PCH-301 | 10.00 | BCCP-3F | 7.00 | BCCP-33 | 5.00 |
| | PYP-32 | 5.00 | BCCP-31 | 7.00 | CP-3F | 8.00 | BCCP-3F | 10.00 |
| | PYP-33 | 5.00 | BCCP-32 | 8.00 | CP-5F | 8.00 | | |
| | PTP-35 | 6.00 | BCCP-33 | 8.00 | | | | |
| | | | BCCP-35 | 8.00 | | | | |
| | | | BCCP-3 | 10.00 | | | | |
| | | | PTP-201 | 5.00 | | | | |
| | | | CPTP-301 | 5.00 | | | | |

## Patentansprüche

1. Supertwist-Flüssigkristallannzeige mit
   - zwei planparallelen Trägerplatten, die mit einer Umrandung eine Zelle bilden,
   - einer in der Zelle befindlichen nematischen Flüssigkristallmischung mit positiver dielektrischer Anisotropie,

- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung

a) mindestens eine Komponente, ausgewählt aus der Gruppe A, bestehend aus Verbindungen der Formeln AIII bis AVI:

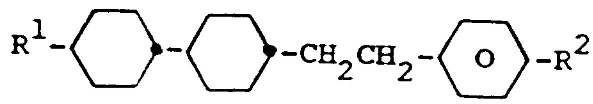
AIII

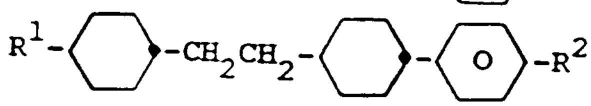
AIV

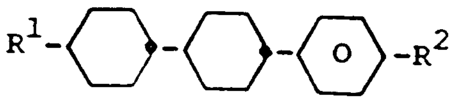
AV

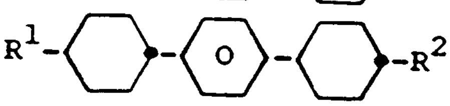
AVI

worin $R^1$ und $R^2$ jeweils unabhängig voneinander jeweils R bedeuten und

R Alkyl mit 1-12 C-Atomen ist, worin auch eine oder Zwei nicht benachbarte $CH_2$-Gruppen durch -O-, -CH=CH-, -CO-, -O-CO- oder -CO-O- ersetzt sein können,

b) mindestens eine Komponente, ausgewählt aus der Gruppe B1, bestehend aus den Verbindungen der Formeln BI bis BIV:

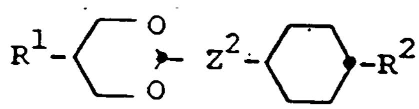
BI

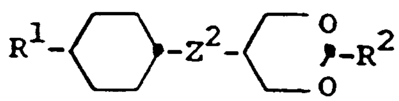
BII

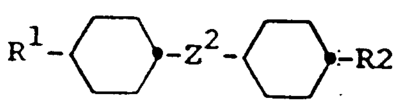
BIII

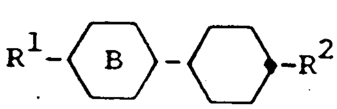
BIV

worin $R^1$ und $R^2$ jeweils unabhängig voneinander die für R angegebene Bedeutung haben, $Z^2$ $-CH_2CH_2-$, -CO-O-, -O-CO- oder eine Einfachbindung, und

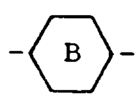 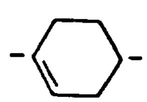, 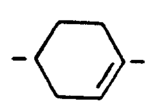 oder 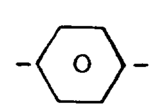

bedeutet,

und/oder mindestens eine Komponente, ausgewählt aus der Gruppe B2, bestehend aus den Verbindungen der Formeln BV bis BVII:

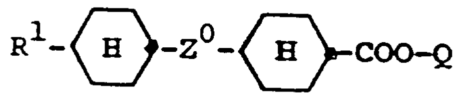

BV

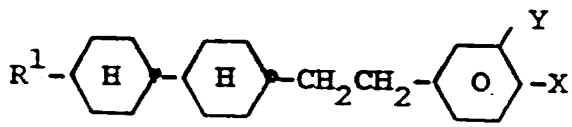

BVI

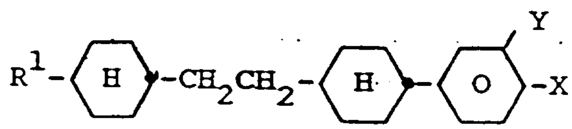

BVII

worin $R^1$ die für R angegebene Bedeutung hat,
$Z^0$ $-CH_2CH_2-$ oder eine Einfachbindung ist und
Q

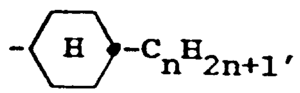, 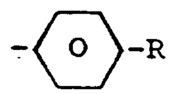 oder 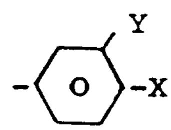

bedeutet,
wobei n 1 bis 9 ist, X bedeutet CN oder F und Y ist H oder F,
und/oder mindestens eine Komponente, ausgewählt aus der Gruppe B3, bestehend aus den Verbindungen der Formeln BVIII und BIX:

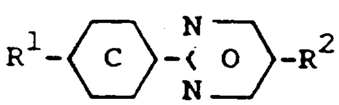

BVIII

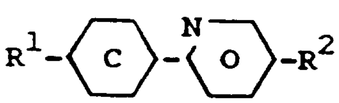

BIX

worin $R^1$ und $R^2$ jeweils unabhängig voneinander die für R angegebene Bedeutung haben, und

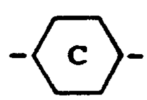 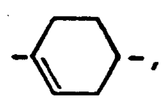, 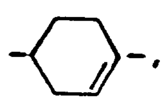, 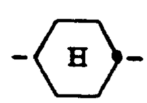

oder 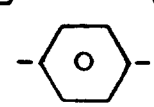

bedeutet,
c) 10-80 Gew.% einer flüssigkristallinen Komponente C, bestehend aus einer oder mehreren Verbindungen mit einer dielektrischen Anisotropie von über +1,5, und
e) eine optisch aktive Komponente E in einer Menge enthält, daß das Verhältnis zwischen Schichtdicke (Abstand der planparallelen Trägerplatten) und natürlicher Ganghöhe der chiralen nematischen Flüssigkristallmischung etwa 0,2 bis 1,3 beträgt, und
daß die nematische Flüssigkristallmischung einen nematischen Phasenbereich von mindestens 60 °C,

eine Viskosität von nicht mehr als 30 mPa.s ein dielektrisches Verhältnis $\Delta_{\epsilon}/\epsilon_{\perp} \geqq 2$ (wobei $\Delta_{\epsilon}$ die dielektrische Anisotropie und $\epsilon_{\perp}$ die Dielektrizitätskonstante in Richtung der kurzen Achse der Flüssigkristallmoleküle bedeutet)

und eine dielektrische Anisotropie von mindestens +5 aufweist, wobei die dielektrischen Anisotropien der Verbindungen und die auf die nematische Flüssigkristallmischung bezogenen Parameter auf eine Temperatur von 20 °C bezogen sind.

**2.** Anzeige nach Anspruch 1, dadurch gekennzeichnet, das Komponente C Verbindungen enthält, ausgewählt aus der Gruppe C, bestehend aus den Verbindungen der Formeln CI bis CIII:

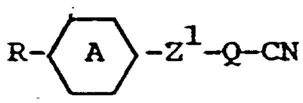 CI

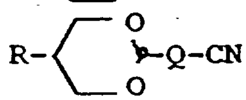 CII

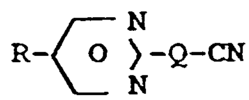 CIII

worin

R die in Anspruch 1 angegebene Bedeutung hat,

Q

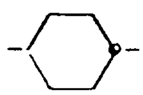, 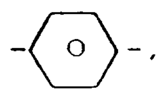, 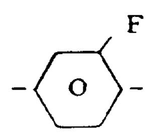 oder 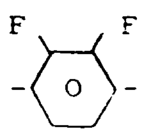,

Z[1]

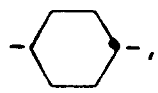, 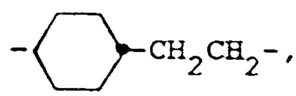,

eine Einfachbindung, $-CH_2CH_2-$, -CO-O- oder -O-CO- und

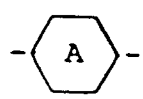 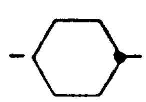 oder 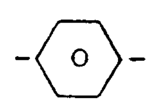

bedeutet.

**3.** Anzeige nach mindestens einem der Ansprüche 1 und 2, dadurch gekennzeichnet, daß die nematische Flüssigkristallmischung zusammengesetzt ist aus 30-60 Gew.% Komponente C, 20-70 Gew.% Verbindungen aus den Gruppen A und B, und einer sich zu 100 Gew.% addierenden Menge der Komponente E.

**4.** Anzeige nach mindestens einem der Ansprüche 1 bis 3, dadurch gekennzeichnet, daß die nematische Flüssigkristallmischung mindestens zwei Verbindungen der Formel AIII oder AV enthält.

**5.** Anzeige nach Anspruch 4, dadurch gekennzeichnet, daß die nematische Flüssigkristallmischung Verbindungen der Formel AIII und AV enthält.

6. Anzeige nach mindestens einem der Ansprüche 1 bis 5, dadurch gekennzeichnet, daß die nematische Flüssigkristallmischung Verbindungen der Formel BIII enthält.

7. Anzeige nach Anspruch 6, dadurch gekennzeichnet, daß die Flüssigkristallmischung Verbindungen der Formel

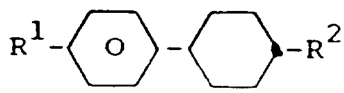

enthält, worin $R^1$ $CH_3$-$(CH_2)_n$-O- oder trans-H-$(CH_2)_r$-CH = CH-$(CH_2CH_2)_s$-$CH_2$-O- und $R^2$ $CH_3$-$(CH_2)_t$- ist, wobei

n 1, 2, 3 oder 4,
r 0, 1, 2 oder 3,
s 0 oder 1, und
t 1, 2, 3 oder 4 ist.

8. Anzeige nach Anspruch 6 oder 7, dadurch gekennzeichnet, daß die Flüssigkristallmischung Verbindungen der Formeln

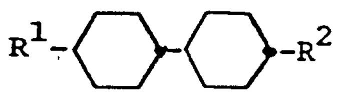

oder

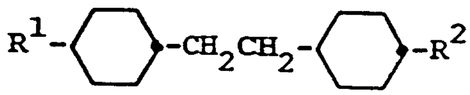

enthält, worin

$R^1$ $CH_3$-$(CH_2)_n$-O-, $CH_3$-$(CH_2)_t$-, trans-H-$(CH_2)_r$-CH = CH-$(CH_2CH_2)_s$-$CH_2$O- oder trans-H-$(CH_2)_r$-CH = CH-$(CH_2CH_2)_s$-, und
$R^2$ $CH_3$-$(CH_2)_t$- ist,

wobei n, r, s und t die in Anspruch 8 angegebene Bedeutung haben.

9. Anzeige nach mindestens einem der Ansprüche 1 bis 8, dadurch gekennzeichnet, daß Komponente C eine oder mehrere Verbindungen mit einer 4-Fluorphenyl-Gruppe oder einer 3,4-Difluorphenyl-Gruppe enthält.

10. Anzeige nach Anspruch 9, dadurch gekennzeichnet, daß die Flüssigkristallmischung mindestens eine Verbindung aus folgender Gruppe

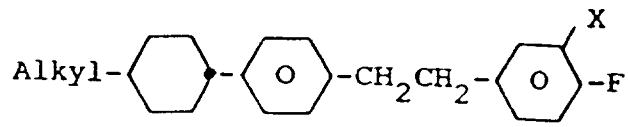

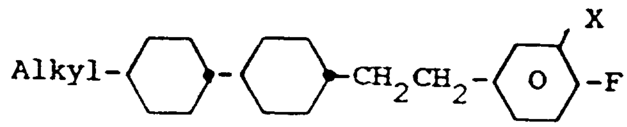

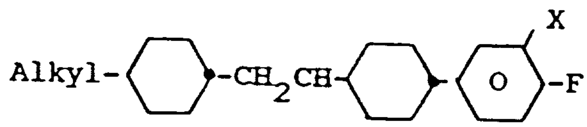

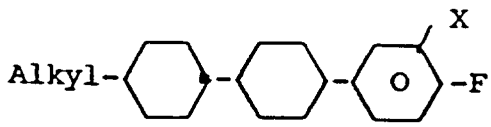

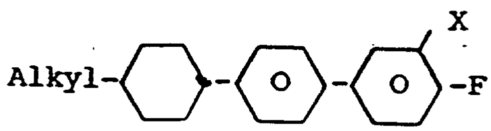

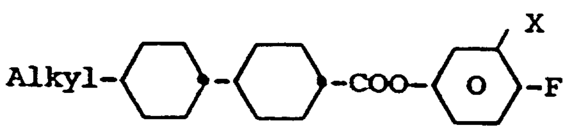

enthält, worin Alkyl eine geradkettige Alkylgruppe mit 2-7 C-Atomen und X H oder F ist.

**11.** Anzeige nach mindestens einem der Ansprüche 1 bis 10, dadurch gekennzeichnet, daß die Flüssigkristallmischung eine oder mehrere Verbindungen enthält, worin R eine trans-Alkenylgruppe oder eine trans-Alkenyloxygruppe ist.

**12.** Nematische Flüssigkristallmischung der in mindestens einer der Ansprüche 1 bis 11 definierten Zusammensetzung.

**Claims**

**1.** Supertwist liquid crystal display having
- two plane-parallel carrier plates which, with an edging, form a cell,
- a nematic liquid crystal mixture of positive dielectric anisotropy in the cell,
- electrode layers with superimposed orientation layers on the insides of the carrier plates,
- an angle of incidence between the longitudinal axis of the molecules on the surface of the carrier plates and the carrier plates of about 1 degree to 30 degrees and
- a twisting angle of the liquid crystal mixture in the cell from orientation layer to orientation layer, according to the amount, of between 160 and 360°, characterized in that the nematic liquid crystal mixture contains

  a) at least one component chosen from group A, consisting of compounds of the formulae AIII to AVI:

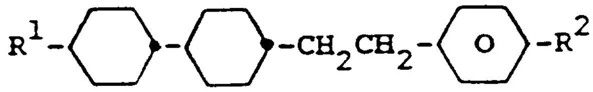

AIII

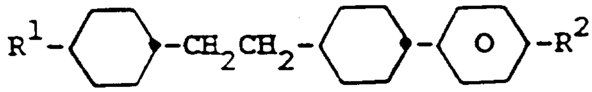

AIV

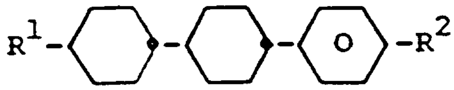

AV

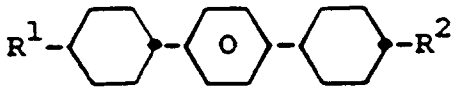

AVI

wherein $R^1$ and $R^2$ each independently of one another are each R and

R is alkyl having 1-12 C atoms, wherein one or two non-adjacent $CH_2$ groups can also be replaced by -O-, -CH=CH-, -CO-, -O-CO- or -CO-O-,

b) at least one component chosen from group B1, consisting of the compounds of the formulae BI to BIV:

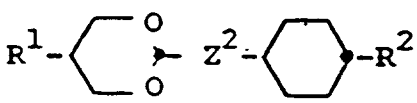

BI

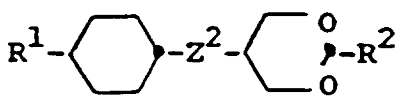

BII

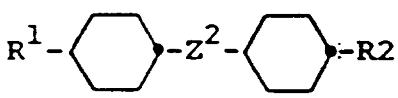

BIII

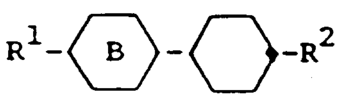

BIV

wherein $R^1$ and $R^2$ each independently of one another have the meaning given for R, $Z^2$ is $-CH_2CH_2-$, -CO-O-, -O-CO- or a single bond and

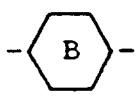 is 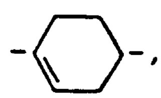, 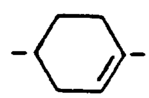 or 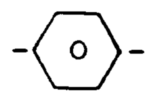

and/or at least one component chosen from group B2, consisting of the compounds of the formulae BV to BVII:

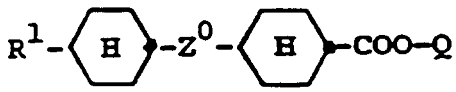

BV

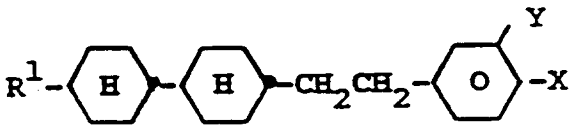

BVI

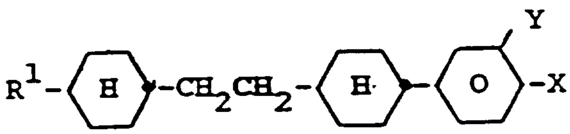

BVII

wherein $R^1$ has the meaning given for R,

$Z^0$ is $-CH_2CH_2-$ or a single bond and

Q is

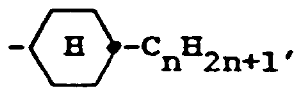 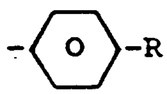 or 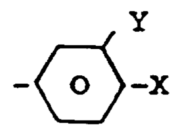

wherein n is 1 to 9, X is CN or F and Y is H or F, and/or at least one component chosen from group B3, consisting of the compounds of the formulae BVIII and BIX:

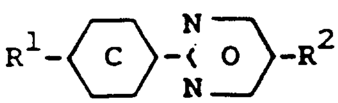

BVIII

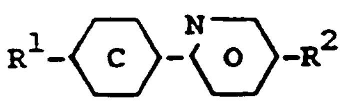

BIX

wherein $R^1$ and $R^2$ each independently of one another have the meaning given for R and

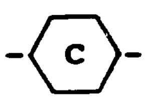 is 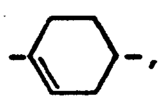 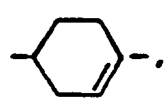 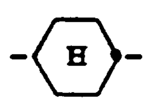 or 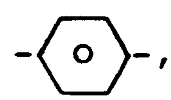

c) 10-80 % by weight of a liquid crystal component C, consisting of one or more compounds having a dielectric anisotropy of more than +1.5, and

e) an optically active component E, in an amount such that the ratio between the layer thickness (separation of the plane-parallel carrier plates) and the natural pitch of the chiral nematic liquid crystal mixture is about 0.2 to 1.3, and

in that the nematic liquid crystal mixture has a nematic phase range of at least 60 °C, a viscosity of not more than 30 mPa.s, a dielectric ratio $\Delta_{\epsilon/\epsilon\perp} \geqq 2$ (where $\Delta_\epsilon$ is the dielectric anisotropy and $\epsilon_\perp$ is the dielectric constant in the direction of the short axis of the liquid-crystal molecules) and a dielectric anisotropy of at least +5, the dielectric anisotropies of the compounds and the parameters relating to the nematic liquid crystal mixture being based on a temperature of 20 °C.

**2.** Display according to Claim 1, characterized in that component C contains compounds chosen from group C consisting of the compounds of the formulae CI to CIII:

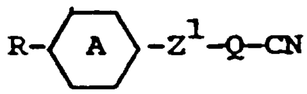 CI

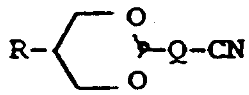 CII

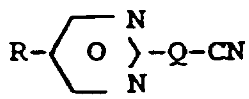 CIII

wherein

R has the meaning given in Claim 1,

Q is the formula

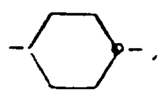, 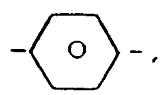, 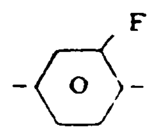 or 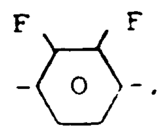,

$Z^1$ is

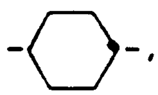, 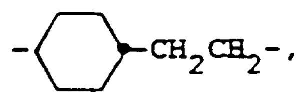,

single bond, $-CH_2CH_2-$, -CO-O- or -O-CO- and

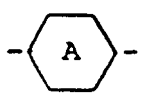 is 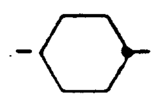 or 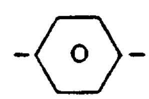

**3.** Display according to at least one of Claims 1 and 2, characterized in that the nematic liquid crystal mixture is composed of 30-60 % by weight of component C, 20-70 % by weight of compounds from groups A and B and an amount of component E which adds up to 100 % by weight.

**4.** Display according to at least one of Claims 1 to 3, characterized in that the nematic liquid crystal mixture contains at least two compounds of the formula AIII or AV.

**5.** Display according to Claim 4, characterized in that the nematic liquid crystal mixture contains compounds of the formula AIII and AV.

**6.** Display according to at least one of Claims 1 to 5, characterized in that the nematic liquid crystal mixture contains compounds of the formula BIII.

**7.** Display according to Claim 6, characterized in that the liquid crystal mixture contains compounds of the formula

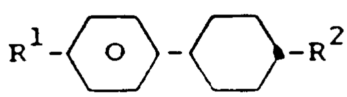

wherein $R^1$ is $CH_3$-$(CH_2)_n$-O- or trans-H-$(CH_2)_r$-CH=CH-$(CH_2CH_2)_s$-$CH_2$-O- and $R^2$ is $CH_3$-$(CH_2)_t$-,

wherein
- n is 1, 2, 3 or 4,
- r is 0, 1, 2 or 3,
- s is 0 or 1 and
- t is 1, 2, 3 or 4.

**8.** Display according to Claim 6 or 7, characterized in that the liquid crystal mixture contains compounds of the formulae

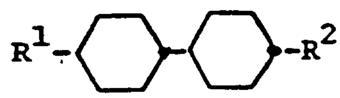

or

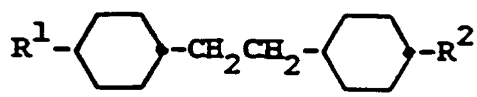

where
- $R^1$ is $CH_3$-$(CH_2)_n$-O-, $CH_3(CH_2)_t$-, trans-H-$(CH_2)_r$-CH = CH-$(CH_2CH_2)_s$-$CH_2O$- or trans-H-$(CH_2)_r$-CH = CH-$(CH_2CH_2)_s$- and
- $R^2$ is $CH_3$-$(CH_2)_t$-

wherein n, r, s and t have the meaning given in Claim 8.

**9.** Display according to at least one of Claims 1 to 8, characterized in that component C contains one or more compounds with a 4-fluorophenyl group or a 3,4-difluorophenyl group.

**10.** Display according to Claim 9, characterized in that the liquid crystal mixture contains at least one compound from the following groups

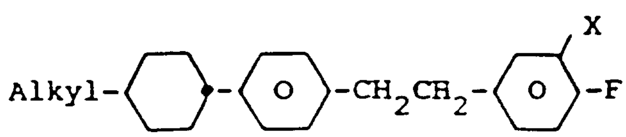

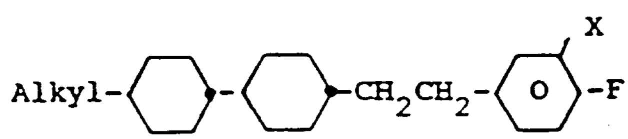

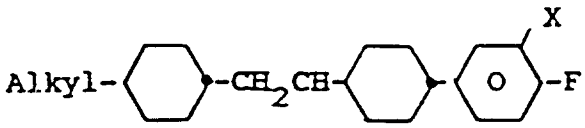

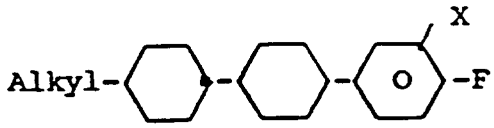

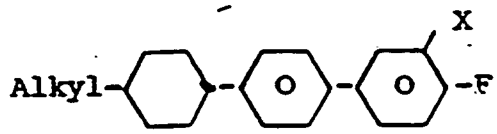

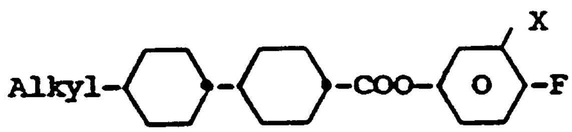

wherein alkyl is a straight-chain alkyl group having 2-7 C atoms and X is H or F.

**11.** Display according to at least one of Claims 1 to 10, characterized in that the liquid crystal mixture contains one or more compounds wherein R is a trans-alkenyl group or a trans-alkenyloxy group.

**12.** Nematic liquid crystal mixture of the composition defined in at least one of Claims 1 to 11.

**Revendications**

**1.** Affichage à cristaux liquides "supertwist" ayant
- deux plaques support à faces planes parallèles, formant une cellule avec une bordure,
- un mélange de cristaux liquides nématiques se trouvant dans la cellule et ayant une anisotropie diélectrique positive,
- des couches d'électrode avec des couches d'orientation sus-jacentes sur les faces internes des plaques support,
- un angle d'incidence entre l'axe longitudinal de la molécule sur la surface des plaques support et les plaques support d'environ 1 degré à 30 degrés, et
- un angle de rotation du mélange de cristaux liquides dans la cellule d'une couche d'orientation à une autre par module entre 160 et 360°, caractérisé en ce que le mélange de cristaux liquides nématiques comprend

a) au moins un composant, choisi dans le groupe A, comprenant les composés de formules AIII à AVI:

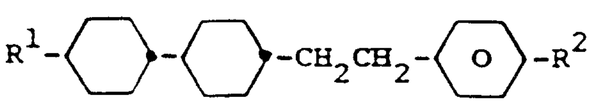 AIII

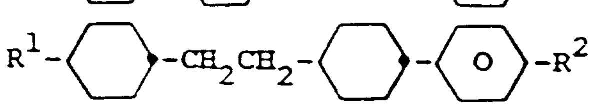 AIV

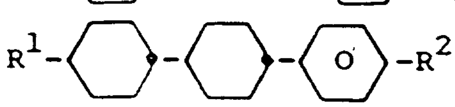 AV

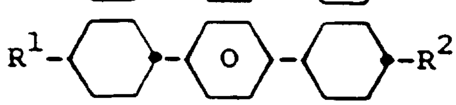 AVI

où $R^1$ et $R^2$ sont chacun, indépendamment l'un de l'autre, un groupe R et R est un groupe alkyle

ayant 1-12 atomes de carbone, dans lequel également un ou deux groupes $CH_2$ non contigus peuvent être remplacés par des radicaux -O-, -CH=CH-, -CO-, -O-CO- ou -CO-O-,

b) au moins un composant, choisi dans le groupe B1, compreannt les composés de formules BI à BIV:

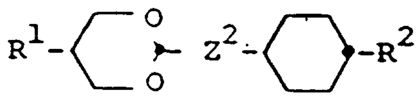

BI

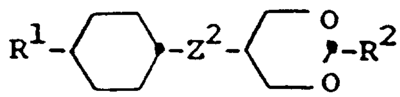

BII

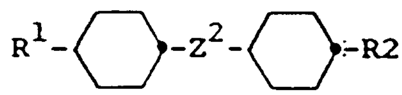

BIII

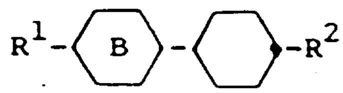

BIV

où $R^1$ et $R^2$ ont chacun, indépendamment l'un de l'autre, les significations indiquées pour R, $Z^2$ désigne $-CH_2CH_2-$, -CO-O-, -O-CO- ou une liaison simple, et

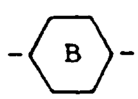 désigne un groupe 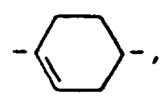, 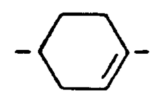

ou 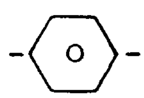 ,

et/ou au moins un composant, choisi dans le groupe B2, comprenant les composés de formules BV à BVII:

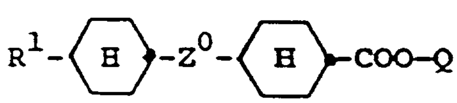

BV

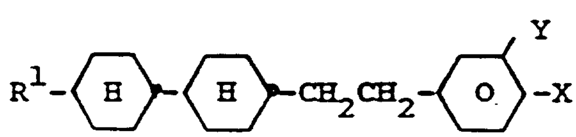

BVI

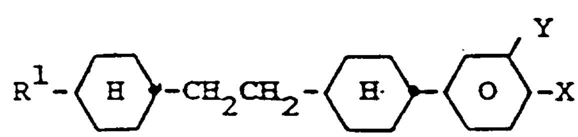

BVII

où $R^1$ a la signification indiquée pour R, $Z^0$ représente $-CH_2CH_2-$ ou une liaison simple et Q est

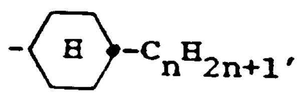, 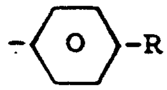 ou 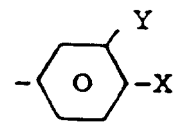 ,

où n vaut de 1 à 9, X représente CN ou F et Y est H ou F, et/ou au moins un composant choisi dans le groupe B3, comprenant les composés de formules BVIII et BIX:

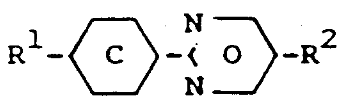 BVIII

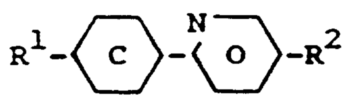 BIX

où $R^1$ et $R^2$ ont chacun, indépendamment l'un de l'autre, les significations indiquées pour R, et

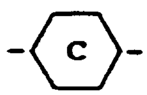 désigne 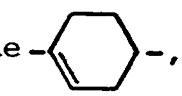, 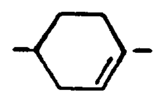, 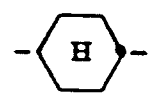

ou 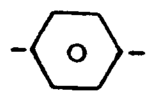 ,

c) 10-80% en poids d'un composant C en cristaux liquides, constitué d'un ou plusieurs composés ayant une anisotropie diélectrique supérieure à +1,5, et

e) un composant E optiquement actif en une quantité telle que le rapport soit d'environ 0,2 à 1,3 entre l'épaisseur de couche (distance entre plaques support à faces planes et parallèles) et le pas du mélange de cristaux liquides nématiques chiraux, et

que le mélange de cristaux liquides nématique présente un domaine de phase nématique d'au moins 60 °C, une viscosité d'excédant pas 30 mPa.s, un rapport diélectrique $\Delta_{\epsilon/\epsilon\perp} \geqq 2$ (où $\Delta_\epsilon$ représente l'anisotropie diélectrique et $\epsilon_\perp$ la constante diélectrique dans la direction du petit axe de la molécule de cristaux liquides) et une anisotropie diélectrique d'au moins +5, tandis que les anisotropies diélectriques des composés et les paramètres se rapportant au mélange de cristaux liquides nématiques sont ramenés à une température de 20 °C.

**2.** Affichage selon la revendication 1, caractérisé en ce que le composant C contient des composés, choisis dans le groupe C, comprenant les composés de formules CI à CIII:

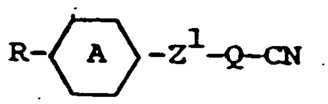

CI

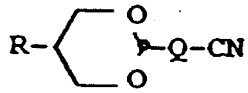

CII

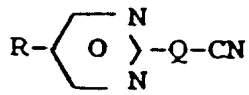

CIII

où
R a la signification indiquée dans la revendication 1,
Q représente

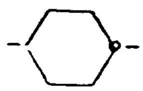, 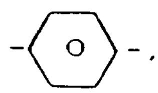, 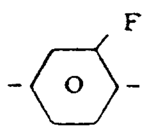 ou 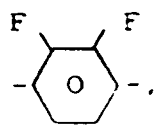,

$Z^1$ désigne

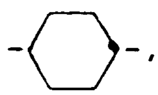, 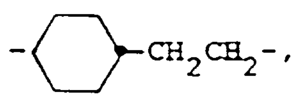, ,

une liaison simple, $-CH_2CH_2-$, -CO-O- ou -O-CO- et

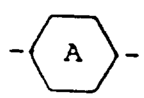 représente 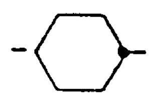 ou 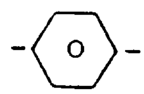 .

3. Affichage selon au moins l'une des revendications 1 et 2, caractérisé en ce que le mélange de cristaux liquides nématiques est composé de 30-60% en poids de composant C, 20-70% en poids de composants des groupes A et B, et une quantité donnant le complément à 100% en poids du composant E.

4. Affichage selon au moins l'une des revendications 1 à 3, caractérisé en ce que le mélange de cristaux liquides nématiques contient au moins deux composés de formule AIII ou AV.

5. Affichage selon la revendication 4, caractérisé en ce que le mélange de cristaux liquides nématiques contient des composés de formule AIII et AV.

6. Affichage selon au moins l'une des revendications 1 à 5, caractérisé en ce que le mélange de cristaux liquides nématiques contient des composés de formule BIII.

7. Affichage selon la revendication 6, caractérisé en ce que le mélange de cristaux liquides contient des composés de formule

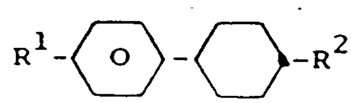

où

$R^1$ est $CH_3$-$(CH_2)_n$-O- ou trans-H-$(CH_2)_r$-CH = CH-$(CH_2CH_2)_s$-$CH_2$-O- et $R^2$ est $CH_3$-$(CH_2)_t$-,

tandis que

- n est 1, 2, 3 ou 4,
- r est 0, 1, 2 ou 3,
- s est 0 ou 1, et
- t est 1, 2, 3 ou 4.

**8.** Affichage selon l'une des revendications 6 ou 7, caractérisé en ce que le mélange de cristaux liquides contient des compoés de formules

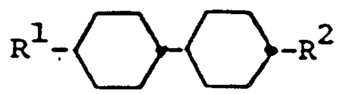

ou

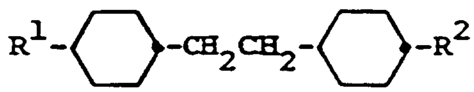

, où

$R^1$ est $CH_3$-$(CH_2)_n$-O-, $CH_3$-$(CH_2)_t$-, trans-H-$(CH_2)_r$-CH = CH-$(CH_2CH_2)_s$-$CH_2$O- ou trans-H-$(CH_2)_r$-CH = CH-$(CH_2CH_2)_s$-, et

$R^2$ est $CH_3$-$(CH_2)_t$-,

tandis que n, r, s et t ont la signification indiquée dans la revendication 8.

**9.** Affichage selon l'une au moins des revendications 1 à 8, caractérisé en ce que le composant C contient un ou plusieurs composés ayant un groupe 4-fluorophényle ou un groupe 3,4-difluorophényle.

**10.** Affichage selon la revendication 9, caractérisé en ce que le mélange de cristaux liquides contient au moins un composé du groupe suivant

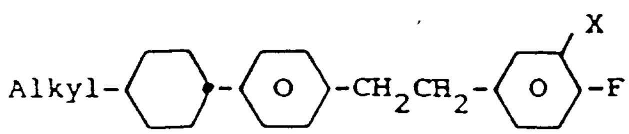

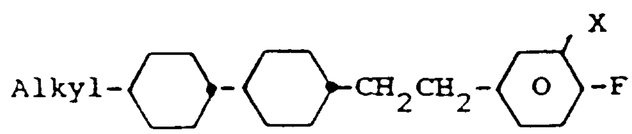

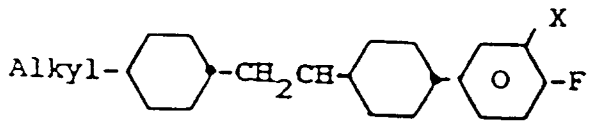

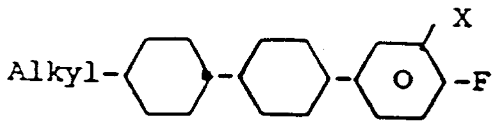

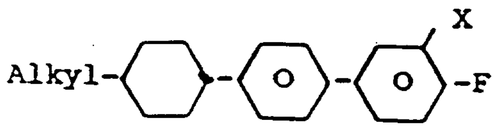

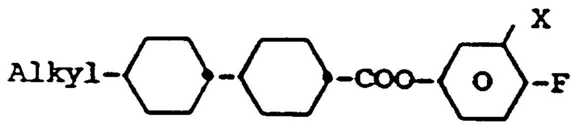

où alkyl est un groupe alkyle à chaîne droite ayant 2-7 atomes de carbone et X est H ou F.

**11.** Affichage selon au moins l'une des revendications 1 à 10, caractérisé en ce que le mélange de cristaux liquides contient un ou plusieurs composés dans lesquels R est un groupe trans-alcényle ou un groupe trans-alcényloxy.

**12.** Mélange de cristaux liquides nématiques ayant la composition définie dans au moins l'une des revendicationss 1 à 11.